(19) Europäisches Patentamt
European Patent Office
Office européen des brevets

(11) **EP 1 968 056 A2**

(12) **EUROPEAN PATENT APPLICATION**

(43) Date of publication:
**10.09.2008 Bulletin 2008/37**

(51) Int Cl.:
***G11B 7/135*** (2006.01)

(21) Application number: **08158637.2**

(22) Date of filing: **30.10.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.10.2000 JP 2000330025**
**06.12.2000 JP 2000371330**
**01.02.2001 JP 2001025463**

(62) Document number(s) of the earlier application(s) in accordance with Art. 76 EPC:
**01125884.5 / 1 202 259**

(71) Applicant: **KONICA CORPORATION**
**Tokyo (JP)**

(72) Inventors:
• **Kimura, Tohru**
**Tokyo 192-8505 (JP)**
• **Mori, Nobuyoshi**
**Tokyo 192-8505 (JP)**

(74) Representative: **Henkel, Feiler & Hänzel**
**Patentanwälte**
**Maximiliansplatz 21**
**80333 München (DE)**

Remarks:
This application was filed on 19-06-2008 as a divisional application to the application mentioned under INID code 62.

(54) **Objective lens, light converging optical system, optical pickup apparatus, and recording/reproducing apparatus**

(57) An objective lens for recording information on and/or reproducing information from an optical information recording medium, comprises a diffractive structure including ring-shaped diffractive zones on at least one surface thereof. The objective lens is a single lens made of plastic material, at least one surface thereof is an aspheric surface, and the following conditional formula is satisfied; NA $\geq$ 0.7 where NA represents an image side numerical aperture necessary for recording on and/or reproducing from an optical information recording medium.

FIG. 33

EP 1 968 056 A2

**Description**

**BACKGROUND OF THE INVENTION**

The present invention relates to an objective lens, a light-converging optical system, an optical pickup device and a recording and reproducing apparatus.

With recent practical use of a short wavelength red semiconductor laser, there has been developed and commercialized a DVD (digital versatile disc) representing a large capacity and a high density optical disc which is in the same size as a CD (compact disc) representing a conventional optical disc (also called an optical information recording medium), and it is predicted that a higher density and advanced optical disc will make its appearance in the near future. In the light-converging optical system of an optical information recording and reproducing apparatus wherein this advanced optical disc serves as a medium, it is required to make the diameter of a spot that is formed on an information through an objective lens to be small, for attaining high density of recording signals, or for reproducing high density recording signals. For that reason, it is necessary to make a wavelength of a laser representing a light source to be shorter and to make a numerical aperture of an objective lens to be greater. What is expected to be used practically as a short wavelength laser light source is a violet semiconductor laser with a generated wavelength of about 400 nm.

Incidentally, when a shorter wavelength of a laser light source and a greater numerical aperture of an objective lens are attained, it is predicted that problems which have been almost ignored in optical pickup devices each being composed of a combination of a laser light source with a relatively long wavelength and an objective lens with a small numerical aperture, such as those which conduct recording or reproducing of information for a conventional optical disc such as a CD and a DVD, will be actualized.

One of the problems stated above is a problem of axial chromatic aberration caused on an objective lens by minute fluctuations of a generated wavelength of a laser light source. A refractive index change of an ordinary optical lens material caused by minute fluctuations is greater when a shorter wavelength is used. Therefore, an amount of defocus of a focal point caused by minute wavelength fluctuations grows greater. With regard to a depth of focus of an objective lens, however, the more the wavelength used is shorter, the more the depth of focus turns out to be smaller, and even a small amount of defocus is not allowed, as is understood from that it is expressed by $k \cdot \lambda/NA^2$ (k represents a proportion constant, $\lambda$ represents a wavelength and NA represents a numerical aperture of an objective lens on the image side). In a light-converging optical system employing a light source with a short wavelength such as a violet semiconductor laser and an objective lens having a great numerical aperture, therefore, it is important to correct axial chromatic aberration for preventing wavelength fluctuations caused by mode hop phenomenon of the semiconductor laser and by output changes and for preventing deterioration of wave front aberration caused by high frequency superposition.

Further, another problem actualized by a short wavelength of a laser light source and a great numerical aperture of an objective lens is a variation of spherical aberration in a light-converging optical system caused by fluctuations of temperature and humidity. Namely, a plastic lens used generally in an optical pickup device is subject to deformation caused by changes of temperature and humidity, and its refractive index varies greatly. Fluctuations of spherical aberration caused by changes of refractive index which have not been problematic so much in a light-converging optical system used for a conventional optical pickup device, turn into the amount that cannot be ignored in the short wavelength of a laser light source and the great numerical aperture of an objective lens.

Further, a still another problem actualized by a short wavelength of a laser light source and a great numerical aperture of an objective lens is a variation of spherical aberration in a light-converging optical system caused by an error of thickness of a protective layer (also called a transparent base board) of an optical disc. It is known that spherical aberration caused by an error in a thickness of a protective layer is generated in proportion to the fourth power of the numerical aperture of an objective lens. Therefore, an influence of the error in a protective layer grows greater as a numerical aperture of an objective lens grows greater, resulting in the possibility that recording or reproducing of information cannot be conducted stably.

In the case of an advanced optical disc, it is proposed to use a protective layer having a thickness that is further thinner than that of a conventional optical disc, to control coma that is caused when the optical disc is tilted from an optical axis to be small. It is therefore required to make it possible to conduct recording or reproducing with the same optical pickup device for an advanced optical disc as well as CD and DVD each having a different protective layer thickness.

An object of the invention is to provide an objective lens for recording on or reproducing from an optical information recording medium which can cope with a great numerical aperture and a short wavelength, and is light in weight, inexpensive in cost and is corrected satisfactorily in terms of axial chromatic aberration.

Further object of the invention is to provide a light-converging optical system and an optical pickup device wherein fluctuations of spherical aberration generated on each optical surface of the optical pickup device by changes in generated wavelength of a laser light source, changes in temperature and humidity and by errors of a transparent base board thickness of an optical information recording medium can be corrected effectively by a simple structure.

Another object of the invention is to provide a light-converging optical system and an optical pickup device wherein axial chromatic aberration caused on an objective lens by a mode hop phenomenon of a laser light source and by high frequency superposition can be corrected effectively.

Still further object of the invention is to provide an objective lens for conducting recording or reproducing of information for a plurality of optical information recording media each having a different transparent base board thickness.

Still another object of the invention is to provide a light-converging optical system and an optical pickup device wherein a laser light source with a short wavelength and an objective lens with a great numerical aperture are provided, and recording or reproducing of information can be conducted for a plurality of optical information recording media each having a different transparent base board thickness.

At this stage, a diffractive optical element is used as a highly efficient aberration-correcting element in an optical pickup device, and in the diffractive optical element of this kind, it is important to form the diffractive structure to be in a form that is extremely close to a design basis value, for preventing a decline of diffraction efficiency. However, when the diffractive optical element is used in the optical pickup device that employs a short wavelength light source such as a violet semiconductor laser expected to be put to practical use in the near future and a high numerical aperture objective lens, large power for diffraction is needed for correction of chromatic aberration, and therefore, a cycle of the diffractive structure, for example, an interval of blazes in the blazed structure is about several times the wavelength used, namely, several microns. In the diamond ultraprecise cutting technology (SPDT) utilized as a manufacturing method of a metal mold for the diffractive optical element presently, a phase unconformable portion is not avoided because a shape of a cutting tool tip is transferred to the step of the blazed structure. Therefore, in the case of a diffractive structure wherein a cycle is as small as about several times the wavelength used, sufficient diffraction efficiency cannot be obtained because of a great influence of the phase unconformable portion, which is a problem.

As a known method for forming a diffractive structure having a small cycle of about several microns, there is available an electron beam drafting method whose flow of forming of a diffractive structure is as follows. First, photo-resist is coated on a base board, and then, electron beam exposure distribution corresponding to form distribution of the diffractive structure is given, while the photo-resist is being scanned by an electron beam exposure device. Next, the base board is subjected to etching process and plating process so that photo-resist may be removed, thus, rugged pattern of the diffractive structure is formed on the base board. There is known a diffracting lens in accordance with Optics Japan 99', 23a A2 (1999) that serves as a diffracting element wherein a fine blazed structure is formed on a flat plate by the electron beam drafting method.

However, on a diffractive optical system used in an optical pickup device, an aberration is corrected by combining appropriately a diffraction effect by the diffractive structure and a refraction effect on a refracting surface. Therefore, the diffracting lens mentioned above wherein a diffracting structure is formed on a flat base board having no refracting power cannot be used for an optical pickup device as an aberration correcting element, which is a problem.

Then, another object of the invention is to provide a diffracting optical element which is an optical element that is used for an optical pickup device and has a diffractive structure and has a form of a diffractive structure that can be formed by an electron beam drafting method, and an optical pickup device equipped with the diffracting optical element.

## SUMMARY OF THE INVENTION

For attaining the objects stated above, the objective lens described in (1) is an objective lens for recording on and/or reproducing from an optical information recording medium, wherein the objective lens is a single lens made of plastic material which has a diffractive structure in a form of a ring-shaped zone on at least one surface thereof, at least one surface thereof is an aspheric surface, and the following expression is satisfied;

$$NA \geqq 0.7 \qquad (1)$$

in which NA is a prescribed numerical aperture on the image side necessary for recording on and/or reproducing from an optical information recording medium.

The objective lens described in (2) is characterized in that each of both surfaces of the objective lens described in (1) is an aspheric surface.

The objective lens described in (3) is characterized in that the following expression is satisfied in (1) or (2);

$$5.0 \leqq fD/f \leqq 65.0 \qquad (2)$$

wherein, fD is a focal length (mm) of only the diffractive structure defined by fD = 1/(-2 · b2) when the diffractive structure is indicated with the optical path difference function defined by $\Phi b = b_2h^2 + b_4h^4 + b_6h^6 + ...$ (here, h represents a height from an optical axis (mm), and $b_2$, $b_4$ and $b_6$ ...are respectively 2nd, 4th and 6th ... order optical path difference function coefficients), and f represents a focal length (mm) of the total objective lens system wherein refracting power and diffracting power of the diffractive structure are combined.

The objective lens described in (4) is characterized in that the following expression is satisfied in either one of (1) - (3) when ni represents the number of order of the diffracted light having the greatest amount of diffracted light among those generated by the diffractive structure on the ith surface, Mi represents the number of ring-shaped zones on the ith surface, Pi (mm) represents the minimum value of a distance between ring-shaped zones, f (mm) represents a focal length (mm) of the total objective lens system and λ (mm) represents the wavelength used, in the aforesaid diffractive structure.

$$0.03 \leqq \lambda \cdot f \cdot \Sigma \ (ni/(Mi \cdot Pi^2)) \leqq 0.70 \qquad (3)$$

The objective lens described in (5) is an objective lens for recording on and/or reproducing from an optical information recording medium, wherein the objective lens is a single lens made of plastic material which has a diffractive structure in a form of a ring-shaped zone on at least one surface thereof, at least one surface thereof is an aspheric surface, and the following expression is satisfied;

$$\lambda \leqq 500 \ nm \qquad (4)$$

in which λ represents a wavelength used for recording on and/or reproducing from an optical information recording medium.

The objective lens described in (6) is characterized in that each of both surfaces of the objective lens described in (5) is an aspheric surface.

The objective lens described in (7) is characterized in that the following expression is satisfied in (5) or (6);

$$5.0 \leqq fD/f \leqq 65.0 \qquad (5)$$

wherein, fD is a focal length (mm) of only the diffractive structure defined by fD = 1/(-2 · b2) when the diffractive structure is indicated with the optical path difference function defined by $\Phi b = b_2h^2 + b_4h^4 + b_6h^6 + ...$ (here, h represents a height from an optical axis (mm), and $b_2$, $b_4$ and $b_6$ ...are respectively 2nd, 4th and 6th ... order optical path difference function coefficients), and f represents a focal length (mm) of the total objective lens system wherein refracting power and diffracting power of the diffractive structure are combined.

The objective lens described in (8) is characterized in that the following expression is satisfied in either one of (5) - (7) when ni represents the number of order of the diffracted light having the greatest amount of diffracted light among those generated by the diffractive structure on the ith surface, Mi represents the number of ring-shaped zones on the ith surface, Pi (mm) represents the minimum value of a distance between ring-shaped zones, f (mm) represents a focal length (mm) of the total objective lens system and λ (mm) represents the wavelength used, in the aforesaid diffractive structure.

$$0.03 \leqq \lambda \cdot f \cdot \Sigma \ (ni/(Mi \cdot Pi^2)) \leqq 0.70 \qquad (6)$$

The objective lens described in (9) is an objective lens for recording on and/or reproducing from an optical information recording medium, wherein the objective lens is a single lens made of plastic material which has a diffractive structure in a form of a ring-shaped zone on at least one surface thereof, at least one surface thereof is an aspheric surface, and the following expression is satisfied;

$$5.0 \leqq fD/f \leqq 40.0 \qquad (7)$$

in which, fD is a focal length (mm) of only the diffractive structure defined by $fD = 1/(-2 \cdot b2)$ when the diffractive structure is indicated with the optical path difference function defined by $\Phi b = b_2 h^2 + b_4 h^4 + b_6 h^6 + ...$ (here, h represents a height from an optical axis (mm), and $b_2$, $b_4$ and $b_6$ ...are respectively $2^{nd}$, $4^{th}$ and $6^{th}$ ... order optical path difference function coefficients), and f represents a focal length (mm) of the total objective lens system wherein refracting power and diffracting power of the diffractive structure are combined.

The objective lens described in (10) is characterized in that each of both surfaces of the objective lens described in (9) is an aspheric surface.

The objective lens described in (11) is characterized in that the following expression is satisfied in (9) or (10) when ni represents the number of order of the diffracted light having the greatest amount of diffracted light among those generated by the diffractive structure on the $i^{th}$ surface, Mi represents the number of ring-shaped zones on the $i^{th}$ surface, Pi (mm) represents the minimum value of a distance between ring-shaped zones, f (mm) represents a focal length (mm) of the total objective lens system and $\lambda$ (mm) represents the wavelength used, in the aforesaid diffractive structure.

$$0.03 \leqq \lambda \cdot f \cdot \Sigma \left( ni/(M \cdot Pi^2) \right) \leqq 0.70 \qquad (8)$$

The objective lens described in (12) is characterized in that in the objective lens described in either one of (1) - (11),

$$0.03 \leqq \lambda \cdot f \cdot \Sigma \left( ni/(M \cdot Pi^2) \right) \leqq 0.70$$

is satisfied under $0.7 \leqq NA \leqq 0.85$
and

$$0.10 \leqq \lambda \cdot f \cdot \Sigma \left( ni/(M \cdot Pi^2) \right) \leqq 2.50$$

is satisfied under 0.85 < NA, both under the assumption that ni represents the number of order of the diffracted light having the greatest amount of diffracted light among diffracted light generated by the diffractive structure formed on the $i^{th}$ surface, Mi represents the number of ring-shaped zones of the diffractive structure formed on the $i^{th}$ surface, Pi (mm) represents the minimum value of an interval of ring-shaped zones of the diffractive structure formed on the $i^{th}$ surface, f (mm) represents a focal length of the total objective lens system and $\lambda$ (mm) represents the wavelength used, in the aforesaid diffractive structure.

The objective lens described in (13) is an objective lens for recording on and/or reproducing from an optical information recording medium, wherein the objective lens is a single lens made of plastic material which has a diffractive structure in a form of a ring-shaped zone on at least one surface thereof, at least one surface thereof is an aspheric surface, and the following expression is satisfied, when ni represents the number of order of the diffracted light having the greatest amount of diffracted light among those generated by the diffractive structure on the $i^{th}$ surface, Mi represents the number of ring-shaped zones on the $i^{th}$ surface, Pi (mm) represents the minimum value of a distance between ring-shaped zones, f (mm) represents a focal length (mm) of the total objective lens system and $\lambda$ (mm) represents the wavelength used, in the aforesaid diffractive structure.

$$0.03 \leqq \lambda \cdot f \cdot \Sigma \left( ni/(Mi \cdot Pi^2) \right) \leqq 0.70 \qquad (9)$$

The objective lens described in (14) is characterized in that the following expression is satisfied in (13).

$$0.10 \leqq \lambda \cdot f \cdot \Sigma \, (ni/(Mi \cdot Pi^2)) \leqq 0.65 \qquad (10)$$

The objective lens described in (15) is characterized in that the following expression is satisfied in (14).

$$0.20 \leqq \lambda \cdot f \cdot \Sigma \, (ni/(Mi \cdot Pi^2)) \leqq 0.60 \qquad (11)$$

The objective lens described in (16) is characterized in that each of both surfaces of the objective lens described in either one of (13) - (15) is an aspheric surface.

The objective lens described in (17) is an objective lens for recording and/or reproducing for an optical information recording medium represented by a single lens that is made of an optical plastic material and is provided with an aspheric surface on at least one surface thereof, wherein a diffractive structure in a shape of a ring-shaped zone is formed on each of both surfaces thereof, and the following expression is satisfied under the assumption that ni represents the number of order of the diffracted light having the greatest amount of diffracted light among diffracted light generated by the diffractive structure formed on the $i^{th}$ surface, Mi represents the number of ring-shaped zones of the diffractive structure formed on the $i^{th}$ surface, Pi (mm) represents the minimum value of an interval of ring-shaped zones of the diffractive structure formed on the $i^{th}$ surface, f (mm) represents a focal length of the total objective lens system and $\lambda$ (mm) represents the wavelength used, in the aforesaid diffractive structure.

$$0.10 \leqq \lambda \cdot f \cdot \Sigma \, (ni/(Mi \cdot Pi^2)) \leqq 3.00 \qquad (11')$$

The objective lens described in (18) is characterized in that the objective lens described in (17) satisfies the following expression.

$$0.20 \leqq \lambda \cdot f \cdot \Sigma \, (ni/(Mi \cdot Pi^2)) \leqq 2.50 \qquad (12')$$

The objective lens described in (19) is characterized in that the objective lens described in (17) or (18) satisfies the following expression;

$$2.0 \leqq fD/f \leqq 30.0$$

wherein, fD represents a focal length (mm) of the diffractive structure alone defined by $fD = 1/\Sigma \, (-2 \cdot ni \cdot b_{2i})$, when an optical path difference added to wave front by the diffractive structure formed on $i^{th}$ surface is expressed by the optical path function defined by $\Phi_{bi} = ni \cdot (b_{2i} \cdot hi^2 + b_{4i} \cdot hi^4 + b_{6i} \cdot hi^6 + ...)$ (in this case, ni represents the number of order for the diffracted light having the maximum amount of diffracted light among diffracted light generated by the diffractive structure formed on the $i^{th}$ surface, hi represents a height (mm) from an optical axis, and $b_{2i}$, $b_{4i}$, $b_{6i}$, ... represent respectively $2^{nd}$ order, $4^{th}$ order, $6^{th}$ order,...optical path difference function coefficients (called also diffraction surface coefficient)), and f represents a focal length (mm) of the total objective lens system wherein refracting power and diffracting power by the diffractive structure are combined.

The objective lens described in (20) is characterized in that the objective lens described in either one of (17) - (19), both surfaces are made to be an aspheric surface.

The objective lens described in (21) is characterized in that the objective lens described in either one of (17) - (20) satisfies the following expression;

$$0.35 < (X1 - X2) \cdot (N - 1) \, / \, (NA \cdot f) < 0.55$$

In the above expression, X1 represents a difference (mm) in the optical axis direction between a plane that is perpendicular to an optical axis and is tangent to the vertex of the surface on the light source side and the surface on the light source side on the outermost peripheral portion in an effective diameter (position on the surface on the light source side where a marginal ray of aforesaid NA enters), and its sign is positive when it is measured in the direction toward an optical information recording medium with the aforesaid tangent plane serving as a reference, while its sign is negative when it is measured in the direction toward the light source. X2 represents a difference (mm) in the optical axis direction between a plane that is perpendicular to an optical axis and is tangent to the vertex of the surface on the optical information recording medium side and the surface on the optical information recording medium side on the outermost peripheral portion in an effective diameter (position on the surface on the optical information recording medium side where a marginal ray of aforesaid NA enters), and its sign is positive when it is measured in the direction toward an optical information recording medium with the aforesaid tangent plane serving as a reference, while its sign is negative when it is measured in the direction toward the light source. N represents a refractive index of the objective lens at the wavelength used, and f represents a focal length (mm) of the total objective lens system.

The objective lens described in (22) is characterized in that the objective lens described in (21) satisfies the following expression.

$$0.39 < (X1 - X2) \cdot (N - 1) / (NA \cdot f) < 0.52$$

The objective lens described in (23) is an objective lens for recording and/or reproducing for an optical information recording medium represented by a single lens ir which an aspheric surface is formed on each of both surfaces a diffractive structure in a shape of a ring-shaped zone is formed on at least one surface thereof, and the following expressions are satisfied.

$$0.75 < NA < 0.95 \qquad\qquad (16')$$

$$0.39 < (X1 - X2) \cdot (N - 1) / (NA \cdot f) < 0.52 \quad (17')$$

In the above expression, X1 represents a difference (mm) in the optical axis direction between a plane that is perpendicular to an optical axis and is tangent to the vertex of the surface on the light source side and the surface on the light source side on the outermost peripheral portion in an effective diameter (position on the surface on the light source side where a marginal ray of aforesaid NA enters), and its sign is positive when it is measured in the direction toward an optical information recording medium with the aforesaid tangent plane serving as a reference, while its sign is negative when it is measured in the direction toward the light source. X2 represents a difference (mm) in the optical axis direction between a plane that is perpendicular to an optical axis and is tangent to the vertex of the surface on the optical information recording medium side and the surface on the optical information recording medium side on the outermost peripheral portion in an effective diameter (position on the surface on the optical information recording medium side where a marginal ray of aforesaid NA enters), and its sign is positive when it is measured in the direction toward an optical information recording medium with the aforesaid tangent plane serving as a reference, while its sign is negative when it is measured in the direction toward the light source. N represents a refractive index of the objective lens at the wavelength used, and f represents a focal length (mm) of the total objective lens system.

The objective lens described in (24) is characterized in that the objective lens described in (23) satisfies the following expression;

$$2.0 \leqq fD/f \leqq 65.0$$

wherein, fD represents a focal length (mm) of the diffractive structure alone defined by $fD = 1/\Sigma (-2 \cdot ni \cdot b_{2i})$, when an optical path difference added to wavefront by the diffractive structure formed on $i^{th}$ surface is expressed by the optical path function defined by $\Phi_{bi} = ni \cdot (b_{2i} \cdot hi^2 + b_{4i} \cdot hi^4 + b_{6i} \cdot hi^6 + ...)$ (in this case, ni represents the number of order for the diffracted light having the maximum amount of diffracted light among diffracted light generated by the diffractive structure formed on the $i^{th}$ surface, hi represents a height (mm) from an optical axis, and $b_{2i}$, $b_{4i}$, $b_{6i}$, ... represent respectively 2nd order, 4th order, 6th order,...optical path difference function coefficients (called also diffraction surface coefficient)), and f represents a focal length (mm) of the total objective lens system wherein refracting power and diffracting power by the diffractive structure are combined.

The objective lens described in (25) is characterized in that in the objective lens described in (23) or (24), the following formula:

$$0.03 \leqq \lambda \cdot f \cdot \Sigma (ni/(Mi \cdot Pi^2)) \leqq 3.00$$

is satisfied under the assumption that ni represents the number of order of the diffracted light having the greatest amount of diffracted light among diffracted light generated by the diffractive structure formed on the $i^{th}$ surface, Mi represents the number of ring-shaped zones of the diffractive structure formed on the $i^{th}$ surface, Pi (mm) represents the minimum value of an interval of ring-shaped zones of the diffractive structure formed on the $i^{th}$ surface, f (mm) represents a focal length of the total objective lens system and $\lambda$ (mm) represents the wavelength used, in the aforesaid diffractive structure.

The objective lens described in (26) is characterized in that in the objective lens described in either one of (23) - (25), a diffractive structure in a shape of a ring-shaped zone is formed on each of both surfaces.

The objective lens described in (27) is characterized in that chromatic aberration of the objective lens satisfies the following expression in either one of (1) - (25);

$$|\Delta fB \cdot NA^2| \leqq 0.25 \ \mu m \qquad (12)$$

wherein, $\Delta fB$ represents a change ($\mu$m) of a focus position in the case of a change of +1 nm of the light source.

The objective lens described in (28) is characterized in that the following expression is satisfied in either one of (1) - (27);

$$-200 \leqq b_{4i} \cdot (hi_{max})^4/(\lambda \cdot f \cdot NA^4) \leqq -5 \qquad (13)$$

wherein, b4 represents the $4^{th}$ order optical path difference function coefficient in the case of expressing the diffraction structure by the optical path difference function defined by $\Phi b = b_2 h^2 + b_4 h^4 + b_6 h^6 + ...$ (here, h represents a height (mm) from an optical axis, and b2, b4, b6, ... are $2^{nd}$ order, $4^{th}$ order, $6^{th}$ order, ... optical path difference function coefficients), and h max represents the maximum height (mm) of the effective diameter.

The objective lens described in (29) is characterized in that the following expression is satisfied in either one of (1) - (28);

$$0.4 \leqq |(Ph/Pf) - 2| \leqq 25.0 \qquad (14)$$

wherein, Pf represents a diffractive ring-shaped zone interval (mm) at the prescribed numerical aperture on the image side necessary for recording on and/or reproducing from an optical information recording medium, and Ph represents a diffractive ring-shaped zone interval (mm) at the numerical aperture that is a half of the prescribed numerical aperture on the image side necessary for recording on and/or reproducing from an optical information recording medium.

The objective lens described in (30) is characterized in that the following expression is satisfied in either one of (1) - (29) when $\Delta SA$ represents an amount of change of spherical aberration of marginal ray of light in the case of a change of a wavelength of the light source by +10 nm.

$$|\Delta SA| \leqq 1.5 \ \mu m \qquad (15)$$

The objective lens described in (31) is characterized in that the objective lens described in either one of (1) - (30) has axial chromatic aberration characteristics which changes in the direction where the back focus becomes shorter when a wavelength of a light source is shifted to the longer wavelength side under the condition that a diffractive function as a diffracting lens and a refractive function as a refracting lens are combined, and satisfying the following expression;

$$-1 < \Delta CA/\Delta SA < 0$$

wherein, $\Delta CA$ represents an amount of change (mm) of axial chromatic aberration for a change in a wavelength, and $\Delta SA$ represents an amount of change (mm) of spherical aberration of a marginal ray of light for a change in a wavelength.

The objective lens described in (32) is characterized in that the following expression is satisfied in either one of (1) - (31);

$$t \leqq 0.6 \text{ mm} \qquad (16)$$

$$\lambda \leqq 500 \text{ nm} \qquad (17)$$

wherein, t represents a thickness of a transparent base board of an optical information recording medium, and $\lambda$ represents a wavelength of the light source.

The objective lens described in (33) is characterized in that an amount of $n^{th}$ order diffracted light generated by the diffraction structure is greater than that of diffracted light of any other order, and the objective lens mentioned above can converge the $n^{th}$ diffracted light generated by the diffraction structure for recording and/or reproducing information for the optical information recording medium on the information recording surface of the optical information recording medium, in either one of (1) - (32). In this case, n represents integers other than 0 and $\pm 1$.

The objective lens described in (34) is characterized in that in the objective lens described in either one of (1) - (33), an amount of step for each ring-shaped zone in the direction of an optical axis is determined so that an amount of $n^{th}$ order diffracted light among diffracted light generated by the diffraction structure may be greater than that of diffracted light of any other order, when n represents integers other than 0 and $\pm 1$, for the diffractive structure formed on at least one surface among the diffractive structures state above.

The objective lens described in (35) is characterized in that it is made of a material whose saturation coefficient of water absorption is 0.5% or less in either one of (1) - (34) is an aspheric surface.

The objective lens described in (36) is characterized in that it is made of a material whose internal transmittance at a thickness of 3 mm in the area of wavelength used is 85% or more, in either one of (1) - (35).

The objective lens described in (37) is characterized in that the following expression is satisfied when SA1 represents $3^{rd}$ order spherical aberration component and SA2 represents the sum of $5^{th}$ order, $7^{th}$ order and $9^{th}$ order spherical aberration components, among spherical aberrations of the objective lens, in either one of (1) - (36) ;

$$\left| SA1/SA2 \right| > 1.0 \qquad (18)$$

wherein, SA1 represents $3^{rd}$ order spherical aberration component in the case of developing the aberration function into Zernike's polynomial expression, and SA2 represents a square root of the square sum of $5^{th}$ order, $7^{th}$ order and $9^{th}$ order spherical aberration components in the case of developing the aberration function into Zernike's polynomial expression.

The light-converging optical system described in (38) is one for recording on and/or reproducing from an optical information recording medium having therein a light source, a coupling lens which changes a divergence angle of a divergent light emitted from the light source and an objective lens which converges the light flux passing through the coupling lens on an information recording surface through a transparent base board of the optical information recording medium, wherein the light-converging optical system has a diffractive structure in a form of a ring-shaped zone on at least one surface thereof, and the coupling lens corrects fluctuations of spherical aberration caused on each optical surface of the light-converging optical system, by moving along the direction of an optical axis.

The light-converging optical system described in (39) is characterized in that the diffractive structure corrects chromatic aberration generated in the objective lens in (38).

The light-converging optical system described in (40) is characterized in that the coupling lens has a function to correct chromatic aberration generated in the objective lens in (38) or (39).

The light-converging optical system described in (41) is characterized in that the coupling lens is of a one-group two-element structure wherein a positive lens having a relatively large Abbe number and a negative lens having a relatively small Abbe number are cemented in (40).

The light-converging optical system described in (42) is characterized in that the coupling lens is a single lens having a diffractive structure in a form of a ring-shaped zone on at least one surface thereof, in (40).

The light-converging optical system described in (42) is characterized in that the following expression is satisfied by chromatic aberration of a composite system composed of the coupling lens and the objective lens in either one of (38) - (42);

$$\left| \Delta fB \cdot NA^2 \right| \leqq 0.25 \ \mu m \qquad (19)$$

wherein, $\Delta fB$ is a change ($\mu$m) of a focus position of the composite system in the case of a change of +1 nm of a wavelength of the light source.

The light-converging optical system described in (44) is characterized in that the following expression is satisfied in either one of (35) - (43);

$$NA \geqq 0.65 \qquad (20)$$

$$t \leqq 0.6 \ mm \qquad (21)$$

$$\lambda \leqq 500 \ nm \qquad (22)$$

wherein, NA represents the numerical aperture on the image side of the prescribed objective lens necessary for recording on and/or reproducing from an optical information recording medium, t represents a thickness of a transparent base board of an optical information recording medium and $\lambda$ represents a wavelength of a light source.

The light-converging optical system described in (45) is characterized in that an amount of $n^{th}$ order diffracted light generated by the diffraction structure is greater than that of diffracted light of any other order, and the light-converging optical system mentioned above can converge the $n^{th}$ diffracted light generated by the diffraction structure for recording and/or reproducing information for the optical information recording medium on the information recording surface of the optical information recording medium, in either one of (38) - (44). In this case, n represents integers other than 0 and $\pm 1$.

The light-converging optical system described in (41) is characterized in that the objective lens in either one of (38) - (45) is one described in either one of (1) - (37).

The light-converging optical system described in (47) is characterized in that the coupling lens corrects, by moving in the direction of an optical axis, the fluctuations of spherical aberration caused on each optical surface of the light-converging optical system by minute variation of the generated wavelength of the light source, in either one of (38) - (46).

The light-converging optical system described in (48) is characterized in that the objective lens includes at least one lens made of plastic material, and the coupling lens corrects, by moving in the direction of an optical axis, the fluctuations of spherical aberration caused on each optical surface of the light-converging optical system by changes of temperature and humidity, in either one of (38) - (46).

The light-converging optical system described in (49) is characterized in that the coupling lens corrects, by moving in the direction of an optical axis, the fluctuations of spherical aberration caused on each optical surface of the light-converging optical system by minute variation of a thickness of a transparent base board of the optical information recording medium, in either one of (38) - (40).

The light-converging optical system described in (50) is characterized in that the coupling lens corrects, by moving in the direction of an optical axis, the fluctuations of spherical aberration caused on each optical surface of the light-converging optical system by two or more combinations among minute variation of the generated wavelength of the light source, changes in temperature and humidity, and minute variation of a thickness of a transparent base board of the optical information recording medium, in either one of (38) - (49).

The light-converging optical system described in (51) is characterized in that the coupling lens moves in the direction of an optical axis so that its distance from the objective lens may be increased when the spherical aberration of the light-converging optical system varies to the over side, and the coupling lens moves in the direction of an optical axis so that its distance from the objective lens may be decreased when the spherical aberration of the light-converging optical system varies to the under side, and thereby the coupling lens corrects the fluctuations of spherical aberration caused on each optical surface of the light-converging optical system, in either one of (38) - (50).

The light-converging optical system described in (52) is characterized in that the optical information recording medium has a plurality of recording surfaces through transparent base boards, and focusing is performed for information recording on and/or information reproducing from the aforesaid plural recording surfaces by moving the objective lens in the direction of an optical axis, and also the coupling lens is moved in the direction of an optical axis, thus, fluctuations of spherical aberration caused by a thickness difference in transparent base boards in different recording layers is corrected, in either one of (38) - (51).

The optical pickup device described in (53) is an optical pickup device that is provided with a light-converging optical system including a light source, a coupling lens which changes a divergence angle of a divergent light emitted from the light source, and an objective lens which converges a light flux passing through the coupling lens on an information recording surface through a transparent base board of an optical information recording medium, and conducts recording and/or reproducing of information for the optical information recording medium by detecting the reflected light from the recording surface, wherein the optical pickup device has a light-receiving means for detecting reflected light from the recording surface and a first driving device for driving the objective lens for converging a light flux on the recording surface, the coupling lens corrects fluctuations of spherical aberration caused on each optical surface of the light-converging optical system, by moving in the direction of an optical axis, and has a second driving device which detects how the light flux has been converged on the recording surface by detecting the reflected light from the recording surface and thereby drives the coupling lens, and the light-converging optical system is one described in either one of (38) - (52).

The recording device for sound and/or image, and/or the reproducing device for sound and/or image described in (54) is characterized in that it houses therein the optical pickup device described in (53).

The objective lens described in (55) is one used in an optical pickup device for recording and reproducing which includes light sources each having a different wavelength and an objective lens that converges the light flux emitted from the light source on an image recording surface through a transparent base board of an optical information recording medium, and can conduct recording and/or reproducing of information for optical information recording media in plural types, wherein the objective lens is a single lens that has a diffractive surface in a form of a ring-shaped zone on at least one surface thereof and at least one surface of the objective lens is an aspheric surface, and when a thickness of transparent base boards of optional two optical information recording media among the optical information recording media in plural types are represented respectively by t1 and t2 (t1 $\leqq$ t2), a wavelength for conducting recording or reproducing of information for the optical information recording medium having the transparent base board with thickness t1 is represented by $\lambda$1, a wavelength for conducting recording or reproducing of information for the optical information recording medium having the transparent base board with thickness t2 is represented by $\lambda$2 ($\lambda$1 < $\lambda$2), a numerical aperture on the image side necessary for recording on or reproducing from the optical information recording medium having the transparent base board with thickness t1 with a light flux with wavelength $\lambda$1 is represented by NA1, and a numerical aperture on the image side necessary for recording on or reproducing from the optical information recording medium having the transparent base board with thickness t2 with a light flux with wavelength $\lambda$2 is represented by NA2 (NA1 $\geqq$ NA2), the objective lens stated above can converge light for a combination of the wavelength $\lambda$1, the transparent base board thickness t1 and the numerical aperture on the image side NA1 so that its wave front aberration may be 0.07 $\lambda$1rms or less and can converge light for a combination of the wavelength $\lambda$2, the transparent base board thickness t2 and the numerical aperture on the image side NA2 so that its wave front aberration may be 0.07 $\lambda$2rms or less, and the following expression is satisfied;

$$\text{NA1} \geqq 0.7 \tag{23}$$

Wherein, NA1 represents a prescribed numerical aperture on the image side necessary for recording on and/or reproducing from the optical information recording medium having the transparent base board with a smaller thickness with the wavelength on the shorter wavelength side among the aforesaid wavelengths.

The objective lens described in (56) is characterized in that each of both surfaces of the objective lens is an aspheric surface in (55).

The objective lens described in (59) is characterized in that the following expression is satisfied in (55) or (56);

$$0.5 \leqq (f/vd) \cdot fD \leqq 10.0 \qquad (24)$$

wherein, fD is a focal length (mm) at $\lambda1$ of only the diffractive structure defined by fD = 1/(-2 - b2) when the diffractive structure is indicated with the optical path difference function defined by $\Phi b = b_2h^2 + b_4h^4 + b_6h^6 + \ldots$ (here, h represents a height from an optical axis (mm), and $b_2$, $b_4$ and $b_6$ ...are respectively $2^{nd}$, $4^{th}$ and $6^{th}$ ... order optical path difference function coefficients), f represents a focal length (mm) at $\lambda1$ of the total objective lens system wherein refracting power and diffracting power of the diffractive structure are combined, and vd represents Abbe number of d line for a material of the objective lens.

The objective lens described in (58) is characterized in that the following expression is satisfied in (57).

$$vd \geqq 55.0 \qquad (25)$$

The objective lens described in (59) is characterized in that chromatic aberration of the objective lens satisfies the following expression in (57) or in (58);

$$\left| \Delta fBi \cdot (Nai)^2 \right| \leqq 0.25 \ \mu m \ (i = 1 \ and \ 2) \qquad (26)$$

wherein, $\Delta fB$ represents a change ($\mu m$) of a focus position of the objective lens in the case of a change of a wavelength of the light source by +1 nm.

The objective lens described in (60) is characterized in that the following expression is satisfied in (55) or in (56) ;

$$-25.0 \leqq b_2/\lambda1 \leqq 0.0 \qquad (27)$$

wherein, $\lambda1$ represents a wavelength (mm) on the short wavelength side among the aforesaid wavelengths, and b2 represents the $2^{nd}$ order optical path difference function coefficient in the case of expressing the diffraction structure by the optical path difference function defined by $\Phi b = b_2h^2 + b_4h^4 + b_6h^6 + \ldots$, (here, h represents a height (mm) from an optical axis, and b2, b4, b6, ... are $2^{nd}$ order, $4^{th}$ order, $6^{th}$ order, ... optical path difference function coefficients).

The objective lens described in (61) is one used in an optical pickup device for recording and reproducing which includes light sources each having a different wavelength and an objective lens that converges the light flux emitted from the light source on an image recording surface through a transparent base board of an optical information recording medium, and can conduct recording and/or reproducing of information for optical information recording media in plural types, wherein the objective lens is a single lens that has a diffractive surface in a form of a ring-shaped zone on at least one surface thereof and at least one surface of the objective lens is an aspheric surface, and when a thickness of transparent base boards of optional two optical information recording media among the optical information recording media in plural types are represented respectively by t1 and t2 (t1 $\leqq$ t2), a wavelength for conducting recording or reproducing of information for the optical information recording medium having the transparent base board with thickness t1 is represented by $\lambda1$, a wavelength for conducting recording or reproducing of information for the optical information recording medium having the transparent base board with thickness t2 is represented by $\lambda2$ ($\lambda1 < \lambda2$), a numerical aperture on the image side necessary for recording on or reproducing from the optical information recording medium having the transparent base board with thickness t1 with a light flux with wavelength $\lambda1$ is represented by NA1, and a numerical aperture on the image side necessary for recording on or reproducing from the optical information recording medium having the transparent base board with thickness t2 with a light flux with wavelength $\lambda2$ is represented by NA2 (NA1 $\geqq$ NA2), the objective lens stated above can converge light for a combination of the wavelength $\lambda1$, the transparent base board thickness t1 and the numerical aperture on the image side NA1 so that its wave front aberration may be 0.07 $\lambda1$rms or less and can converge light for a combination of the wavelength $\lambda2$, the transparent base board thickness t2 and the numerical aperture on the image side NA2 so that its wave front aberration may be 0.07 $\lambda2$rms or less, and the following expression is satisfied;

$$\lambda 1 \leqq 500 \text{ nm} \qquad (28)$$

wherein, $\lambda 1$ represents a wavelength used for conducting recording and/or reproducing of information for the optical information recording medium having the transparent base board with a thickness t1.

The objective lens described in (62) is characterized in that each of both surfaces of the objective lens is an aspheric surface in (61).

The objective lens described in (63) is characterized in that the following expression is satisfied in (61) or (62);

$$0.5 \leqq (f/vd) \cdot fD \leqq 10.0 \qquad (29)$$

wherein, fD is a focal length (mm) at $\lambda 1$ of only the diffractive structure defined by $fD = 1/(-2 \cdot b2)$ when the diffractive structure is indicated with the optical path difference function defined by $\Phi b = b_2 h^2 + b_4 h^4 + b_6 h^6 + ...$ (here, h represents a height from an optical axis (mm), and $b_2$, $b_4$ and $b_6$ ...are respectively $2^{nd}$, $4^{th}$ and $6^{th}$ ... order optical path difference function coefficients), f represents a focal length (mm) at $\lambda 1$ of the total objective lens system wherein refracting power and diffracting power of the diffractive structure are combined, and $vd$ represents Abbe number of d line for a material of the objective lens.

The objective lens described in (64) is characterized in that the following expression is satisfied in (63).

$$vd \geqq 55.0 \qquad (30)$$

The objective lens described in (65) is characterized in that chromatic aberration of the objective lens satisfies the following expression in (63) or in (64);

$$\left| \Delta fBi \cdot (NAi)^2 \right| \leqq 0.25 \text{ μm} \quad (i = 1 \text{ and } 2) \qquad (31)$$

wherein, $\Delta fB$ represents a change (μm) of a focus position of the objective lens in the case of a change of a wavelength of the light source by +1 nm.

The objective lens described in (66) is characterized in that the following expression is satisfied in (61) or in (62);

$$-25.0 \leqq b_2/\lambda 1 \leqq 0.0 \qquad (32)$$

wherein, $\lambda 1$ represents a wavelength (mm) on the short wavelength side among the aforesaid wavelengths, and b2 represents the $2^{nd}$ order optical path difference function coefficient in the case of expressing the diffraction structure by the optical path difference function defined by $\Phi b = b_2 h^2 + b_4 h^4 + b_6 h^6 + ...$ (here, h represents a height (mm) from an optical axis, and b2, b4, b6, ... are $2^{nd}$ order, $4^{th}$ order, $6^{th}$ order, ... optical path difference function coefficients).

The objective lens described in (69) is one used in an optical pickup device for recording and reproducing which includes light sources each having a different wavelength and an objective lens that converges the light flux emitted from the light source on an image recording surface through a transparent base board of an optical information recording medium, and can conduct recording and/or reproducing of information for optical information recording media in plural types, wherein the objective lens is a single lens that has a diffractive surface in a form of a ring-shaped zone on at least one surface thereof and at least one surface of the objective lens is an aspheric surface, and when a thickness of transparent base boards of optional two optical information recording media among the optical information recording media in plural types are represented respectively by t1 and t2 (t1 $\leqq$ t2), a wavelength for conducting recording or reproducing of information for the optical information recording medium having the transparent base board with thickness t1 is represented by $\lambda 1$, a wavelength for conducting recording or reproducing of information for the optical information recording medium having the transparent base board with thickness t2 is represented by $\lambda 2$ ($\lambda 1 < \lambda 2$), a numerical aperture on the image side necessary for recording on or reproducing from the optical information recording medium having the transparent base board with thickness t1 with a light flux with wavelength $\lambda 1$ is represented by NA1, and a numerical aperture on the image side necessary for recording on or reproducing from the optical information recording medium having the transparent base board with thickness t2 with a light flux with wavelength $\lambda 2$ is represented by NA2 (NA1 $\geqq$ NA2), the objective lens stated above can converge light for a combination of the wavelength $\lambda 1$, the transparent base board thickness t1 and the numerical aperture on the image side NA1 so that its wave front aberration may be 0.07 $\lambda 1$rms or less and can converge light for a combination of the wavelength $\lambda 2$, the transparent base board thickness t2 and the numerical aperture on the image side NA2 so that its wave front aberration may be 0.07 $\lambda 2$rms or less, and the following expression is satisfied;

$$0.5 \leqq (f/vd) \cdot fD \leqq 10.0 \qquad (33)$$

wherein, fD is a focal length (mm) at $\lambda 1$ of only the diffractive structure defined by fD = 1/(-2 $\cdot$ b2) when the diffractive structure is indicated with the optical path difference function defined by $\Phi b = b_2 h^2 + b_4 h^4 + b_6 h^6 + ...$ (here, h represents a height from an optical axis (mm), and $h_2$, $b_4$ and be ...are respectively 2nd, 4th and 6th ... order optical path difference function coefficients), f represents a focal length (mm) at $\lambda 1$ of the total objective lens system wherein refracting power and diffracting power of the diffractive structure are combined, and vd represents Abbe number of d line for a material of the objective lens.

The objective lens described in (68) is characterized in that the following expression is satisfied in (54).

$$vd \geqq 55.0 \qquad (34)$$

The objective lens described in (69) is characterized in that chromatic aberration of the objective lens satisfies the following expression in (67) or in (68);

$$\left| \Delta fBi \cdot (NAi)^2 \right| \leqq 0.25 \ \mu m \ (i = 1 \ and \ 2) \qquad (35)$$

wherein, $\Delta fB$ represents a change ($\mu$m) of a focus position of the objective lens in the case of a change of a wavelength of the light source by +1 nm.

The objective lens described in (70) is characterized in that the light flux with wavelength $\lambda 2$ is converged for the optical information recording medium having the transparent base board thickness t2 within the NA1 under the state wherein the wave front aberration is not less than 0.07 $\lambda 2$, in either one of (55) - (69).

The objective lens described in (71) is characterized in that the following expression is satisfied in either one of (55) - (70);

$$0.4 \leqq \left| (Ph/Pf) - 2 \right| \leqq 10.0 \qquad (36)$$

wherein, Pf represents a diffractive ring-shaped zone interval (mm) at numerical aperture on the image side NA1 necessary for recording on and/or reproducing from an optical information recording medium with a transparent base board having thickness t1, and Ph represents a diffractive ring-shaped zone interval (mm) at the numerical aperture that is a half of NA1.

The objective lens described in (72) is characterized in that it is made of plastic material in either one of (55) - (71).

The objective lens described in (73) is characterized in that the following expression is satisfied in either one of (55) - (71).

$$t1 \leqq 0.6 \ mm \qquad (37)$$

$$t2 \geqq 0.6 \text{ mm} \qquad (38)$$

$$\lambda1 \leqq 500 \text{ nm} \qquad (39)$$

$$600 \text{ nm} \leqq \lambda2 \leqq 800 \text{ nm} \qquad (40)$$

$$NA1 \geqq 0.7 \qquad (41)$$

$$NA2 \leqq 0.65 \qquad (40)$$

The objective lens described in (74) is characterized in that it is made of a material whose saturation coefficient of water absorption is 0.5% or less in either one of (55) - (73).

The objective lens described in (75) is characterized in that it is made of a material whose internal transmittance at a thickness of 3 mm in the area of wavelength used is 85% or more, in either one of (55) - (74).

The objective lens described in (76) is characterized in that the following expression is satisfied when SA1 represents $3^{rd}$ order spherical aberration component and SA2 represents the sum of $5^{th}$ order, $7^{th}$ order and $9^{th}$ order spherical aberration components among spherical aberrations of the objective lens, in either one of (55) - (75);

$$\left| SA1/SA2 \right| > 1.0 \qquad (63)$$

wherein, SA1 represents $3^{rd}$ order spherical aberration component in the case of developing the aberration function into Zernike's polynomial expression, and SA2 represents a square root of the square sum of $5^{th}$ order, $7^{th}$ order and $9^{th}$ order spherical aberration components in the case of developing the aberration function into Zernike's polynomial expression.

The light-converging optical system described in (77) is one for information recording and reproducing which has therein light sources each having a different wavelength, a coupling lens which changes a divergence angle of a divergent light emitted from the light source, and an objective lens which converges a light flux coming from the light source having a different wavelength passing through the coupling lens, and can conduct recording arid/or reproducing of information for optical information recording media in plural types, wherein the light-converging optical system has, on at least one surface thereof, a diffractive structure in a form of a ring-shaped zone, and when optional two wavelengths among the aforesaid wavelengths each being different are represented respectively by $\lambda1$ and $\lambda2$ ($\lambda1 < \lambda2$), transparent base board thickness of optional two optical information recording media among the aforesaid optical information recording media in plural types are represented respectively by t1 and t2 (t1 $\leqq$ t2), a numerical aperture on the image side necessary for recording on or reproducing from the optical information recording medium having the transparent base board with thickness t1 with a light flux with wavelength $\lambda1$ is represented by NA1, and a numerical aperture on the image side necessary for recording on or reproducing from the optical information recording medium having the transparent base board with thickness t2 with a light flux with wavelength $\lambda2$ is represented by NA2 (NA1 $\geqq$ NA2), the light-converging optical system stated above can converge light for a combination of the wavelength $\lambda1$, the transparent base board thickness t1 and the numerical aperture on the image side NA1 so that its wave front aberration may be 0.07 $\lambda1$rms or less and can converge light for a combination of the wavelength $\lambda2$, the transparent base board thickness t2 and the numerical aperture on the image side NA2 so that its wave front aberration may be 0.07 $\lambda2$rms or less, and the coupling lens corrects fluctuations of spherical aberration caused on each optical surface of the light-converging optical system by moving in the direction of an optical axis.

The light-converging optical system described in (78) is characterized in that the light flux with wavelength $\lambda2$

is converged for the optical information recording medium having the transparent base board thickness t2 within the NA1 under the state wherein the wave front aberration is not less than 0.07 λ2, in (77).

The light-converging optical system described in (79) is characterized in that the diffractive structure corrects chromatic aberration generated on the objective lens, in (77) or in (78).

The light-converging optical system described in (80) is characterized in that the coupling lens has a function to correct chromatic aberration generated on the objective lens, in either one of (77) - (79).

The light-converging optical system described in (81) is characterized in that the coupling lens is of a one-group two-element structure wherein a positive lens having a relatively large Abbe number and a negative lens having a relatively small Abbe number are cemented, in (80) .

The light-converging optical system described in (82) is characterized in that the coupling lens is a single lens having a diffractive structure in a form of a ring-shaped zone on at least one surface thereof, in (80).

The light-converging optical system described in (83) is characterized in that the following expression is satisfied by chromatic aberration of a composite system composed of the coupling lens and the objective lens in either one of (77) - (82) :

$$\left| \Delta fBi \cdot (NAi)^2 \right| \leqq 0.25 \ \mu m \quad (i = 1 \ and \ 2) \qquad (44)$$

wherein, ΔfBi is a change (μm) of a focus position of the composite system in the case of a change of a wavelength of the light source by +1 nm.

The light-converging optical system described in (84) is characterized in that the following expression is satisfied in either one of (77) - (83).

$$t1 \leqq 0.6 \ mm \qquad (45)$$

$$t2 \geqq 0.6 \ mm \qquad (46)$$

$$\lambda 1 \leqq 500 \ nm \qquad (47)$$

$$600 \ nm \leqq \lambda 2 \leqq 800 \ nm \qquad (48)$$

$$NA1 \geqq 0.70 \qquad (49)$$

$$NA2 \leqq 0.65 \qquad (50)$$

The light-converging optical system described in (85) is characterized in that the objective lens in either one of (77) - (84) is one described in either one of (55) - (76).

The light-converging optical system described in (86) is characterized in that the coupling lens changes a divergence angle of the light flux entering the objective lens depending on the thickness of each transparent base board for the plural optical information recording media each having a different thickness of the transparent base board, in either one of (77) - (85).

The light-converging optical system described in (87) is characterized in that the coupling lens corrects fluctuations of spherical aberration caused on each optical surface of the light-converging optical system by minute variation of generated wavelength of the light source, by moving in the direction of an optical axis, in either one of (77) - (86).

The light-converging optical system described in (88) is characterized in that the objective lens includes at least one lens made of plastic material, and the coupling lens corrects fluctuations of spherical aberration caused on each optical surface of the light-converging optical system by changes of temperature and humidity by moving in the direction of an optical axis, in either one of (77) - (86).

The light-converging optical system described in (89) is characterized in that the coupling lens corrects fluctuations of spherical aberration caused on each optical surface of the light-converging optical system by minute variation of a thickness of the transparent base board of the optical information recording medium by moving in the direction of an optical axis, in either one of (77) - (86).

The light-converging optical system described in (90) is characterized in that the coupling lens corrects fluctuations of spherical aberration caused on each optical surface of the light-converging optical system by at least two combinations or more among minute variations of generated wavelength of the light source, temperature and humidity changes, and minute variations of a thickness of the transparent base board of the optical information recording medium, by moving in the direction of an optical axis, in either one of (77) - (89).

The light-converging optical system described in (91) is characterized in that the coupling lens corrects fluctuations of spherical aberration caused on each optical surface of the light-converging optical system by moving in the direction of an optical axis to increase the distance from the objective lens when the spherical aberration of the light-converging optical system varies to the over side, and by moving in the direction of an optical axis to decrease the distance from the objective lens when the spherical aberration of the light-converging optical system varies to the under side, in either one of (77) - (90).

The optical pickup device described in (92) is an optical pickup device that is provided with a light-converging optical system including light sources each having a different wavelength, a coupling lens which changes a divergence angle of a divergent light emitted from the light source, and an objective lens which converges a light flux passing through the coupling lens on an information recording surface through a transparent base board of an optical information recording medium, and can conduct recording and/or reproducing of information for the optical information recording media in plural types by detecting a reflected light coming from the recording surface, wherein the optical pickup device has a light-receiving means for detecting reflected light from the recording surface and a first driving device for driving the objective lens for converging a light flux on the recording surface, the coupling lens corrects fluctuations of spherical aberration caused on each optical surface of the light-converging optical system, by moving in the direction of an optical axis, and has a second driving device which detects how the light flux has been converged on the recording surface by detecting the reflected light from the recording surface and thereby drives the coupling lens, and the light-converging optical system is one described in either one of (77) - (91).

The recording device for sound and/or image, and/or the reproducing device for sound and/or image described in (93) is characterized in that it houses therein the optical pickup device described in (92).

In the case of the objective lens in (1), its numerical aperture is great and yet it is made of plastic material, and it is light in weight and can be produced on a mass production basis to be of low cost, and it makes it possible to obtain a single objective lens for recording on and reproducing from an optical information recording medium, and to correct spherical aberration by employing an aspheric surface and further to correct chromatic aberration by employing a diffractive structure. Since the objective lens is made of plastic material, it is possible to provide a diffractive structure easily, and it is possible to lighten a load for the focusing mechanism in the optical pickup device because the objective lens is light in weight. As a plastic material, polyolefin resin is preferable, because it is preferable that the Abbe number is great, the transmittance at a wavelength of 500 nm or less is great, the refractive index is small and the coefficient of water absorption is small. In particular, norbornane resin of a polyolefin type is preferable. Since it is further possible to make a spot converged on an information recording surface to be small by making the numerical aperture to be 0.7 or more, high density recording of information and/or reading of highly recorded information is possible, compared with conventional optical information recording medium such as CD (numerical aperture 0.45) or DVD (numerical aperture 0.60).

It is preferable that the objective lens has an aspheric surface on each of its both sides as shown in (2), and aspheric surfaces on both sides make it possible to correct aberration more finely and closely.

By providing a diffraction structure in a form of a ring-shaped zone having a focal length satisfying conditional expression (2) in (3) on the objective lens, it is possible to correct axial chromatic aberration. Since this diffraction structure has wavelength characteristics to change in the direction toward the shorter back focus, when a wavelength of the laser light source varies slightly toward the long wavelength side, it is possible to correct the axial chromatic aberration caused on the objective lens which is problematic when a light source having a generated wavelength of 500 nm or less is used, by selecting appropriately refracting power and diffracting power as a refracting lens so that they may satisfy the above expression. When a value of fD/f is not less than the lower limit of the above expression, axial chromatic aberration of the objective lens is not overcorrected, upper limit, axial chromatic aberration of the objective lens is not undercorrected.

When the diffractive structure is formed to satisfy conditional expression (3) in (4), it is possible to correct chromatic aberration properly. When the upper limit of the conditional expression (3) is not exceeded, axial chromatic aberration is not overcorrected, and when the lower limit is not exceeded, axial chromatic aberration is not undercorrected.

In the case of the objective lens in (5), it is made of plastic material, and it is light in weight and can be produced on a mass production basis to be of low cost, and it makes it possible to obtain a single objective lens capable of recording on and reproducing from an optical information recording medium under light of short wavelength, and to correct spherical aberration by an aspheric surface, and further to correct chromatic aberration by employing a diffractive structure. Since the objective lens is made of plastic material, it is possible to provide a diffractive structure easily, and it is possible to lighten a load for the focusing mechanism in the optical pickup device because the objective lens is light in weight. As a plastic material, polyolefin resin is preferable, because it is preferable that the Abbe number is great, the transmittance at a wavelength of 500 nm or less is great, the refractive index is small and the coefficient of water absorption is small. In particular, norbornane resin of a polyolefin type is preferable. Since it is further possible to make a spot converged on an information recording surface to be small by making the wavelength to be used to be 500 nm or less, high density recording of information and/or reading of highly recorded information is possible, compared with conventional optical information recording medium such as CD (780 nm) or DVD (650 nm).

It is preferable that the objective lens has an aspheric surface on each of its both sides as shown in (6), and aspheric surfaces on both sides make it possible to correct aberration more finely and closely.

By providing a diffraction structure in a form of a ring-shaped zone having a focal length satisfying conditional expression (5) in (7) on the objective lens, it is possible to correct axial chromatic aberration. Since this diffraction structure has wavelength characteristics to change in the direction toward the shorter back focus, when a wavelength of the laser light source varies slightly toward the long wavelength side, it is possible to correct the axial chromatic aberration caused on the objective lens which is problematic when a light source having a generated wavelength of 500 nm or less is used, by selecting appropriately refracting power and diffracting power as a refracting lens so that they may satisfy the above expression. When a value of fD/f is not less than the lower limit of the above expression, axial chromatic aberration of the objective lens is not overcorrected, upper limit, axial chromatic aberration of the objective lens is not undercorrected.

When the diffractive structure is formed to satisfy conditional expression (6) in (8), it is possible to correct chromatic aberration properly. When the upper limit of the conditional expression (6) is not exceeded, axial chromatic aberration is not overcorrected, and when the lower limit is not exceeded, axial chromatic aberration is not undercorrected.

In the case of the objective lens in (9), it is made of plastic material, and it is light in weight and can be produced on a mass production basis to be of low cost, and it makes it possible to obtain a single objective lens capable of recording on and reproducing from an optical information recording medium under light of short wavelength, and to correct spherical aberration by an aspheric surface, and further to correct chromatic aberration by employing a diffractive structure. Since the objective lens is made of plastic material, it is possible to provide a diffractive structure easily, and it is possible to lighten a load for the focusing mechanism in the optical pickup device because the objective lens is light in weight. As a plastic material, polyolefin resin is preferable, because it is preferable that the Abbe number is great, the transmittance at a wavelength of 500 nm or less is great, the refractive index is small and the coefficient of water absorption is small. In particular, norbornane resin of a polyolefin type is preferable. By providing a diffraction structure in a form of a ring-shaped zone having a focal length satisfying conditional expression (7) on the objective lens, it is possible to correct axial chromatic aberration satisfactorily. Since this diffraction structure has wavelength characteristics to change in the direction toward the shorter back focus, when a wavelength of the laser light source varies slightly toward the long wavelength side, it is possible to correct the axial chromatic aberration caused on the objective lens which is problematic when a light source having a generated wavelength of 500 nm or less is used, by selecting appropriately refracting power and diffracting power as a refracting lens so that they may satisfy the above expression. When a value of fD/f is not less than the lower limit of the above expression, axial chromatic aberration of the objective lens is not overcorrected, upper limit, axial chromatic aberration of the objective lens is not undercorrected.

It is preferable that the objective lens has an aspheric surface on each of its both sides as shown in (10), and aspheric surfaces on both sides make it possible to correct aberration more finely and closely.

When the diffractive structure is formed to satisfy conditional expression (8) in (11), it is possible to correct chromatic aberration properly. When the upper limit of the conditional expression (8) is not exceeded, axial chromatic aberration is not overcorrected, and when the lower limit is not exceeded, axial chromatic aberration is not undercorrected.

In the case of the objective lens in (12), it is made of plastic material, and it is light in weight and can be produced on a mass production basis to be of low cost, and it makes it possible to obtain a single objective lens capable of recording on and reproducing from an optical information recording medium under light of short wavelength, and to correct spherical aberration by an aspheric surface, and further to correct chromatic aberration by employing a diffractive structure. Since the objective lens is made of plastic material, it is possible to provide a diffractive structure easily, and it is possible to lighten a load for the focusing mechanism in the optical pickup device because the objective lens is light in weight. As a plastic material, polyolefin resin is preferable, because it is preferable that the Abbe number is great, the transmittance at a wavelength of 500 nm or less is great, the refractive index is small and the coefficient of water absorption is small. In particular, norbornane resin of a polyolefin type is preferable. Further, when the diffractive structure is formed so that expression (9) may be satisfied, chromatic aberration can be corrected appropriately. When the upper limit of the conditional expression (9) is not exceeded, chromatic aberration is not overcorrected, and when the lower limit is not exceeded, chromatic aberration is not undercorrected.

With regard to the conditional expression (9), it is preferable that conditional expression (10) is satisfied as in (13), and it is more preferable that conditional expression (11) is satisfied as in (14).

It is preferable that the objective lens has an aspheric surface on each of its both sides as shown in (15), and aspheric surfaces on both sides make it possible to correct aberration more finely and closely.

When forming a diffractive structure in a shape of a ring-shaped zone on an objective lens used for an optical pickup device employing a light source emitting light with a wavelength of about 400 nm, and thereby correcting axial chromatic aberration, the diffractive structure is required to have great diffracting power. The reason for the foregoing is that the shorter the wavelength is, the greater the change of the refractive index for the delicate wavelength change is, in general optical materials. Therefore, the minimum interval of the diffractive ring-shaped zones in the direction of an optical axis becomes too small when a diffractive structure is formed only on one surface in an objective lens representing a single lens, and an influence of a decline of diffraction efficiency caused by errors in forms of the diffractive structure in manufacturing becomes remarkable. For the reason mentioned above, likewise (17), a diffractive structure is formed on each of both surfaces, and diffracting power is allocated on two surfaces, so that an interval of the diffractive ring-shaped zones formed on each surface can be made large, resulting in the objective lens which is easily manufactured and is excellent in diffraction efficiency. In this case, it is possible to make a two-sided diffracting lens that is well-corrected in terms of axial chromatic aberration, by determining a form of the diffractive structure on each surface so that the following expression may be satisfied.

$$0.10 \leqq \lambda \cdot f \cdot \Sigma \left( ni / (Mi \cdot Pi^2) \right) \leqq 3.00$$

When the lower limit is not exceeded, the axial chromatic aberration is not under-corrected, and when the upper limit is not exceeded, the axial chromatic aberration is not over-corrected. To attain the function mentioned above, it is preferable that the following expression is satisfied.

$$0.20 \leqq \lambda \cdot f \cdot \Sigma \left( ni / (Mi \cdot Pi^2) \right) \leqq 2.50$$

Further, likewise (19),

$$2.0 \leqq fD/f \leqq 30.0$$

$$(2.0 \leqq fD/f \leqq 65.0)$$

since the diffractive structure having a positive power has a negative value of Abbe number, it is possible to correct satisfactorily axial chromatic aberration which is problematic when using a light source that emits light with a wavelength of about 400 nm and has poor monochromaticity, by selecting focal length fD as a diffracting lens of a diffractive structure and focal length f of the total objective lens system in a way to satisfy the expression shown above. When the lower limit of the above expression is not exceeded, the axial chromatic aberration of the total objective lens system is not undercorrected, and when the upper limit is not exceeded, the axial chromatic aberration of the total objective lens system is not over-corrected.

Further, in (21),

$$0.35 < (X1 - X2) \cdot (N - 1) / (NA \cdot f) < 0.55$$

the expression shown above is a condition relating to a sagging amount of each surface (X1 and X2), for realizing an objective lens wherein sine conditions are satisfied satisfactorily and high order coma caused by shifting of optical axis between surfaces is corrected satisfactorily, in an objective lens (hereinafter referred to as a two-sided aspheric surface-diffracting objective lens) representing an objective lens of a single lens type wherein the numerical aperture on the image side is not less than 0.70, an aspheric surface is provided on each of both sides and a diffractive structure is formed on at least one surface. In the two-sided aspheric surface-diffracting objective lens wherein the numerical aperture on the image side is not less than 0.70, if a value of (X1 - X2) - (N - 1) / (NA · f) is within the aforesaid range, high order coma generated when a light flux enters does not become too large, and high order coma caused by shifting of optical axis between surfaces does not become too large. Further, an amount of change in spherical aberration caused by a small change in a wavelength of light emitted from a light source does not become too large. In addition, spherical aberration of marginal ray of light is not over-corrected when the lower limit is not exceeded, and spherical aberration of marginal ray of light is not under-corrected when the upper limit is not exceeded. To attain the function mentioned above, it is preferable that the following expression is satisfied.

$$0.39 < (X1 - X2) \cdot (N - 1) / (NA \cdot f) < 0.52$$

Further, in (23),

$$0.39 < (X1 - X2) \cdot (N - 1) / (NA \cdot f) < 0.52$$

the expression shown above is a condition relating to a sagging amount of each surface (X1 and X2), for realizing an objective lens wherein sine conditions are satisfied satisfactorily and high order coma caused by shifting of optical axis between surfaces is corrected satisfactorily, in a two-sided aspheric surface-diffracting objective lens whose numerical aperture on the image side is within a range of 0.75 - 0.95. In the two-sided aspheric surface-diffracting objective lens whose numerical aperture on the image side is greater than 0.75, when the value of (X1 - X2) · (N - 1) / (NA · f) is within the aforesaid range, high order coma generated when a light flux enters does not become too large, and high order coma caused by shifting of optical axis between surfaces does not become too large. Further, an amount of change in spherical aberration caused by a small change in a wavelength of light emitted from a light source does not become too large. In addition, spherical aberration of marginal ray of light is not over-corrected when the lower limit is not exceeded, and spherical aberration of marginal ray of light is not under-corrected when the upper limit is not exceeded.

The structure (27) is related to an amount of generation of axial chromatic aberration of the objective lens, and if conditional expression (12) is satisfied with the axial chromatic aberration of the objective lens, it is possible to control a change of the focus position to be small when instantaneous fluctuation of generated wavelength is caused by a mode hop phenomenon of the light source, even when the wavelength to be used is made to be a short wavelength of 500 nm or less and the numerical aperture is made to be high.

The structure (28) is related to the correction of spherical aberration in the case of a change in a wavelength of a light source, and a semiconductor laser used as a light source in the optical pickup device has minute dispersion of generated wavelength of about ±10 nm. Therefore, if the spherical aberration generated in the objective lens is changed greatly when a wavelength is varied from the standard wavelength, it is not possible to use the semiconductor laser whose generated wavelength is deviated from the standard wavelength. This problem, however, can be solved if conditional expression (13) is satisfied by the diffractive structure provided on the objective lens. If this conditional expression (13) is satisfied, it is possible to cancel satisfactorily the change in spherical aberration caused by a wavelength change with an effect of the diffraction, spherical aberration in the case of a change of a wavelength from the standard wavelength within a range of not less than the lower limit is not overcorrected, and spherical aberration in the case of a change of a wavelength from the standard wavelength within a range of not more than the upper limit is not undercorrected. Therefore, it is possible to use a semiconductor laser whose generated wavelength is deviated slightly from the standard wavelength, even when the wavelength to be used is made to be a short wavelength of 500 nm or less and the numerical aperture is made to be high.

The structure (29) is related to a ring-shaped zone interval of the diffractive structure, namely to an interval of a ring-shaped zone in the direction perpendicular to an optical axis, and it is preferable to use a high order optical path difference function coefficient of the optical path difference function, because the change of spherical aberration caused by minute wavelength change from the standard wavelength is corrected satisfactorily by the effect of the diffraction in the invention, although (Ph/Pf) - 2 = 0 holds if the optical path difference function has no more than 2nd order optical path difference function coefficient (which is also called a diffraction surface coefficient). In this case, it is preferable that (Ph/Pn- 2) takes a value that is away from zero to a certain extent, and if this condition is satisfied, it is possible to cancel satisfactorily the change of spherical aberration caused by a wavelength change. Spherical aberration in the case of a change of a wavelength from the standard wavelength within a range of not less than the lower limit is not overcorrected, and spherical aberration in the case of a change of a wavelength from the standard wavelength within a range of not more than the upper limit is not undercorrected.

The structure (30) is related to an amount of generation of spherical aberration in the case of a change in wavelength of a light source. In a refraction lens having positive refracting power, when a wavelength is changed from the standard wavelength to the long wavelength side, overcorrected spherical aberration is generated. However, it is possible to correct satisfactorily the overcorrected spherical aberration generated in the refraction lens, by providing a diffractive structure having the spherical aberration characteristics wherein the spherical aberration of the objective lens is changed toward under correction when a wavelength is changed from the standard wavelength to the long wavelength side. In this case, it is preferable that the conditional expression (15) is satisfied by an amount of change ($|\Delta SA|$) of spherical aberration of a marginal ray of light in the case of a change of a wavelength by +10 nm. If this condition is satisfied, the spherical aberration in the case of a change of a wavelength from the standard wavelength by +10 nm is not overcorrected or undercorrected. In this case, amount of change $\Delta SA$ in spherical aberration of the marginal ray of light is represented by a width between an upper end of the spherical aberration curve wherein a spherical aberration curve at standard wavelength $\lambda 0$ is moved in parallel to the position where the bottom end of that spherical aberration curve is overlapped on the bottom end of a spherical aberration curve at wavelength $\lambda 0 + 10$ nm, and an upper end of the spherical aberration curve at wavelength $\lambda 0 + 10$ nm.

Since the shorter the wavelength is, the greater the change of the refractive index for the delicate wavelength change is, for general optical materials, the diffractive structure is required to have great diffracting power, and an interval of adjoining diffractive ring-shaped zones tends to be smaller, when forming a diffractive structure in a shape of a ring-shaped zone on an objective lens used for an optical pickup device employing a light source emitting light with a wavelength of about 400 nm, and thereby correcting axial chromatic aberration, When the interval of adjoining diffractive ring-shaped zones is small, an influence on a decline of diffraction efficiency caused by manufacturing becomes great, which is not preferable for practical use. Therefore, if an objective lens is given axial chromatic aberration characteristics in which a back focus in the case of a change of wavelength of a light source changes in the direction to become shorter compared with a back focus before the change of wavelength when a diffractive function as a diffracting lens and a refractive function as a refracting lens are combined as shown in (19-2), and the following expression is satisfied, it is possible to realize an objective lens wherein an interval of diffractive ring-shaped zones is secured to be great and yet, the defocus component of wavefront aberration in the case of mode hopping of the light source is small, even when the objective lens is one for an optical pickup device employing a light source emitting light with a wavelength of about 400 nm.

$$-1 < \Delta CA / \Delta SA < 0$$

The expression shown above means to make the spherical aberration curve for the standard wavelength to cross the spherical aberration curves (also called spherical aberration of color) on the longer wavelength side and the shorter wavelength side, by making the axial chromatic aberration of the objective lens to be over-corrected by the diffracting function. Due to this, it is possible to make the defocus component of the wavefront aberration in the case of mode hopping of the light source to be small, because a movement of the best focus position in the case of fluctuations of a wavelength of the light source can be controlled to be small. Further, when the chromatic aberration is corrected as stated above, an interval of the diffractive ring-shaped zones can be made greater than in the case of making the defocus component of the wavefront aberration in the case of mode hopping of the light source to be small, by correcting both axial chromatic aberration and color spherical aberration, resulting in attainment of prevention of a decline of diffraction efficiency caused by errors of ring-shaped zones in manufacturing.

The structure (33) is related to an objective lens that conducts recording and reproducing of information for an optical information recording medium by using diffracted light of high order such as 2nd or more order generated by a diffractive structure, and when using nth order diffracted light, it is possible to make an interval of a ring-shaped zone of the diffractive structure to be about n times that in the case of using $\pm 1$st order diffracted light, and to make the number of ring-shaped zones to be about 1/n times. Therefore, a metal mold for forming the diffractive structure can be made easily, its processing time can be shortened, and a decline of diffraction efficiency caused by processing and manufacturing errors can be prevented.

Likewise (34), when an amount of step in the direction of an optical axis on the ring-shaped zonal structure of the diffractive structure formed on at least one surface among diffractive structures formed on the objective lens is determined so that high order diffracted light in the $n^{th}$ order may have the maximum amount of diffracted light under the assumption that n represents integers other than 0 and $\pm 1$ (hereinafter, a surface having thereon the diffractive structure whose ring-shaped zonal structure has been determined as stated above is called a high order diffractive surface), as shown in (21-2), it is possible to relax the minimum value of the interval of diffractive ring-shaped zones, compared with an occasion of using $\pm$ first order diffracted light, and thereby to make an influence of a decline of diffraction efficiency caused by errors in shapes of the diffractive structures to be small. In this case, it is possible either to make all diffractive surfaces formed on the objective lens to be a high order diffractive surface or to make only the diffractive surface wherein a minimum value of an interval of diffractive ring-shaped zones in the case of using $\pm$ first order diffracted light is especially small to be a high order diffractive surface. Further, it is also possible to arrange so that a value of the number of order for diffraction that makes an amount of diffracted light to be maximum may be different for each diffractive surface.

When materials are selected as in (35), refractive index distribution is hardly generated by a difference of the coefficient of water absorption in the lens in the course for the objective lens to absorb water in the air, and the aberration caused by that can be made small. When NA is great, in particular, generation of aberration tends to be great, which, however, can be made small, if the aforesaid action is taken.

When the material whose internal transmittance for material thickness of 3 mm within a range of wavelength used is 85% or more is used as in (36), intensity of recording light can be obtained sufficiently even when the wavelength used is made to be a short wavelength of 500 nm or less, and an amount of light entering the sensor can be obtained sufficiently, even when light passes the objective lens for a forward and backward in the course of reading, and the S/N ratio of reading signals can be improved. Further, when the wavelength to be used comes to 500 nm or less, especially, to about 400 nm, deterioration of lens material caused by absorption cannot be ignored, but if the material that satisfies the condition stated above is used for the objective lens, an influence for the deterioration turns out to be small, and the objective lens can be used on a semipermanent basis.

In the structure (37), with respect to the balance between $3^{rd}$ order component and high order component of $5^{th}$ order or higher in spherical aberration generated in an objective lens when a thickness at the center of the objective lens has an error for the design basis value, an amount of spherical aberration generated tends to be great even for a small error of the thickness at the center, in the case of high NA objective lens, thus, the allowable error of the thickness at the center is as very small as several $\mu$m. However, in the case of a molded lens, it is difficult to make an error of the thickness at the center to be several $\mu$m or less constantly. On the light-converging optical system of the invention, on the other hand, it is possible to correct $3^{rd}$ order spherical aberration component among spherical aberration generated in the light-converging optical system, by moving the coupling lens in the direction of an optical axis and thereby by changing a divergence angle of a light flux entering the objective lens. Therefore, if conditional expression (18) is satisfied by spherical aberration of the objective lens, it is possible to remove $3^{rd}$ order spherical aberration component and thereby to control an amount of residual spherical aberration of the total light-converging optical system to be small, by moving the coupling lens in the direction of an optical axis by an appropriate amount, even when the thickness at the center of the objective lens has a minute error against the design basis value.

The structure (38) is related to the preferable structure of a light-converging optical system used for an optical pickup device for recording on and/or reproducing from a higher density advanced optical information recording medium. As a numerical aperture of an objective lens is made to be higher in terms of value and a wavelength of a light source is made to be shorter, as described in the prior art, an amount of change in spherical aberration caused by minute fluctuations in generated wavelength of a light source, changes in temperature and humidity and by minute changes in a transparent base board of an optical information recording medium, grows greater not to be ignored, which makes it impossible to conduct appropriate recording and/or reproducing of information. However, this problem can be solved by making the coupling lens to be movable in parallel with an optical axis. Namely, when spherical aberration of the light-converging optical system is varied toward the over side or under side, a divergence angle of a light flux that enters an objective lens is changed by moving the coupling lens by an appropriate amount in the direction of an optical axis. Due to this, it is possible to generate spherical aberration having polarity which is opposite to that of spherical aberration generated on the total light-converging optical system on the wavefront passing through the objective lens. As a result, the wavefront in the case of focusing develops into the state where spherical aberration is canceled, and thereby, spherical aberration on the total light-converging optical system can be corrected satisfactorily. Further, as a numerical aperture of an objective lens is made to be higher in terms of value and a wavelength of a light source is made to be shorter, correction of axial chromatic aberration caused on the objective lens becomes important. This problem can be solved by providing, on either surface of the light-converging optical system, the diffractive structure having wavelength characteristics that a back focus of an objective lens turns out to be shorter when a wavelength of a light source is varied to the long wavelength side. This diffractive structure may either be provided on the objective lens or be provided on the coupling lens. When this diffractive structure is provided on each of the objective lens and the coupling lens, power of a diffracting lens can be allocated and an interval of a ring-shaped zone of the diffractive structure is increased accordingly, which makes a diffracting lens having high diffraction efficiency to be manufactured easily. Further, this diffractive structure may also be provided on optical elements other than the objective lens and the coupling lens in the light-converging optical system. It is further preferable that the diffractive structure also corrects axial chromatic aberration generated on an optical element other than the objective lens in the light-converging optical system, in addition to the axial chromatic aberration caused on the objective lens.

The structure (41) is related to the structure of a coupling lens, and it is possible to correct axial chromatic aberration caused on the objective lens with a simple structure by making the coupling lens to be of a one-group two-element structure wherein a positive lens having a relatively large Abbe number and a negative lens having a relatively small Abbe number are cemented

In the structure (42), axial chromatic aberration caused on the objective lens can be corrected satisfactorily by a simple structure of a single lens.

The structure (43) is related to axial chromatic aberration on the composite system of a coupling lens and an objective lens, and as long as conditional expression (19) is satisfied by the axial chromatic aberration of the composite system, it is possible to control fluctuations of generated wavelength caused by mode hop phenomenon of a laser light source and deterioration of wavefront aberration for high frequency superposition to be small.

The structure (45) is related to a light-converging optical system that conducts recording and reproducing of information for an optical information recording medium by using diffracted light of high order such as $2^{nd}$ or more order generated by a diffractive structure, and when using $n^{th}$ order diffracted light, it is possible to make an interval of a ring-shaped zone of the diffractive structure to be about n times that in the case of using $\pm 1^{st}$ order diffracted light, and to make the number of ring-shaped zones to be about 1/n times. Therefore, a metal mold for forming the diffractive structure can be made easily, its processing time can be shortened, and a decline of diffraction efficiency caused by processing and manufacturing errors can be prevented.

The structure (47) is related to correction of spherical aberration that is caused on a light-converging optical system of an optical pickup device when a generated wavelength of a semiconductor laser representing a light source is changed. When the generated wavelength is changed from the standard wavelength, there is generated over or under spherical aberration on the light-converging optical system, but fluctuations of the spherical aberration caused on the light-converging optical system can be canceled by moving a coupling lens in the direction of an optical axis by an appropriate amount, and thereby by changing a divergence angle of a light flux entering an objective lens.

The structure (48) is related to correction of spherical aberration that is caused on a light-converging optical system of an optical pickup device when temperature or humidity is changed, and when over or under spherical aberration is caused on the light-converging optical system, a divergence angle of a light flux entering an objective lens is changed by moving a coupling lens in the direction of an optical axis by an appropriate amount. Due to this, fluctuations of the spherical aberration caused on the light-converging optical system can be canceled.

The structure (49) is related to correction of spherical aberration that is caused on a light-converging optical system by errors of a thickness of a protective layer (transparent base board) of an optical information recording medium, and when the protective layer has an error in the direction to become thicker, over spherical aberration is caused on the light-converging optical system, while, when the protective layer has an error in the direction to become thinner, under spherical aberration is caused. In this case, a divergence angle of a light flux entering an objective lens is changed by moving a coupling lens in the direction of an optical axis by an appropriate amount. Due to this, fluctuations of the spherical aberration caused on the light-converging optical system can be canceled.

The structure (50) is related to correction of spherical aberration that is caused on a light-converging optical system by a combination of at least two of minute fluctuation of a generated wavelength of a laser, temperature and humidity changes and minute variation in a thickness of a protective layer of an optical information recording medium. Even in this case, a divergence angle of a light flux entering an objective lens is changed by moving a coupling lens in the direction of an optical axis by an appropriate amount. Due to this, fluctuations of the spherical aberration caused on the light-converging optical system can be canceled.

In the structure (51), when a coupling lens is moved in the direction of an optical axis in a way to increase a distance between an objective lens and the coupling lens, more divergent light enters the objective lens compared with an occasion where the coupling lens has not been moved. It is therefore possible to generate under spherical aberration on the objective lens. Therefore, when over spherical aberration is generated on a light-converging optical system by the aforesaid causes, if a coupling lens is moved by an appropriate amount and a distance between the coupling lens and an objective lens is increased, over spherical aberration generated can be canceled exactly. On the contrary, if a coupling lens is moved in the direction of an optical axis in a way to decrease a distance between an objective lens and the coupling lens, more convergent light enters the objective lens compared with an occasion where the coupling lens has not been moved. It is therefore possible to generate over spherical aberration on the objective lens. Therefore, when under spherical aberration is generated on a light-converging optical system by the aforesaid causes, if a coupling lens is moved by an appropriate amount and a distance between the coupling lens and an objective lens is decreased, under spherical aberration generated can be canceled exactly.

In the structure (52), fluctuations of spherical aberration caused by a difference of a thickness of a transparent base board on each recording surface are corrected even in the case that the optical information recording medium has thereon two or more recording layers through a transparent base board such as a protective layer. Therefore, it is possible to keep the state of light-converging for the light-converged spot on each recording surface to be excellent constantly, and thereby, to obtain a light-converging optical system capable of conducting recording and/or reproducing of information in quantity of two times or more on one side of the information recording medium.

The structure (53) is related to an optical pickup device capable of correcting satisfactorily fluctuations of axial chromatic aberration caused on an objective lens and fluctuations of spherical aberration caused on each optical surface of a light-converging optical system including a coupling lens and an objective lens, in which, spherical aberration caused on each optical surface of the light-converging optical system can be corrected when the coupling lens is moved in the direction of an optical axis. Namely, when spherical aberration of the light-converging optical system is varied to the over side or under side, a divergence angle of a light flux entering the objective lens is changed by moving the coupling lens by an appropriate amount in the direction of an optical axis. Due to this, it is possible to generate spherical aberration having polarity which is opposite to that of spherical aberration generated on the total light-converging optical system, on wavefront that passes through the objective lens. As a result, the wavefront in the case of focusing develops into the state where spherical aberration is canceled, and thereby, spherical aberration on the total light-converging optical system can be corrected satisfactorily. Further, by correcting axial chromatic aberration caused on the light-converging optical system by an effect of the diffractive structure provided in the light-converging optical system, the spot diameter does not grow to be too large even in the case of occurrence of instantaneous fluctuation of wavelength which cannot be followed by spherical aberration correction function of the coupling lens such as mode hop, thus, stable recording and/or reproducing of information can be conducted. Though a second driving device moves the coupling lens in the direction of an optical axis, the coupling lens is moved so that spherical aberration caused on the light-converging optical system may be corrected on an optimum basis, while monitoring RF amplitude of reproduction signals in the actual optical pickup device. As the second driving device, it is possible to use an actuator of a voice coil type and a piezo-actuator.

In the structure (54), the aforesaid optical pickup device is housed in each of a recording device and a reproducing device both for a sound and an image, and excellent recording and reproducing can be conducted.

The structure (55) makes it possible to obtain an objective lens with high numerical aperture which is suitable for an optical pickup device capable of recording on or reproducing from information with a different wavelength for a plurality of optical information recording media each having a different transparent base board thickness. To be concrete, spherical aberration generated by a thickness difference of a transparent base board is corrected by using a difference of diffracting function caused by a wavelength difference in the course of recording and/or reproducing for each optical information recording medium. In that case, the spherical aberration has only to be corrected so that a light flux with wavelength $\lambda 1$ may be converged on an information recording surface under the condition that wavefront aberration is $0.07 \lambda 1$ within image side numerical aperture NA1 for an optical information recording medium having transparent base board thickness of $t1$, and a light flux with wavelength $\lambda 2$ may be converged on an information recording surface under the condition that wavefront aberration is $0.07 \lambda 2$ within image side numerical aperture NA2 for an optical information recording medium having transparent base board thickness of $t2$. Further, since it is possible to make a spot converged on an information recording surface to be small by enhancing NA1 to 0.7 or more, stable recording and/or reproducing of information can be conducted for high density optical information recording medium and for conventional relatively low density optical information recording medium.

The structure (56) makes it possible to correct aberration finely and in detail, by making both surfaces to be aspheric surfaces.

When correcting axial chromatic aberration by one diffracted light of the same order for each of two areas each having a different wavelength, based on the function of the diffractive surface stated above, it is necessary to correct in a well-balanced way. Namely, axial chromatic aberration is generated on an objective lens greatly on an area of a short wavelength of 500 nm or less, compared with an area of a relatively long wavelength of 600 - 800 nm. Therefore, when the axial chromatic aberration is corrected almost completely on an area of a short wavelength of 500 nm or less, the axial chromatic aberration is overcorrected on the area of a long wavelength of 600 - 800 nm. On the contrary, when the axial chromatic aberration is corrected almost completely on the area of a long wavelength of 600 - 800 nm, the axial chromatic aberration is under corrected on the area of a short wavelength of 500 nm or less. In this case, when diffracting power of the diffractive surface is established for refracting power of a refracting lens and for Abbe number of an objective lens, so that conditional expression (24) may be satisfied as in (57), it is possible to correct axial chromatic aberration satisfactorily for each of the short wavelength area and the long wavelength area. On the lower limit of the conditional expression (24) or higher, axial chromatic aberration is not overcorrected in the long wavelength area, and on the upper limit or lower, axial chromatic aberration is not undercorrected in the short wavelength area.

The structure (58) is related to the preferable condition of Abbe number of a material for an objective lens, and when conditional expression (25) is satisfied, axial chromatic aberration caused by refracting action can be controlled to be small. Therefore, when chromatic aberration is corrected by the aforesaid diffractive structure for each of two areas each having a different wavelength, $2^{nd}$ order spectrum can be controlled to be small.

The structure (59) makes it possible to control generated wavelength fluctuations caused by mode hop phenomenon of a laser light source and deterioration of wavefront aberration for high frequency superposition to be small, if conditional expression (26) is satisfied by chromatic aberration of an objective lens.

On the objective lens capable of conducting recording and/or reproducing of information for a plurality of optical information recording media each having a different transparent base board thickness in the invention, a function of the diffractive structure provided on at least one surface of the objective lens corrects spherical aberration caused by a difference in a thickness of the transparent base board. In this case, it is preferable that the $2^{nd}$ order optical path difference function coefficient of the diffractive structure of the objective lens is selected so that conditional expression (27) in (60) may be satisfied, and axial chromatic aberration on the short wavelength area is corrected to the extent that the axial chromatic aberration of the objective lens is not corrected by the diffractive structure, or to the extent that the axial chromatic aberration caused on the objective lens in the long wavelength area is not overcorrected. Due to this, a burden for the diffractive structure to correct axial chromatic aberration is not great, therefore, load for the diffractive structure can be lightened, and it is easy to manufacture a diffracting lens having a great interval of ring-shaped zone, less number of ring-shaped zones and high diffraction efficiency.

The structure (61) makes it possible to obtain an objective lens that is fitted to an optical pickup device capable of recording or reproducing of information for a plurality of optical information recording media each having a different transparent base board thickness with a different wavelength of short wavelength ($\lambda$1) of 500 nm or less on one side. To be concrete, spherical aberration caused by a difference of a transparent base board thickness is corrected by using a difference of diffraction function caused by a difference of wavelength in the course of recording and/reproducing for each optical information recording medium. In that case, spherical aberration may be corrected so that a light flux having wavelength $\lambda$1 can be converged on an image forming surface of an optical information recording medium having transparent base board thickness t1 in the state of wavefront aberration 0.07 $\lambda$1 within image side numerical aperture NA1 and a light flux having wavelength $\lambda$2 can be converged on an image forming surface of an optical information recording medium having transparent base board thickness t2 in the state of wavefront aberration 0.07 $\lambda$2 within image side numerical aperture NA2, and further it is possible to make a spot converged on the image recording surface to be small by making $\lambda$1 to be 500 nm or less. Therefore, it is possible to conduct stable recording and/or reproducing of information for both a high density optical information recording medium and a conventional optical information recording medium which is of relatively low density.

The structure (62) makes it possible to correct aberration finely and in detail, by making both surfaces to be aspheric surfaces.

When diffracting power of the diffractive surface is established for refracting power of a refracting lens and for Abbe number of an objective lens, so that conditional expression (29) may be satisfied as in (63), it is possible to correct axial chromatic aberration satisfactorily for each of the short wavelength area and the long wavelength area. On the lower limit of the conditional expression (29) or higher, axial chromatic aberration is not overcorrected in the long wavelength area, and on the upper limit or lower, axial chromatic aberration is not undercorrected in the short wavelength area.

In the structure (64), when conditional expression (30) is satisfied, axial chromatic aberration caused by refracting action can be controlled to be small. Therefore, when chromatic aberration is corrected by the aforesaid diffractive structure for each of two areas each having a different wavelength, $2^{nd}$ order spectrum can be controlled to be small.

The structure (65) makes it possible to control generated wavelength fluctuations caused by mode hop phenomenon of a laser light source and deterioration of wavefront aberration for high frequency superposition to be small, if conditional expression (31) is satisfied by chromatic aberration of an objective lens.

On the objective lens capable of conducting recording and/or reproducing of information for a plurality of optical information recording media each having a different transparent base board thickness in the invention, a function of the diffractive structure provided on at least one surface of the objective lens corrects spherical aberration caused by a difference in a thickness of the transparent base board. In this case, it is preferable that the $2^{nd}$ order optical path difference function coefficient of the diffractive structure of the objective lens is selected so that conditional expression (32) in (66) may be satisfied, and axial chromatic aberration on the short wavelength area is corrected to the extent that the axial chromatic aberration of the objective lens is not corrected by the diffractive structure, or to the extent that the axial chromatic aberration caused on the objective lens in the long wavelength area is not overcorrected. Due to this, a burden for the diffractive structure to correct axial chromatic aberration is not great, therefore, load for the diffractive structure can be lightened, and it is easy to manufacture a diffracting lens having a great interval of ring-shaped zone, less number of ring-shaped zones and high diffraction efficiency.

In the structure (67), though it is effective to make the transparent base board thickness to be as small as 0.2 mm or less for controlling coma generated on an optical pickup device to be small, it is possible to conduct recording and reproducing for also the conventional optical information recording medium having a large transparent base board thickness with the same optical pickup device, by providing on an objective lens the diffractive surface having wavelength characteristics to form an excellent spot on the image recording surface, for a plurality of optical information recording media each having a different transparent base board thickness. Further, when correcting axial chromatic aberration by one diffracted light of the same order for each of two areas each having a different wavelength, based on the function of the diffractive surface stated above, it is necessary to correct in a well-balanced way. Namely, axial chromatic aberration is generated on an objective lens greatly on an area of a short wavelength of 500 nm or less, compared with an area of a relatively long wavelength of 600 - 800 nm. Therefore, when the axial chromatic aberration is corrected almost completely on an area of a short wavelength of 500 nm or less, the axial chromatic aberration is overcorrected on the area of a long wavelength of 600 - 800 nm. On the contrary, when the axial chromatic aberration is corrected almost completely on the area of a long wavelength of 600 - 800 nm, the axial chromatic aberration is undercorrected on the area of a short wavelength of 500 nm or less. In this case, when diffracting power of the diffractive surface is established for refracting power of a refracting lens and for Abbe number of an objective lens, so that conditional expression (33) may be satisfied, it is possible to correct axial chromatic aberration satisfactorily for each of the short wavelength area and the long wavelength area. On the lower limit of the conditional expression (33) or higher, axial chromatic aberration is not over-corrected in the long wavelength area, and on the upper limit or lower, axial chromatic aberration is not undercorrected in the short wavelength area.

In the structure (68), when conditional expression (34) is satisfied, axial chromatic aberration caused by refracting action can be controlled to be small. Therefore, when chromatic aberration is corrected by the aforesaid diffractive structure for each of two areas each having a different wavelength, $2^{nd}$ order spectrum can be controlled to be small.

The structure (69) makes it possible to control fluctuations of generated wavelength caused by mode hop phenomenon of a laser light source and deterioration of wavefront aberration for high frequency superposition to be small, if conditional expression (35) is satisfied by chromatic aberration of an objective lens.

As is shown in (70), in the objective lens for which spherical aberration is corrected satisfactorily for combination of wavelength $\lambda 1$, transparent base board thickness t1 and image side numerical aperture NA1, it is preferable that spherical aberration up to a range of numerical aperture NA2 necessary for combination of wavelength $\lambda 2$, transparent base board thickness t2 and image side numerical aperture NA2 is corrected by the action of the diffractive structure, and spherical aberration is generated greatly as a flare component for a range from numerical aperture NA2 to NA1. When a light flux having wavelength $\lambda 2$ is made to enter so that it passes through the entire aperture determined by wavelength $\lambda 1$ and numerical aperture NA1, it is possible to prevent detection of unnecessary signals at a light-receiving means of an optical pickup device because a spot diameter of a light flux for numerical aperture NA2 or more which does not contribute to image forming for a spot does not become too small on the image recording surface, and it is not necessary to provide a means for switching an aperture corresponding to each combination of each wavelength and numerical aperture, which contributes to realization of a simple optical pickup device. Further, it is more preferable that a light flux having wavelength $\lambda 2$ is made to be converged under the condition of wavefront aberration of 0.20 $\lambda 2$ or more within the NA1 for the optical information recording medium having the transparent base board thickness t2.

Conditional expression (36) in the structure (71) is related to a ring-shaped zone interval of the diffractive structure, namely to an interval of a ring-shaped zone in the direction perpendicular to an optical axis. It is preferable to use a high order optical path difference function coefficient of the optical path difference function, because a difference of spherical aberration caused by a difference of a transparent base board thickness is corrected satisfactorily by the effect of the diffraction in the invention, although (Ph/Pf) - 2 = 0 holds if the optical path difference function has no more than $2^{nd}$ order optical path difference function coefficient (which is also called a diffraction surface coefficient). In this case, it is preferable that (Ph/Pf- 2) takes a value that is away from zero to a certain extent, and a function of diffraction to correct high order spherical aberration that is at the lower limit or more of conditional expression (36) becomes strong, thus, it is possible to correct satisfactorily a difference of spherical aberration between two wavelengths caused by a difference of transparent base board thickness. An interval of ring-shaped zones of the diffractive structure does not become too small at the upper limit or lower, and a diffracting lens having high diffraction efficiency can be manufactured easily.

As in (72), an objective lens can be produced on a mass production basis to be of low cost when it is made of plastic material. Further, a diffractive structure can be provided easily. It is further possible to lighten a load for the focusing mechanism because the objective lens is light in weight. As a plastic material, polyolefin resin is preferable, because its Abbe number is great, the transmittance at a wavelength of 500 nm or less is great, the double refraction is small and the coefficient of water absorption is small. In particular, norbornane resin of a polyolefin type is preferable.

When materials are selected as in (74), refractive index distribution is hardly generated by a difference of the coefficient of water absorption in the lens in the course for the objective lens to absorb water in the air, and the aberration caused by that can be made small. When NA is great, in particular, generation of aberration tends to be great, which, however, can be made small, if the aforesaid action is taken.

When the material whose internal transmittance for material thickness of 3 mm within a range of wavelength used is 85% or more is used as in (75), intensity of recording light can be obtained sufficiently even when the wavelength used is made to be a short wavelength of 500 nm or less, and an amount of light entering the sensor can be obtained sufficiently, even when light passes the objective lens for a forward and backward in the course of reading, and the S/N ratio of reading signals can be improved. Further, when the wavelength to be used comes to 500 nm or less, especially, to about 400 nm, deterioration of lens material caused by absorption cannot be ignored, but if the material that satisfies the condition stated above is used for the objective lens, an influence for the deterioration turns out to be small, and the objective lens can be used on a semipermanent basis.

In the structure (76), with respect to the balance between $3^{rd}$ order component and high order component of $5^{th}$ order or higher in spherical aberration generated in an objective lens when a thickness at the center of the objective lens has an error for the design basis value, an amount of spherical aberration generated tends to be great even for a small error of the thickness at the center, in the case of high NA objective lens, thus, the allowable error of the thickness at the center is as very small as several $\mu$m. However, in the case of a molded lens, it is difficult to make an error of the thickness at the center to be several $\mu$m or less constantly. On the light-converging optical system of the invention, on the other hand, it is possible to correct $3^{rd}$ order spherical aberration component among spherical aberration generated in the light-converging optical system, by moving the coupling lens in the direction of an optical axis and thereby by changing a divergence angle of a light flux entering the objective lens. Therefore, if conditional expression (43) is satisfied by spherical aberration of the objective lens, it is possible to remove $3^{rd}$ order spherical aberration component and thereby to control an amount of residual spherical aberration of the total light-converging optical system to be small, by moving the coupling lens in the direction of an optical axis by an appropriate amount, even when the thickness at the center of the objective lens has a minute error against the design basis value.

The structure (77) is related to a light-converging optical system capable of conducting recording or reproducing of information under a different wavelength for an optional optical information recording medium having a different transparent base board thickness wherein fluctuations of spherical aberration caused on an objective lens and fluctuations of spherical aberration caused on each optical surface of the light-converging optical system including a coupling lens and the objective lens are corrected satisfactorily, and fluctuations of spherical aberration caused on each optical surface of the light-converging optical system can be corrected by making the coupling lens to be movable in the direction of an optical axis. Namely, when spherical aberration of the light-converging optical system is varied toward the over or under side, the coupling lens is moved in the direction of an optical axis by an appropriate amount to change a divergence angle of a light flux entering the objective lens. Due to this, it is possible to generate spherical aberration having polarity opposite to that of spherical aberration generated on the total light-converging optical system for wavefront transmitted through the objective lens. As a result, the wavefront in the case of focusing results in the state where the spherical aberration has been canceled, and the total light-converging optical system can be corrected in terms of spherical aberration satisfactorily. Further, spherical aberration caused by a difference of a transparent base board thickness is corrected by using a difference of diffraction function caused by a difference of wavelength in the course of recording and/or reproducing for each optical information recording medium. In that case, if spherical aberration is corrected so that a light flux having wavelength $\lambda1$ can be converged on an image forming surface of an optical information recording medium having transparent base board thickness t1 in the state of wavefront aberration 0.07 $\lambda1$ within image side numerical aperture NA1 and a light flux having wavelength $\lambda2$ can be converged on an image forming surface of an optical information recording medium having transparent base board thickness t2 in the state of wavefront aberration 0.07 $\lambda2$ within image side numerical aperture NA2, it is possible to conduct stable recording and/or reproducing of information for both a higher density optical information recording medium and a conventional optical information recording medium which is of relatively low density. This diffractive structure may either be provided on an objective lens or be provided on a coupling lens. In addition, the diffractive structure may be provided on an optical element other than the objective lens and the coupling lens in the light-converging optical system, or it may be provided on some optical surfaces in the light-converging optical system. Further, if the light flux having wavelength $\lambda2$ is made to enter the objective lens on a divergent light basis, it is possible to secure a large working distance for recording and reproducing for an information recording medium having, for example, a transparent base board whose thickness t2 is 0.6 mm.

As is shown in (78), in the light-converging optical system for which spherical aberration is corrected satisfactorily for combination of wavelength $\lambda1$, transparent base board thickness t1 and image side numerical aperture NA1, it is preferable that spherical aberration up to a range of numerical aperture NA2 necessary for combination of wavelength $\lambda2$, transparent base board thickness t2 and image side numerical aperture NA2 is corrected by the action of the diffractive structure, and spherical aberration is generated greatly as a flare component for a range from numerical aperture NA2 to NA1. When a light flux having wavelength $\lambda2$ is made to enter so that it passes through the entire aperture determined by wavelength $\lambda1$ and numerical aperture NA1, it is possible to prevent detection of unnecessary signals at a light-receiving means of an optical pickup device because a spot diameter of a light flux for numerical aperture NA2 or more which does not contribute to image forming for a spot does not become too small on the image recording surface, and it is not necessary to provide a means for switching an aperture corresponding to each combination of each wavelength and numerical aperture, which contributes to realization of a simple optical pickup device. Further, it is more preferable that a light flux having wavelength $\lambda2$ is made to be converged under the condition of wavefront aberration of 0.20 $\lambda2$ or more within the NA1 for the optical information recording medium having the transparent base board thickness t2.

In the structure (79), chromatic aberration caused on an objective lens can be corrected by the diffractive structure of the light-converging optical system. It is preferable that this diffractive structure corrects also axial chromatic aberration generated on an optical element other than the objective lens in the light-converging optical system in addition to axial chromatic aberration generated on the objective lens. The chromatic aberration can further be corrected by a coupling lens, as in (80). This coupling lens is of a simple structure of one-group two-element wherein a positive lens having a relatively large Abbe number and a negative lens having a relatively small Abbe number are cemented as in (81), and it can correct axial chromatic aberration generated on the objective lens. Owing to the arrangement that the diffractive structure is provided on the coupling lens as in (82), especially that the diffractive structure is provided on the plastic aspherical lens, chromatic aberration can be corrected by a single lens which is of a simple structure. It is preferable that the function of the coupling lens to correct chromatic aberration can correct also axial chromatic aberration generated on an optical element other than an objective lens in the light-converging optical system in addition to axial chromatic aberration generated on an objective lens.

The structure (83) is related to axial chromatic aberration for each of a long wavelength area and a short wavelength area on the composite system of a coupling lens and an objective lens, and as long as conditional expression (44) is satisfied, it is possible to control fluctuations of wavefront aberration for fluctuations of generated wavelength and high frequency superposition caused by mode hop phenomenon of a laser light source to be small.

The structure (86) makes it possible to correct spherical aberration satisfactorily as a total light-converging optical system when recording or reproducing two types of optical information recording media each having a different transparent base board thickness.

In the structure (87), when a generated wavelength of a semiconductor laser representing a light source is changed from the standard wavelength, there is generated over or under spherical aberration on the light-converging optical system. However, it is possible to change a divergence angle of a light flux entering the objective lens by moving a coupling lens in the direction of an optical axis by an appropriate amount and thereby to cancel fluctuations of the spherical aberration caused on the light-converging optical system.

In the structure (88), when temperature or humidity is changed, and over or under spherical aberration is caused on the light-converging optical system by the temperature or humidity change, it is possible to change a divergence angle of a light flux entering an objective lens by moving a coupling lens in the direction of an optical axis by an appropriate amount and thereby to cancel fluctuations of the spherical aberration caused on the light-converging optical system.

The structure (89) is related to correction of spherical aberration that is caused on a light-converging optical system by errors of a thickness of a protective layer (transparent base board) of an optical information recording medium, and when the protective layer has an error in the direction to become thicker, over spherical aberration is caused on the light-converging optical system, while, when the protective layer has an error in the direction to become thinner, under spherical aberration is caused. In this case, a divergence angle of a light flux entering an objective lens is changed by moving a coupling lens in the direction of an optical axis by an appropriate amount. Due to this, fluctuations of the spherical aberration caused on the light-converging optical system can be canceled.

The structure (90) is related to correction of spherical aberration that is caused on a light-converging optical system by a combination of at least two of minute fluctuation of a generated wavelength of a laser, temperature and humidity changes and minute variation in a thickness of a protective layer of an optical information recording medium. Even in this case, a divergence angle of a light flux entering an objective lens is changed by moving a coupling lens in the direction of an optical axis by an appropriate amount. Due to this, fluctuations of the spherical aberration caused on the light-converging optical system can be canceled.

In the structure (91), when a coupling lens is moved in the direction of an optical axis in a way to increase a distance between an objective lens and the coupling lens, more divergent light enters the objective lens compared with an occasion where the coupling lens has not been moved. It is therefore possible to generate under spherical aberration on the objective lens. Therefore, when over spherical aberration is generated on a light-converging optical system by the aforesaid causes, if a coupling lens is moved by an appropriate amount and a distance between the coupling lens and an objective lens is increased, over spherical aberration generated can be canceled exactly. On the contrary, if a coupling lens is moved in the direction of an optical axis in a way to decrease a distance between an objective lens and the coupling lens, more convergent light enters the objective lens compared with an occasion where the coupling lens has not been moved. It is therefore possible to generate over spherical aberration on the objective lens. Therefore, when under spherical aberration is generated on a light-converging optical system by the aforesaid causes, if a coupling lens is moved by an appropriate amount and a distance between the coupling lens and an objective lens is decreased, under spherical aberration generated can be canceled exactly.

The structure (92) is related to an optical pickup device capable of correcting satisfactorily fluctuations of axial chromatic aberration caused on an objective lens and fluctuations of spherical aberration caused on each optical surface of a light-converging optical system including a coupling lens and an objective lens, in which, spherical aberration caused on each optical surface of the light-converging optical system can be corrected when the coupling lens is moved by a second driving device in the direction of an optical axis. Namely, when spherical aberration of the light-converging optical system is varied to the over side or under side, a divergence angle of a light flux entering the objective lens is changed by moving the coupling lens by an appropriate amount in the direction of an optical axis. Due to this, it is possible to generate spherical aberration having polarity which is opposite to that of spherical aberration generated on the total light-converging optical system, on wavefront that passes through the objective lens. As a result, the wavefront in the case of focusing develops into the state where spherical aberration is canceled, and thereby, spherical aberration on the total light-converging optical system can be corrected satisfactorily. Further, spherical aberration caused by a difference of a transparent base board thickness is corrected by the diffractive structure provided in the light-converging optical system, by using a difference of diffraction action caused by a difference of wavelength in the course of recording and/or reproducing for a plurality of optical information recording media each having a different transparent base board thickness. Further, axial chromatic aberration caused on the light-converging optical system can be corrected satisfactorily by the diffractive structure provided in the light-converging optical system and/or the coupling lens. Due to this, it is possible to record and reproduce optical information recording media in plural types each having a different transparent base board thickness with a different wavelength on the same optical pickup device. Though a second driving device moves the coupling lens in the direction of an optical axis, the coupling lens is moved so that spherical aberration caused on the light-converging optical system may be corrected on an optimum basis, while monitoring RF amplitude of reproduction signals in the actual optical pickup device. As the second driving device, it is possible to use an actuator of a voice coil type and a piezo-actuator.

In the structure (93), the aforesaid optical pickup device is housed in each of a recording device and a reproducing device both for a sound and an image, and therefore, excellent recording or reproducing of a sound and an image can be conducted with a different wavelength for an optional optical information recording medium having a different transparent base board thickness.

Incidentally, in the present invention, the first surface of an objective lens is a optical surface of the objective lens at an light source side and the second surface is an optical surface of the objective lens at an optical information recording medium side.

(2-1) To attain the objects stated above, a coupling lens of the invention is one which changes a divergence angle of a divergent light emitted from the light source to make the divergent light to enter an objective lens, and at least one surface of the coupling lens is made to be a diffractive surface having thereon a diffractive structure in a shape of a ring-shaped zone, and the coupling lens is overcorrected in terms of axial chromatic aberration so that a focal length may be long for a wavelength that is shorter than the standard wavelength of the light source by 10 nm, and the following expression is satisfied;

$$0.05 \leqq NA \leqq 0.50 \qquad\qquad (1)$$

wherein, NA represents a numerical aperture of the coupling lens.

Incidentally, numerical aperture $NA_{COL}$ of the coupling lens can be defined by $NA_{COL} = \sin \theta$, when $\theta$ represents the maximum inclination angle among light fluxes emitted from the light source, and it is in the following relationship with numerical aperture $NA_{OBJ}$ of the objective on the image side;

$$NA_{COL} = NA_{OBJ} \times (f1/f2)$$

wherein f1 represents a focal length (mm) of the objective lens, and f2 represents a focal length (mm) of the coupling lens.

In the coupling lens mentioned above, a coupling lens that changes a divergence angle of a divergent light to make the divergent light to enter an objective lens in the course of recording and/or reproducing for optical information recording media is made to be a diffracting lens wherein axial chromatic aberration caused by wavelength fluctuation of about 10 nm is corrected by diffraction effect of the diffractive structure in a ring-shaped zone form provided on at least one surface, and thereby, it is possible to obtain a coupling lens that can cancel and correct axial chromatic aberration caused on other optical element such as an objective lens. Since a degree of divergence of the light emitted from the light source and enters the coupling lens is small, a refracting power of the coupling lens can be smaller that that of the objective lens in general, and required accuracy for manufacturing is not so severe as in the objective lens, and restriction for the working distance is less. Therefore, there is room for correction of the aberration. If an arrangement is made to correct axial chromatic aberration with a coupling lens, even an objective lens which is not corrected severely in terms of axial chromatic aberration can be used as an objective lens of a light-converging optical system for high density optical information recording and reproducing wherein an influence by wavelength fluctuations on image forming power is remarkable, if that objective lens is used in combination with that coupling lens. In this case, it is preferable that the numerical aperture of the coupling lens satisfies expression (1). If the lower limit is not exceeded in expression (1), a focal length of the coupling lens is not too large, and thereby, the total length of the combined system with the objective lens is not too large, thus, it is possible to make the light-converging system to be compact. If the upper limit is not exceeded, the numerical aperture of the coupling lens is not too large, and aberration generated on the coupling lens can be controlled to be small.

(2-2) In the coupling lens stated above, it is preferable that the following expression is satisfied;

$$0.3 < P_D/P_{TOTAL} < 3.0 \qquad (2)$$

where $P_D$: a power ($\text{mm}^{-1}$) of only a diffractive structure defined by the following Numerical Formula 3 when the diffractive surface is named the first diffractive surface, the second diffractive surface, ... the n-th diffractive surface in the order from the light source side and an optical path difference added to a transmitting wave surface by the diffractive structure formed on the i-th diffractive surface is expressed by an optical path difference function defined by $\Phi_{bi} = n_i \cdot (b_{2i} \cdot h^2 + b_{4i} \cdot h^4 + b_{6i} \cdot h^6 + ... )$ (herein, $n_i$ is the diffraction order number of the diffracted ray having the maximum amount among diffracted rays generated at the diffractive structure formed on the i-th diffractive surface, $h_i$ is a height (mm) from the optical axis, $b_{2i}$, $b_{4i}$, $b_{6i}$, ..., are respectively coefficients of optical path difference function of second order, fourth order, sixth order, ... ), and

[Numerical Formula 3]

$$P_D = \sum_{i=1}^{N} (-2 \cdot ni \cdot b_{2i})$$

$P_{Total}$ : a power ($\text{mm}^{-1}$) of the total system of the objective lens in which the refractive lens and the diffractive structure are combined.

When a diffractive structure of the coupling lens is determined in a way that expression (2) is satisfied by the diffractive structure alone as stated above, it is possible to cancel and correct satisfactorily axial chromatic aberration generated on other optical element such as an objective lens with axial chromatic aberration generated on the coupling lens. When the lower limit of the expression (2) is not exceeded, axial chromatic aberration of a wavefront generated when a spot is formed on an information recording surface of an optical information recording medium through the coupling lens and the objective lens is not under-corrected excessively, and when the upper limit is not exceeded, axial chromatic aberration of a wavefront generated when a spot is formed on an information recording surface of an optical information recording medium through the coupling lens and the objective lens is not overcorrected excessively. (2-3) Further, it is preferable that the following expression is satisfied under the assumption that $\lambda$ (mm) represents the standard wavelength, f (mm) represents a focal length under the standard wavelength, ni represents the order number of a diffracted light having the maximum amount of diffracted light among diffracted light generated by the diffractive structure formed on the $i^{th}$ surface, Mi represents the number of ring-shaped zones of the diffractive structure within an effective diameter of the $i^{th}$ surface and Pi (mm) represents the minimum value of an interval of ring-shaped zones of the diffractive structure within an effective diameter of the $i^{th}$ surface.

$$0.1 \leqq f \cdot \lambda \cdot \sum_{i=1}^{N} (ni/(Mi \cdot Pi^2)) \leqq 3.0 \qquad (3)$$

When a diffractive structure of the coupling lens is determined in a way that expression (3) is satisfied, it is possible to cancel and correct satisfactorily axial chromatic aberration generated on other optical element such as an objective lens with axial chromatic aberration generated on the coupling lens. When the lower limit of the expression (3) is not exceeded, axial chromatic aberration of a wavefront generated when a spot is formed on an information recording surface of an optical information recording medium through the coupling lens and the objective lens is not under-corrected excessively, and when the upper limit is not exceeded, axial chromatic aberration of a wavefront generated when a spot is formed on an information recording surface of an optical information recording medium through the coupling lens and the objective lens is not overcorrected excessively. (2-4) Further, it is preferable that the following expression is satisfied under the assumption that $\lambda$ (mm) represents the standard wavelength, $\Delta\lambda$ (mm) represents a minute change of wavelength from the standard wavelength and $\Delta f$ (mm) represents a change of focal length in the case of a change from the standard wavelength by $\Delta\lambda$ (mm).

$$-0.12 \leqq (\Delta f/f) \cdot NA \cdot (\lambda/\Delta\lambda) \leqq -0.01 \qquad (4)$$

It is preferable that the expression (4) is satisfied by an amount of change of a focal length of a coupling lens for a minute wavelength change of about 10 nm as state above. When the lower limit is not exceeded in the expression (4), when the lower limit of the expression (3) is not exceeded, axial chromatic aberration of a wavefront generated when a spot is formed on an information recording surface of an optical information recording medium through the coupling lens and the objective lens is not under-corrected.

(2-5) When two or more surfaces of the coupling lens are made to be diffractive surfaces each having a diffractive structure in a shape of ring-shaped zone, it is possible to make an interval of diffractive ring-shaped zones to be large by allocating diffracting power on two or more surfaces, which makes a coupling lens having high diffraction efficiency to be manufactured easily.

(2-6) When an amount of step in the direction of an optical axis on the ring-shaped zonal structure on at least one diffractive surface among diffractive surfaces of the coupling lens is determined so that high order diffracted light in the $n^{th}$ order may have the maximum amount of diffracted light under the assumption that n represents integers other than 0 and $\pm 1$ (hereinafter, the diffractive surface whose ring-shaped zonal structure has been decided as stated above is called "high order diffractive surface"), it is possible to relax the minimum value of the interval of ring-shaped zones, compared with an occasion of using $\pm$ first order diffracted light, and thereby to make an influence of a decline of diffraction efficiency caused by errors in shapes of the ring-shaped zonal structures to be small. In this case, it is possible either to make all diffractive surfaces formed on the coupling lens to be a high order diffractive surface or to make only the diffractive surface wherein a minimum value of an interval of ring-shaped zones in the case of using $\pm$ first order diffracted light is especially small to be a high order diffractive surface. Further, it is also possible to arrange so that a value of the number of order for diffraction that makes an amount of diffracted light to be maximum may be different for each diffractive surface.

When amount of step $\Delta$ (mm) of a diffractive ring-shaped zone in the direction of an optical axis is determined so that an amount of $n^{th}$ order diffracted light may be greater than that of diffracted light of any other order under the assumption that n represents integers, the following expression holds with respect to the amount of step $\Delta$ when $\lambda_0$ represents wavelength (mm) of light generated by the light source and N represents a refractive index of the objective index for wavelength $\lambda_0$.

$$\Delta \fallingdotseq n \cdot \lambda_0 / (N - 1)$$

(2-7) Further, with respect to the coupling lens stated above, it is preferable from a viewpoint of the following points that one surface including at least one surface that is closest to the light source is made to be a diffractive surface having a ring-shaped zonal diffractive structure. Namely, in design of the coupling lens, it is necessary to consider so that marginal light in incident light may not enter the surface closest to the light source vertically for preventing that the photo-detector detects unnecessary signals when reflected light on the surface closest to the light source enters a light-receiving surface of the photo-detector. However, if the surface closest to the light source is made to be a diffractive surface having the diffractive ring-shaped zonal structure wherein the amount of step in the direction of an optical axis is optimized so that intensity of the $n^{th}$ order diffracted light may be greater than that of diffracted light of any other order under the assumption that n represents integers,

an angle of incidence of marginal light in incident light on the surface closest to the light source is different in terms of an absolute value from an angle of reflection of marginal light of the aforesaid $m^{th}$ order reflected and diffracted light, because the reflected light on the surface closest to the light source is a diffracted light that is diffracted by the diffractive structure, and the diffracted light having the greatest intensity among them is the $m^{th}$ order diffracted light under the assumption that m represents integers other than n. Therefore, the reflected light on the surface closest to the light source does not form a spot on the light-receiving surface of the photo-detector even when marginal light in incident light enters almost vertically, and therefore, an angle of incidence of the marginal light in incident light on the surface closest to the light source can be selected freely, resulting in achievement of a highly efficient coupling lens wherein spherical aberration and coma are corrected finely in detail.

(2-8) It is further preferable that at least one surface is made to be an aspheric surface, and the following expression is satisfied.

$$0.10 \leqq NA \leqq 0.50 \qquad\qquad (5)$$

When the numerical aperture of the coupling lens is 0.10 or more, it is preferable that at least one surface is made to be an aspheric surface. Due to this, aberration generated on the coupling lens can be corrected satisfactorily.
(2-9) By forming the coupling lens with plastic materials, it is possible to provide a diffractive structure and an aspheric surface easily, and to possible to manufacture at low cost and on a mass production basis. As a manufacturing method, an injection molding method employing a metal mold is preferable. When forming a coupling lens with plastic material, it is preferable that the coupling lens is made of a material whose internal transmittance at a thickness of 3 mm in the area of wavelength used is 85% or more, and it is preferable that the coupling lens is made of a material whose saturation coefficient of water absorption is 0.5% or less. Incidentally, as a plastic material, polyolefin resin is preferable, and norbornane resin of a polyolefin type is more preferable.
(2-10)Further, a light-converging optical system of the invention is one for recording and/or reproducing for an optical information recording medium having therein a light source emitting light with wavelength of 600 nm or less, a coupling lens that changes an angle of divergence of a divergent light emitted from the light source, and an objective lens that converges a light flux passing through the coupling lens on an information recording surface of an optical information recording medium, wherein the coupling lens is one stated above, and axial chromatic aberration caused on the objective lens by a wavelength change of $\pm 10$
nm or less made by the light source and axial chromatic aberration caused by the diffractive structure of the coupling lens cancel each other.

Though the light-converging optical system makes it possible to reproduce information recorded at higher density than conventional optical information recording medium and/or information recorded on high density basis for an optical information recording medium by using a light source emitting generated wavelength of 600 nm or less, axial chromatic aberration generated on the light-converging optical system, especially, axial chromatic aberration generated on the objective lens is a problem as stated above. By generating the axial chromatic aberration having the polarity opposite to that of axial chromatic aberration generated on the objective lens, with the diffractive structure provided on the coupling lens, the wavefront in the case of forming a spot on an information recording surface of an optical information recording medium through the light-converging optical system is in the state wherein axial aberration is canceled, and it is possible to make the total light-converging optical system to be the system wherein the axial chromatic aberration is corrected satisfactorily within a range of wavelength fluctuations of the light source.
(2-11)When an objective lens which has an image side numerical aperture of 0.7 or more and is made of optical material having Abbe number of 65 or less is used on an optical pickup device employing a light source for a short wavelength of 600 nm or less, there is a risk that axial chromatic aberration is caused on an objective lens relatively greatly, and stable recording and/or reproducing of information cannot be performed accordingly. However, since axial chromatic aberration having the polarity opposite to that of axial chromatic aberration generated on the objective lens is made to be caused on the coupling lens, even an objective lens on which the axial chromatic aberration is not corrected severely can be applied to an optical pickup device employing a light source for a short wavelength of 600 nm or less, if the objective lens is used in combination with the coupling lens of the invention.
(2-12)It is preferable that the compound system wherein the objective lens and the coupling lens are combined has axial chromatic aberration characteristics that a back focus is changed in the direction to be shorter when a wavelength of the light source is shifted to the longer wavelength side, and the following expression is satisfied under the assumption that an amount of change of spherical aberration of marginal light for a change in wavelength is represented by $\Delta SA$ and an amount of change in axial chromatic aberration is represented by $\Delta CA$.

$$-1 < \Delta CA / \Delta SA < 0 \qquad\qquad (6)$$

It is preferable that the compound system wherein the objective lens and the coupling lens on which the axial chromatic aberration is over corrected are combined has axial chromatic aberration characteristics that a back focus is changed in the direction to be shorter when a wavelength of the light source is shifted to the longer wavelength side, and expression (6) is satisfied, and thereby, the axial chromatic aberration of the compound system is overcorrected by the function of the diffractive structure on the coupling lens so that a spherical aberration curve for the standard wavelength and that for the short wavelength side are crossed each other. Due to this, it is possible to control shifting of the optimum writing position caused by shifting of wavelength of the light source to be small, and thereby to realize a compound system wherein deterioration of wavefront aberration caused by a mode hop phenomenon and high frequency superposition is small.

Further, when a spherical aberration curve for the standard wavelength and that for the short wavelength side are crossed each other by overcorrecting axial chromatic aberration of the compound system without correcting spherical aberrations on the long and short wavelength sides as stated above, rather than by correcting the spherical aberration curves on the long and short wavelength sides to be in parallel with the spherical aberration curve for the standard wavelength by diffracting actions of the coupling lens, and by correcting axial chromatic aberration of the compound system completely, diffracting power necessary for aberration correction can be less, and therefore, an interval of ring-shaped zones can be made large and the number of the ring-shaped zones can be made less, thus, reduction of time for machining a metal mold and improvement of diffraction efficiency can be attained. Though there is an individual difference of about $\pm 10$ nm in generated wavelength for a laser light source, when a laser light source wherein generated wavelength is shifted from the standard wavelength is used as a light source for the compound system in which spherical aberration is corrected so that a spherical aberration curve for the standard wavelength and spherical aberration curves for the long and short wavelength sides may be crossed each other as stated above, it is not necessary to select a laser light source for an optical pickup device carrying the compound system, because it is possible to correct spherical aberration at the wavelength by moving the coupling lens in the direction of an optical axis and thereby changing a degree of divergence of the light flux entering the objective lens.

(2-13)Under the assumption that $\Delta$fB ($\mu$m) represents a change of a focus position of the compound system wherein the coupling lens in the case of a change of the wavelength of the light source by +10 nm and the objective lens are combined, and $NA_{OBJ}$ represents the prescribed image-side numerical aperture of the objective lens that is necessary for recording or reproducing the optical information recording medium, it is preferable that the following expression is satisfied by axial chromatic aberration of the compound system.

$$\left| \Delta fB \cdot (NA_{OBJ})^2 \right| \leqq 2.5 \ \mu m \qquad\qquad (7)$$

As stated above, it is preferable that expression (7) is satisfied by axial chromatic aberration of a light-converging optical system, namely, by axial chromatic aberration of the compound system including the coupling lens and the objective lens.

The coupling lens of the invention can be any of a collimating lens that transforms an incident divergent light into a collimated light that is substantially in parallel with an optical axis, a coupling lens that transforms an incident divergent light into a divergent light whose angle of divergence is smaller, and a coupling lens that transforms an incident divergent light into a converged light.

(2-14)Further, an optical pickup device of the invention is one having therein a light source, a coupling lens that changes an angle of divergence of a divergent light emitted from the light source and a light-converging optical system including an objective lens that converges a light flux having passed through the coupling lens on an information recording surface of an optical information recording medium, wherein a reflected light from the information recording surface is detected to conduct recording and/or reproducing of information for the optical information recording medium, and the light-converging optical system described earlier is the light-converging optical system stated above.

This optical pickup device relates to one for conducting recording and/or reproducing for an advanced optical information recording medium whose density and capacity are respectively higher and larger than those of DVD. By carrying a light-converging optical system corrected satisfactorily in terms of axial chromatic aberration as stated above, stable recording or reproducing of information can be conducted even when a light source emitting a generated wavelength of not more than 600 nm.

(2-15)Being equipped with the aforesaid optical pickup device, a recording apparatus and a reproducing apparatus of the invention for both sounds and images can conduct recording or reproducing of sounds and images satisfactorily for an advanced optical information recording medium whose density and capacity are respectively higher and larger than those of DVD.

(2-16)For solving the problems of prior art in a diffractive optical element used in an optical pickup device stated above, the inventors of the invention have proposed a form for an optical element wherein an optical surface on one side is made to be flat, while an optical surface on the other side is made to be a spherical surface or an aspheric surface, and a diffractive structure in a shape of a ring-shaped zone is formed on the optical surface which is made to be flat.

(2-17)Namely, since the diffractive structure is provided on the flat surface of the optical element, it is possible to use an electron beam drafting method relatively easily for forming a diffractive structure. Further, when making the optical element through the molding method employing a metal mold, the electron beam drafting method can also be used relatively easily for forming a diffractive structure of the metal mold, because an optical surface of the metal mold corresponding to the aforesaid flat surface side is naturally in a flat shape.

Further, in the optical element mentioned above, highly accurate forming of a ring-shaped zone structure can be formed through an electron beam drafting method, by satisfying the following expression (8), preferably the expression (9) when λ (mm) represents a wavelength used and $P_1$ (mm) represents the minimum value of an interval of ring-shaped zones in an effective diameter of the diffractive structure formed on the flat surface stated above, and by providing on the flat optical surface a diffractive surface on which a cycle of a diffractive structure is small.

$$P_1/\lambda \ < \ 30 \qquad\qquad (8)$$

(2-19)

$$P_1/\lambda \ < \ 20 \qquad\qquad (9)$$

(2-20)Further, by making the optical surface on the other side that is a spherical surface and/or an aspheric surface to be a refracting surface, it is possible to correct aberration in detail by combining diffraction effect and refraction effect appropriately.

(2-21)By providing a diffractive structure in a shape of ring-shaped zones on the optical surface represented by a spherical surface and/or an aspheric surface, it is also possible to make both surfaces to be a diffracting surface. When both surfaces are made to be a diffracting surface, the diffracting surface has room for an aberration correction function, and an optical element of the invention can be utilized as an aberration correction element which is more efficient.

(2-22)When providing a diffractive structure in a shape of ring-shaped zones on the optical surface represented by a spherical surface and/or an aspheric surface, if the diffractive structure is constructed to satisfy the following expression (10), it is possible to employ metal mold machining by SPDT (diamond ultraprecise cutting technology) which is a conventional technology for creating the diffractive structure.

$$P_2/\lambda \ > \ 20 \qquad\qquad (10)$$

Further, it is possible to make a coupling lens constructed with the optical element stated above.

Incidentally, in the invention, the diffractive surface means a surface wherein a relief is provided on the face of an optical element, for example, on the face of a lens so that a function to diffract an incident light flux is given to the surface, and when the same optical surface has thereon an area generating diffraction and an area generating no diffraction, the diffractive surface means the area generating diffraction. AS a form of the relief, there is known a form wherein ring-shaped zones in a shape of circles which are almost concentric on the optical axis serving as a center are formed on the face of an optical element, for example, and each ring-shaped zone looks like serration (blazed structure) or steps when its section is viewed in a plane including the optical axis.

In the invention, the first surface of an objective lens means an optical surface of an objective lens on the light source side, and the second surface of an objective lens means an optical surface of an objective lens on the optical information recording medium side.

In the invention, an optical information recording medium includes, for example, various types of CDs such as CD, CD-R, CD-RW, CD-Video and CD-ROM, various type of DVD such as DVD, DVD-ROM, DVD-RAM, DVD-R, DVD-RW and DVD+RW, or, a current disk-shaped optical information recording medium such as MD, and an advanced high density recording medium.

Further, in the invention, recording and reproducing of information mean recording of information on an information recording surface of the optical information recording medium stated above, and reproducing information recorded on an information recording surface. A light-converging optical system of the invention may either be one used for only recording or only reproducing, or be one used for both recording and reproducing. Further, the light-converging optical system may be either one used to record for a certain optical information recording medium and to reproduce for another optical information recording medium, or one used for conducting recording or reproducing for a certain optical information recording medium and used for recording and reproducing for another optical information recording medium. Incidentally, reproducing in this case also includes just reading of information.

The optical pickup device of the invention can be equipped on an apparatus of recording and/or reproducing for sound and/or image such as a player or a drive that is compatible with optical information recording media such as, for example, CD, CD-R, CD-RW, CD-Video, CD-ROM, DVD, DVD-ROM, DVD-RAM, DVD-R, DVD-RW, DVD+RW and MD, or audio-visual equipment in which the player and the drive are incorporated, a personal computer and other information terminals.

**BRIEF DESCRIPTION OF THE DRWINGS**

Fig. 1 shows an optical path diagram relating to Example 1.
Fig. 2 shows a spherical aberration diagram relating to Example 1.

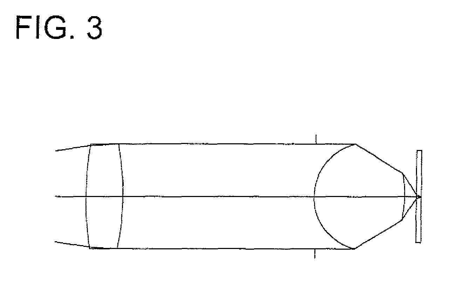

Fig. 3 shows an optical path diagram relating to Example 2.

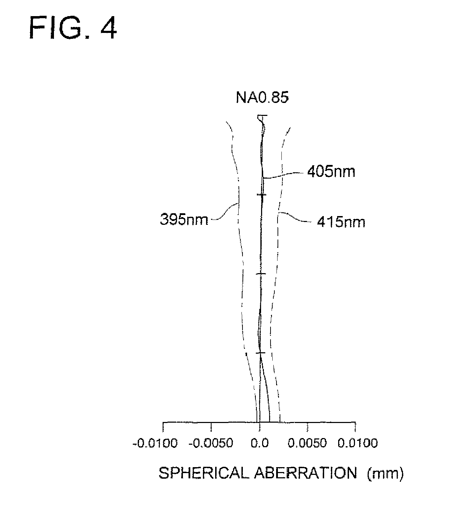

Fig. 4 shows a spherical aberration diagram relating to Example 2.
Fig. 5 shows an optical path diagram (transparent base board thickness 0.1 mm) relating to Example 3.
Fig. 6 shows an optical path diagram (transparent base board thickness 0.6 mm) relating to Example 3.
Fig. 7 shows a spherical aberration diagram (transparent base board thickness 0.1 mm) relating to Example 3.
Fig. 8 shows a spherical aberration diagram (transparent base board thickness 0.6 mm) relating to Example 3.
Fig. 9 shows an optical path diagram (transparent base board thickness 0.1 mm) relating to Example 4.
Fig. 10 shows an optical path diagram (transparent base board thickness 0.6 mm) relating to Example 4.
Fig. 11 shows a spherical aberration diagram (transparent base board thickness 0.1 mm) relating to Example 4.
Fig. 12 shows a spherical aberration diagram (transparent base board thickness 0.6 mm) relating to Example 4.
Fig. 13 shows an optical path diagram (transparent base board thickness 0.1 mm) relating to Example 5.
Fig. 14 shows an optical path diagram (transparent base board thickness 0.6 mm) relating to Example 5.
Fig. 15 shows a spherical aberration diagram (transparent base board thickness 0.1 mm) relating to Example 5.
Fig. 16 shows a spherical aberration diagram (transparent base board thickness 0.6 mm) relating to Example 5.
Fig. 17 shows an optical path diagram (transparent base board thickness 0.1 mm) relating to Example 6.
Fig. 18 shows an optical path diagram (transparent base board thickness 0.6 mm) relating to Example 6.
Fig. 19 shows a spherical aberration diagram (transparent base board thickness 0.1 mm) relating to Example 6.
Fig. 20 shows a spherical aberration diagram (transparent base board thickness 0.6 mm) relating to Example 6.
Fig. 21 shows an optical path diagram (transparent base board thickness 0.1 mm) relating to Example 7.
Fig. 22 shows an optical path diagram (transparent base board thickness 0.2 mm) relating to Example 7.
Fig. 23 shows a spherical aberration diagram (transparent base board thickness 0.1 mm) relating to Example 7.
Fig. 24 shows a spherical aberration diagram (transparent base board thickness 0.2 mm) relating to Example 7.
Fig. 25 shows an optical path diagram relating to Example 8.
Fig. 26 shows a spherical aberration diagram relating to Example 8.
Fig. 27 shows an optical path diagram (transparent base board thickness 0.1 mm) relating to Example 9.
Fig. 28 shows an optical path diagram (transparent base board thickness 0.6 mm) relating to Example 9.
Fig. 29 shows a spherical aberration diagram (transparent base board thickness 0.1 mm) relating to Example 9.
Fig. 30 shows a spherical aberration diagram (transparent base board thickness 0.6 mm) relating to Example 10.
Fig. 31 is a schematic diagram of the optical pickup device in the first embodiment.
Fig. 32 is a schematic diagram of the optical pickup device in the second embodiment.
Fig. 33 is a schematic diagram of the optical pickup device in the third embodiment.
Fig. 34 is a schematic diagram of the optical pickup device in the fourth embodiment.

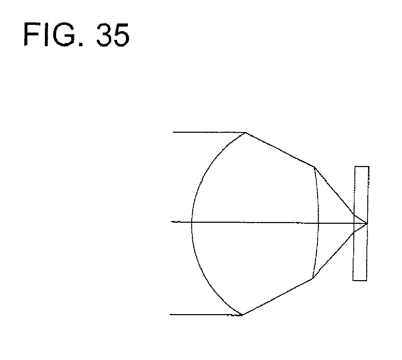

Fig. 35 shows an optical path diagram relating to Example 10.

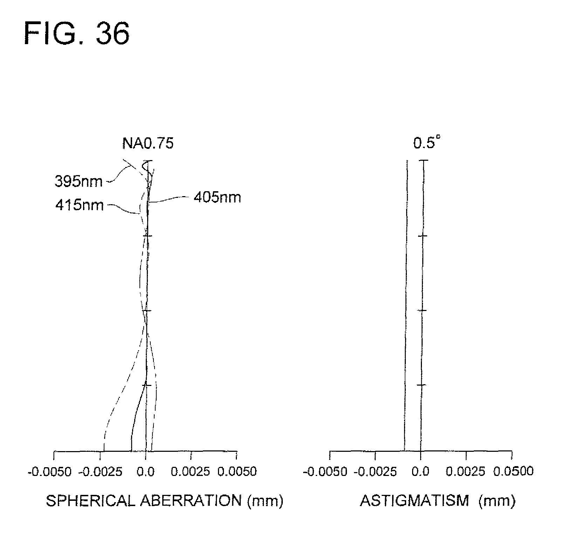

Fig. 36 shows a spherical aberration diagram and an astigmatism diagram a relating to Example 10.

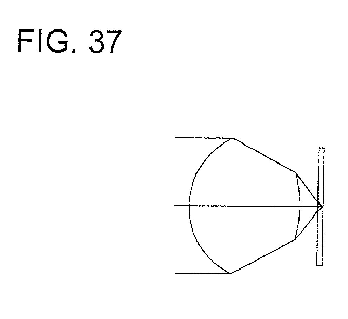

Fig. 37 shows an optical path diagram relating to Example 11.

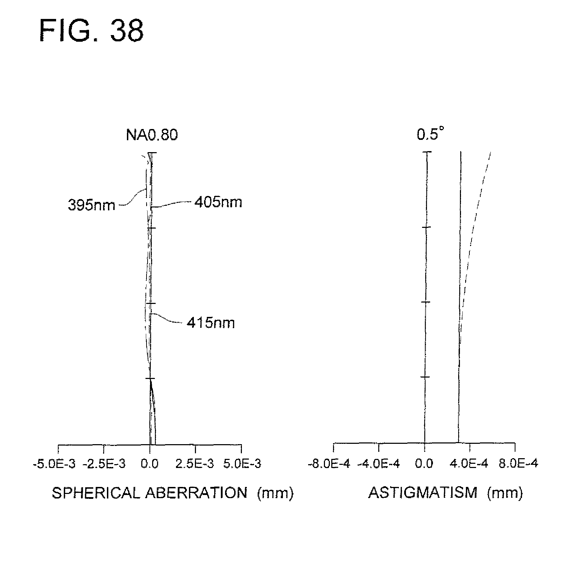

Fig. 38 shows a spherical aberration diagram and an astigmatism diagram a relating to Example 11.

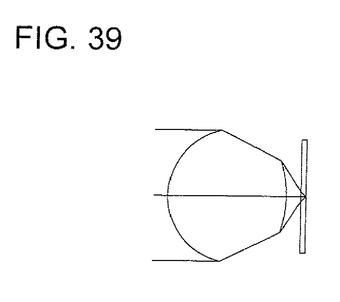

Fig. 39 shows an optical path diagram relating to Example 12.

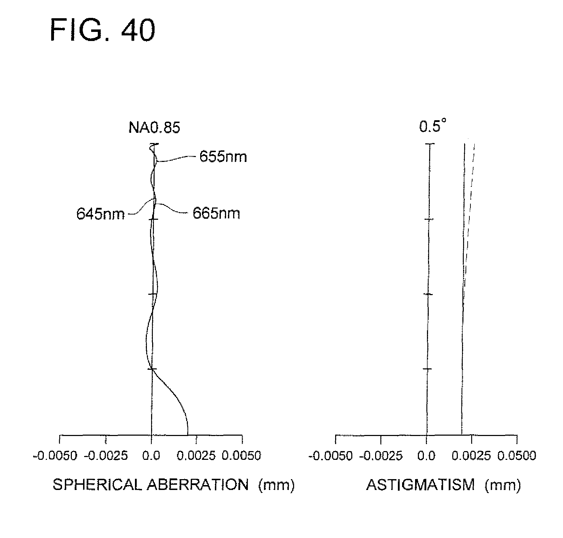

Fig. 40 shows a spherical aberration diagram and an astigmatism diagram a relating to Example 12.

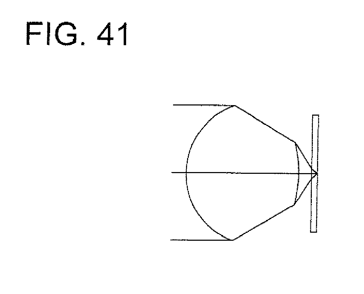

Fig. 41 shows an optical path diagram relating to Example 13.

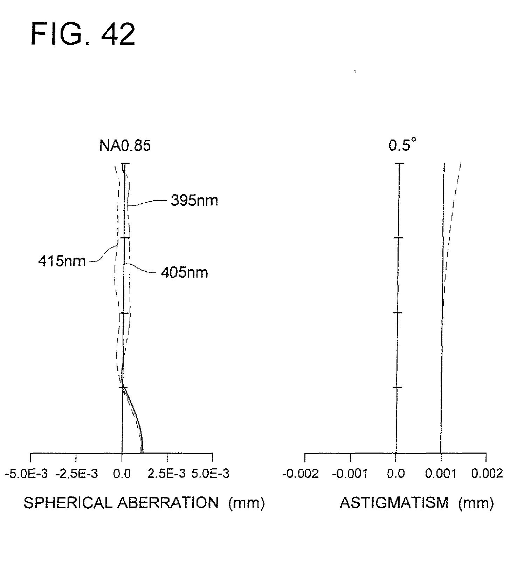

Fig. 42 shows a spherical aberration diagram and an astigmatism diagram a relating to Example 13.

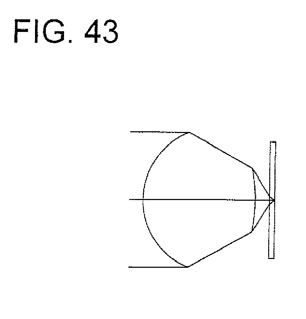

Fig. 43 shows an optical path diagram relating to Example 14.

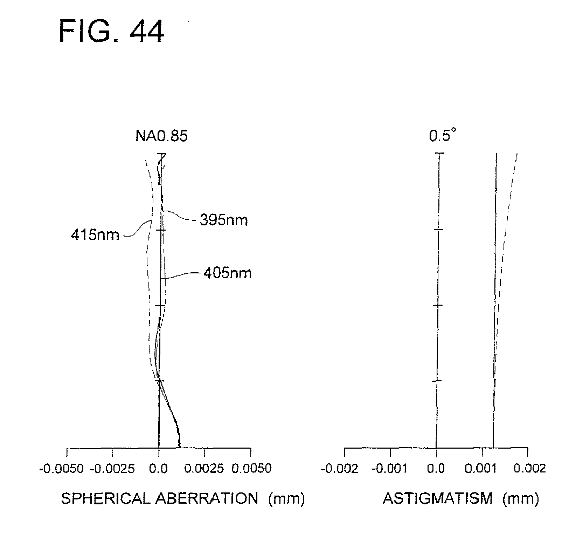

Fig. 44 shows a spherical aberration diagram and an astigmatism diagram a relating to Example 14.

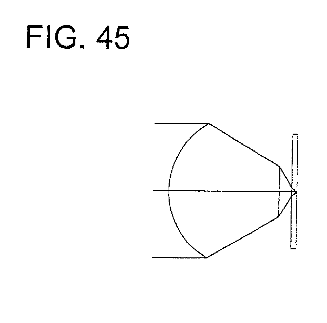

Fig. 45 shows an optical path diagram relating to Example 15.

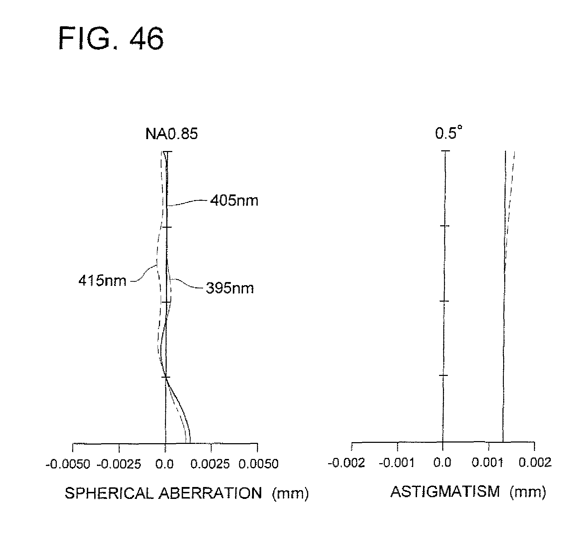

Fig. 46 shows a spherical aberration diagram and an astigmatism diagram a relating to Example 15.

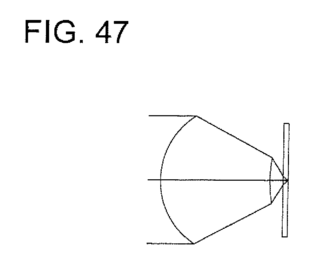

Fig. 47 shows an optical path diagram relating to Example 16.

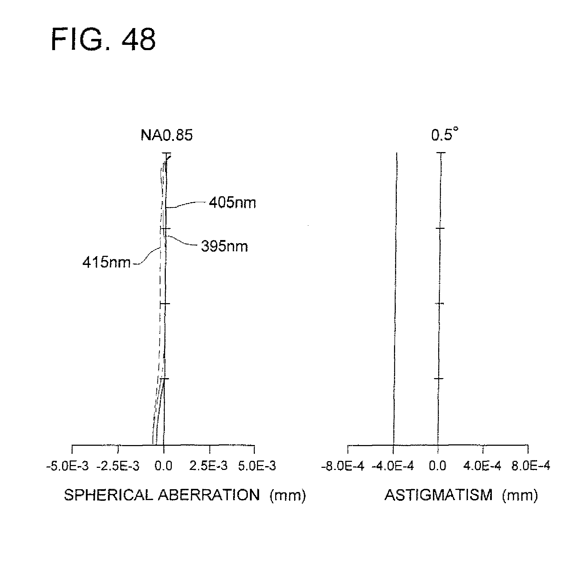

Fig. 48 shows a spherical aberration diagram and an astigmatism diagram a relating to Example 16.

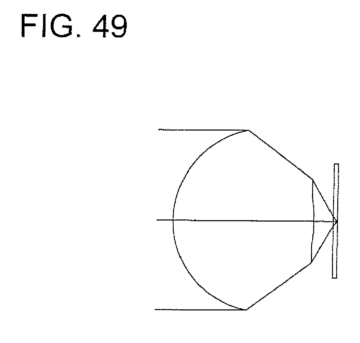

Fig. 49 shows an optical path diagram relating to Example 17.

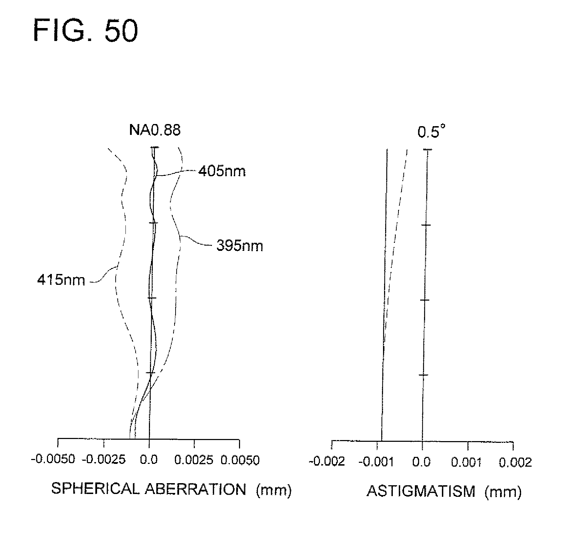

Fig. 50 shows a spherical aberration diagram and an astigmatism diagram a relating to Example 17.

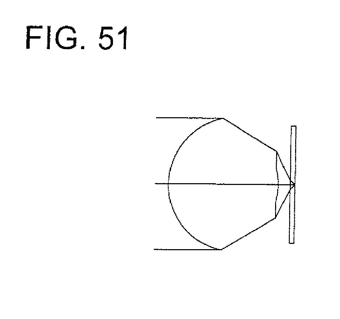

Fig. 51 shows an optical path diagram relating to Example 18.

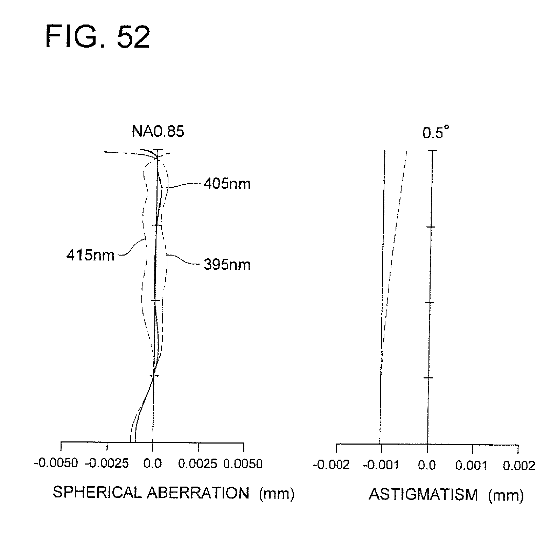

Fig. 52 shows a spherical aberration diagram and an astigmatism diagram a relating to Example 18.

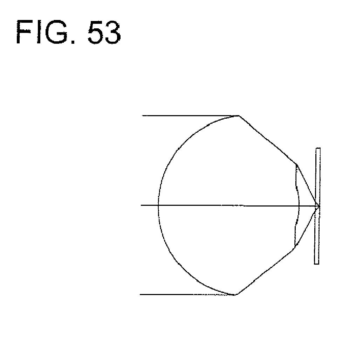

Fig. 53 shows an optical path diagram relating to Example 19.

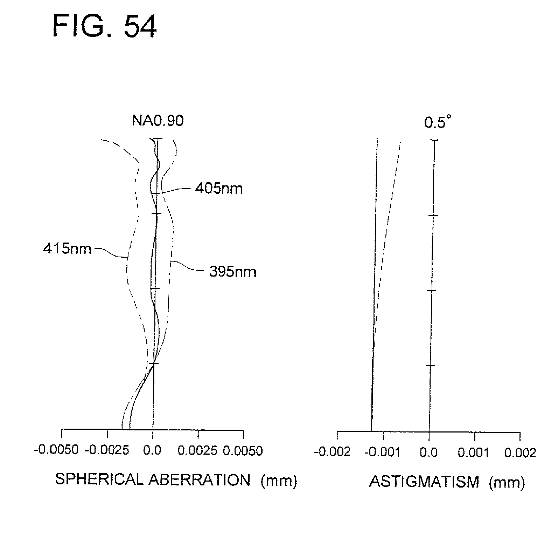

Fig. 54 shows a spherical aberration diagram and an astigmatism diagram a relating to Example 19.

Fig. 55 shows an optical path diagram relating to Example 20.

Fig. 56 shows a spherical aberration diagram and an astigmatism diagram a relating to Example 20.

Fig. 57 is a schematic diagram of an optical pickup device in the first embodiment of the invention.

Fig. 58 is a schematic diagram of another optical pickup device in the second embodiment of the invention.

Fig. 59 is an optical path diagram of a light-converging optical system in Example 21.

Fig. 60 is a spherical aberration diagram in Example 21.

Fig. 61 is an optical path diagram of a light-converging optical system in Example 22.

Fig. 62 is a spherical aberration diagram in Example 22.

Fig. 63 is an optical path diagram of a light-converging optical system in Example 23.

Fig. 64 is a spherical aberration diagram in Example 23.

Fig. 65 is an optical path diagram of a light-converging optical system in Example 24.

Fig. 66 is a spherical aberration diagram in Example 24.

Fig. 67 shows a sectional view (a) of an optical element in the second embodiment of the invention, a front view (b) viewed in the direction A and an enlarged diagram (c) of S2 surface.

Fig. 68 is a diagram for explaining an effect of the optical element in Fig. 67, and it is a diagram showing the relationship between a cycle (P/λ) of a blazed structure in the case of forming the blazed structure on a flat base board by using cutting tools each being 1.0 μm, 0.7 μm and 0.5 μm in terms of radius (Rb) of a tip for cutting work and a theoretical value of the first order diffraction efficiency.

Fig. 69 is an optical path diagram of a light-converging optical system in Example 25.

Fig. 70 is a spherical aberration diagram in Example 25.

Fig. 71 is an optical path diagram of a light-converging optical system in Example 26.

Fig. 72 is a spherical aberration diagram in Example 26.

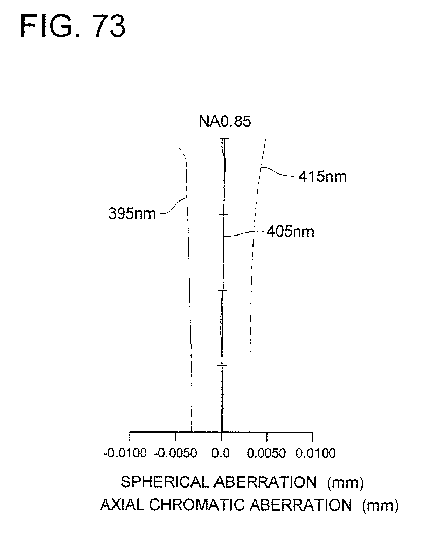

Fig. 73 is a diagram showing a spherical aberration and an axial chromatic aberration, at a wavelength of 405±10 nm, of the objective lens (focal length: 1.76 mm, numerical aperture at an image side: 0.85) whose axial chromatic aberration is corrected by the coupling lens in Examples 21 and 22.

Fig. 74 is a diagram showing a spherical aberration and an axial chromatic aberration, at a wavelength of 405+10 nm, of the objective lens (focal length: 1.76 mm, numerical aperture at an image side: 0.85) whose axial chromatic aberration is corrected by the coupling lens in Examples 23, 24 and 27.

Fig. 75 is a diagram showing a spherical aberration and an axial chromatic aberration, at a wavelength of 405±10 nm, of the objective lens (focal length: 2.20 mm, numerical aperture at an image side: 0.85) whose axial chromatic aberration is corrected by the coupling lens in Examples 25 and 26.

Fig. 76 is an optical path diagram of a light-converging optical system in Example 27.

Fig. 77 is a spherical aberration diagram in Example 27.

## DETAILED DESCRIPTION OF THE PREFERRED EMBODIMENT

Next, a lens in the embodiment of the invention will be explained as follows. An aspheric surface of the lens in the embodiment is expressed by the following expression Numeral 1, when an axial direction is represented by X axis, a height in the direction perpendicular to an optical axis is represented by h, and a radius of curvature is represented by r. In the expression, K represents a constant of the cone and A2i represents an aspheric surface coefficient.

(Numeral 1)

$$X = \frac{h^2/r}{1 + \sqrt{1 - (1 + K)h^2/r^2}} + \sum_{i=2} A_{2i} h^{2i}$$

A diffractive surface on the lens of the present embodiment is expressed as optical path difference function Φb in the following expression Numeral 2, wherein h represents a height in the direction perpendicular to an optical axis and b2i represents a coefficient of the optical path difference function and n represents the diffraction order of a diffracted ray having the maximum light amount among diffracted rays generated at the diffractive surface.

(Numeral 2)

$$\Phi_b = n \cdot \sum_{j=1} b_{2j} \cdot h^{2j}$$

(Example)

Each of Table 1 and Table 2 shows a list of Examples 1 - 9. Table 1 shows Examples 1, 2, 7 and 8 for a light-converging optical system for a light information recording medium (including an objective lens and a coupling lens) capable of recording at high density with a short wavelength and high numerical aperture, while, Table 2 shows Examples 3, 4, 5, 6 and 9 for a light-converging optical system (including an objective lens and a coupling lens) that is interchangeable for both an optical information recording medium capable of recording at high density and an optical information recording medium for recording at relatively low density, and values relating to the aforesaid conditional expressions are shown in Table 1 and Table 2.

Table 1

| Example list 1 (HD-DVD) | | | | |
|---|---|---|---|---|
| Example | 1 | 2 | 7 | 8 |
| Wavelength (nm) | 405 | 405 | 405 | 405 |
| Focal length of objective lens (mm) | 1.765 1.765 | 1.765 1.765 | 1.765 1.765 | 1.765 1.765 |
| Image side numerical aperture of objective lens | 0.85 0.85 | 0.85 0.85 | 0.85 0.85 | 0.85 0.85 |
| (Objective lens) | | | | |
| fD/f | 16.1 | 56.8 | 16.1 | 14 . 9 |
| $\lambda \cdot f \cdot \Sigma ( ni/ (Mi \cdot pi^2))$ | 0.51 | 0.05 | 0.51 | 0.49 |
| $|\Delta fB \cdot NA^2|$ | 0.006 | 0.146 | 0.006 | 0.022 |
| $b_{4i} \cdot (himax)^4/(\lambda \cdot f \cdot NA^4)$ | -31.5 | -5.1 | -31.5 | -37.6 |
| $|(Ph/Pf)-2|$ | 2.38 | 0.42 | 2.38 | 4.39 |
| $|\Delta SA|$ | 0.04 | 1.84 | 0.04 | 0.08 |
| $|SA1/SA2|$ (Axial thickness error is +5 $\mu$m) | 1.1 | 1.4 | 1.1 | 9 . 7 |
| (Composite optical system of the objective lens and the coupling lens) | | | | |
| $\Delta fB \cdot NA^2$ | 0.064 | 0.081 | 0.055 | 0.038 |

Table 2

| Example list 2 (HD-DVD/DVD interchangeable) | | | | | | |
|---|---|---|---|---|---|---|
| Example | | 3 | 4 | 5 | 6 | 9 |
| Wavelength (nm) | ($\lambda$1) | 405 | 405 | 405 | 405 | 405 |
| | ($\lambda$2) | 655 | 655 | 655 | 655 | 655 |
| Focal length of objective lens (mm) | (f1) | 1.765 | 1.765 | 1.765 | 1.765 | 1.765 |
| | (f2) | 1.790 | 1.785 | 1.797 | 1.797 | 1.802 |
| Image side numerical aperture of objective lens | (NA1) | 0.85 | 0.85 | 0.85 | 0.85 | 0.85 |
| | (NA2) | 0.65 | 0.65 | 0.65 | 0.65 | 0.65 |

(continued)

| (Objective lens) | | | | | | |
|---|---|---|---|---|---|---|
| (f/vd)·fD | | 1.4 | 2.2 | ∞ | ∞ | ∞ |
| vd | | 56.5 | 81.6 | 56.5 | 56.5 | 56.5 |
| $b_{2i}/\lambda 1$ | | -27.2 | -12.4 | 0.0 | 0.0 | 0.0 |
| (Ph/Pf)-2 | | 3.94 | 5.85 | 24.80 | 24.80 | 7.01 |
| \|SA1/SA2\| | ($\lambda 1$) | 0.2 | 20.2 | 0.012 | 0.012 | 48.3 |
| (Axial thickness error is +5 $\mu$m) | ($\lambda 2$) | 13.8 | 56.8 | 9.3 | 9.3 | 25.8 |
| (Composite optical system of the objective lens and the coupling lens) | | | | | | |
| \|$\Delta fBi \cdot NAi^2$\| | ($\lambda 1$) | 0.140 | 0.153 | 0.060 | 0.060 | 0.071 |
| | ($\lambda 2$) | 0.048 | 0.012 | 0.013 | 0.013 | 0.028 |

Further, lens data of Examples 1 - 9 are shown in Tables 3 - 11.

Further, in the lens data of Tables 3, 4, 9 and 10, $NA_{OBJ}$ represents the numerical aperture of the objective lens on the image side, $f_{OBJ}$ represents a focal length (mm) of the objective lens for wavelength $\lambda$, $f_{OBJ+COL}$ represents a focal length (mm) of the composite system including the objective lens and the coupling lens for wavelength $\lambda$ and $\lambda$ represents a wavelength of the light source.

In the lens data of Tables 3, 4, 9 and 10 again, the standard wavelength (blazed wavelength) of the diffractive surface coefficient agrees with the wavelength $\lambda$ of the light source.

Further, in the lens data of Tables 3, 4, 9 and 10, the diffractive surface coefficient is determined so that the 1st ordered diffracted ray may have an amount that is larger than that of any other ordered diffracted ray. However, it is also possible that the diffractive surface coefficient is determined so that high ordered diffracted ray of the 2nd ordered or higher may have an amount that is larger than that of any other ordered diffracted ray.

In the lens data of Tables 5, 6, 7, 8 and 11, $NA1_{OBJ}$ represents an image side numerical aperture of the objective lens that is needed for conducting recording and reproducing of information by using light having wavelength $\lambda 1$ for a high density optical information recording medium having a thin transparent base board, $f1_{OBJ}$ represents a focal length (mm) of the objective lens for wavelength $\lambda 1$, $f1_{OBJ+COL}$ represents a focal length (mm) of the composite system including the objective lens and the coupling lens for wavelength $\lambda 1$. Further, $NA2_{OBJ}$ represents an image side numerical aperture of the objective lens that is needed for conducting recording and reproducing of information by using light having wavelength $\lambda 2$ for a conventional optical information recording medium having a thick transparent base board , $f2_{OBJ}$ represents a focal length (mm) of the objective lens for wavelength $\lambda 2$, $f2_{OBJ+COL}$ represents a focal length (mm) of the composite system including the objective lens and the coupling lens for wavelength $\lambda 2$.

In the lens data of Tables 5, 6, 7, 8 and 11, the standard wavelength (blazed wavelength) of the diffractive surface coefficient agrees with the wavelength $\lambda 1$, and therefore, an amount of diffracted ray of light having wavelength $\lambda 1$ is the greatest. However, it is also possible to make wavelength $\lambda 2$ to be the standard wavelength of the diffractive surface coefficient so that an amount of diffracted ray of light having wavelength $\lambda 2$ may be the greatest, or it is also possible to make the wavelength which makes an amount of diffracted ray of light having wavelength $\lambda 1$ and an amount of diffracted ray of light having wavelength $\lambda 2$ to be balanced to be the standard wavelength of the diffractive surface coefficient. In either case, slight design change makes it possible to construct the objective lens and the light-converging optical system of the invention.

Further, in the lens data of Tables 5, 6, 7, 8 and 11, the diffractive surface coefficient is determined so that the 1st ordered diffracted ray may have an amount that is larger than that of any other ordered diffracted ray. However, it is also possible that diffractive surface coefficient is determined so that high ordered diffracted ray of the 2nd ordered or higher may have an amount that is larger than that of any other ordered diffracted ray.

Table 3

Example 1

$NA_{OBJ}=0.85$, $f_{OBJ}=1.765$, $f_{OBJ+COL}=5.164$, $\lambda=405nm$

| Surface No. | Remarks | r (mm) | d (mm) | Nλ | vd |
|---|---|---|---|---|---|
| | Light source | | d0 (variable) | | |
| 1 | Coupling lens | 45.106 | 1.200 | 1.52491 | 56.5 |
| 2 | | -5.886 | d2 (variable) | | |
| | Diaphragm | | | | |
| 3 | Objective lens | 1.258 | 2.620 | 1.52491 | 56.5 |
| 4 | | -1.023 | 0.330 | | |
| 5 | Transparent base board | ∞ | 0.100 | 1.61950 | 30.0 |
| 6 | | ∞ | | | |

Aspherical coefficient

| Surface No. | 1 | 2 | 3 | 4 |
|---|---|---|---|---|
| κ | 4.76958E+02 | -1.44321E+00 | -7.06310E-01 | -3.22309E+01 |
| A4 | 2.08642E-03 | 1.74134E-03 | 1.88910E-02 | 2.02088E-01 |
| A6 | 2.44614E-03 | 1.36412E-03 | -1.25940E-03 | -3.95843E-01 |
| A8 | 4.12150E-04 | 7.91018E-04 | 4.31290E-03 | 2.86204E-01 |
| A10 | -5.23956E-04 | -4.31024E-04 | -3.15230E-04 | -7.15179E-02 |
| A12 | | | -8.10230E-04 | -2.52269E-04 |
| A14 | | | 6.17850E-05 | |
| A16 | | | 1.70380E-04 | |
| A18 | | | -7.79150E-06 | |
| A20 | | | -1.83970E-05 | |

Diffractive surface coefficient

| Surface No. | 3 |
|---|---|
| b2 | -1.76010E-02 |
| b4 | -2.32030E-03 |
| b6 | -2.16920E-04 |
| b8 | -2.47650E-05 |
| b10 | -9.47770E-05 |

Table 4

Example 2

$NA_{OBJ}=0.85$, $f_{OBJ}=1.765$, $f_{OBJ+COL}=4.873$, $\lambda=405nm$

| Surface No. | Remarks | r (mm) | d (mm) | Nλ | νd |
|---|---|---|---|---|---|
| | Light source | | d0 (variable) | | |
| 1 | Coupling lens | ∞ | 1.000 | 1.52491 | 56.5 |
| 2 | | -5.587 | d2 (variable) | | |
| | Diaphragm | | | | |
| 3 | Objective lens | 1.247 | 2.750 | 1.52491 | 56.5 |
| 4 | | -0.861 | 0.330 | | |
| 5 | Transparent base board | ∞ | 0.100 | 1.61950 | 30.0 |
| 6 | | ∞ | | | |

Aspherical coefficient

| Surface No. | 2 | 3 | 4 |
|---|---|---|---|
| κ | 1.17826E+00 | -7.02710E-01 | -2.73840E+01 |
| A4 | -1.14184E-03 | 2.07930E-02 | 1.37781E-01 |
| A6 | 6.78704E-04 | -2.59850E-03 | -3.28321E-01 |
| A8 | 4.40725E-05 | 4.99190E-03 | 2.62905E-01 |
| A10 | -2.40347E-06 | -2.27860E-04 | -7.81153E-02 |
| A12 | | -9.53320E-04 | -2.52269E-04 |
| A14 | | 4.64040E-05 | |
| A16 | | 1.75530E-04 | |
| A18 | | 2.14300E-05 | |
| A20 | | -2.99900E-05 | |

Diffractive surface coefficient

| Surface No. | 1 | 3 |
|---|---|---|
| b2 | -1.30000E-02 | -4.98930E-03 |
| b4 | 1.76520E-03 | -3.75970E-04 |
| b6 | -5.55960E-04 | |

Table 5

Example 3

NA1$_{OBJ}$=0.85, f1$_{OBJ}$=1.765, f1$_{OBJ+COL}$=2.469, λ1=405nm

NA2$_{OBJ}$=0.65, f2$_{OBJ}$=1.790, f2$_{OBJ+COL}$=6.582, λ2=655nm

| Sur-face No. | Remarks | r (mm) | d (mm) | Nλ1 | Nλ2 | vd |
|---|---|---|---|---|---|---|
| | Light source | | d0 (variable) | | | |
| 1 | Coupling lens | -142.897 | 1.000 | 1.52491 | 1.50673 | 56.5 |
| 2 | | -6.048 | d2 (variable) | | | |
| | Diaphragm | | -0.700 | | | |
| 3 | Objective lens | 1.203 | 2.497 | 1.52491 | 1.50673 | 56.5 |
| 4 | | -1.207 | d4 (variable) | | | |
| 5 | Transparent base board | ∞ | d5 (variable) | 1.61950 | 1.57752 | 30.0 |
| 6 | | ∞ | | | | |

Aspherical coefficient

| Surface No. | 1 | 2 | 3 | 4 |
|---|---|---|---|---|
| κ | -3.11406E+02 | -6.65824E-01 | -6.83350E-01 | -2.62758E+01 |
| A4 | -9.81862E-05 | 2.84851E-04 | 1.62030E-02 | 2.91992E-01 |
| A6 | 3.15053E-04 | -1.97095E-04 | 1.54910E-03 | -5.13328E-01 |
| A8 | -2.71583E-04 | 1.29536E-05 | 2.89290E-03 | 4.15634E-01 |
| A10 | -1.05463E-04 | -9.64917E-05 | -3.67710E-04 | -1.37436E-01 |
| A12 | | | -3.58220E-04 | -2.52265E-04 |
| A14 | | | 1.48420E-04 | |
| A16 | | | 1.19600E-04 | |
| A18 | | | -3.02300E-05 | |
| A20 | | | -1.10520E-05 | |

Diffractive surface coefficient

| Surface No. | 3 |
|---|---|
| b2 | -1.10020E-02 |
| b4 | -1.98240E-03 |
| b6 | 3.36800E-04 |
| b8 | -9.68610E-05 |
| b10 | -4.23910E-04 |
| b12 | 2.23190E-04 |
| b14 | -2.34820E-05 |
| b16 | -9.27570E-06 |

| | $\lambda 1 = 405nm$ | $\lambda 2 = 655nm$ |
|---|---|---|
| d0 (variable) | 11.340 | 5.675 |
| d2 (variable) | 4.660 | 10.325 |
| d4 (variable) | 0.377 | 0.200 |
| d5 (variable) | 0.100 | 0.600 |

Table 6

Example 4

$NA1_{OBJ}=0.85$, $f1_{OBJ}=1.765$, $f1_{OBJ+COL}=2.678$, $\lambda 1=405nm$
$NA2_{OBJ}=0.65$, $f2_{OBJ}=1.785$, $f2_{OBJ+COL}=5.514$, $\lambda 2=655nm$

| Surface No. | Remarks | r (mm) | d (mm) | $N\lambda 1$ | $N\lambda 2$ | vd |
|---|---|---|---|---|---|---|
| | Light source | | d0 (variable) | | | |
| 1 | Coupling lens | 80.000 | 1.000 | 1.52491 | 1.50673 | 56.5 |
| 2 | | -5.200 | d2 (variable) | | | |
| | Diaphragm | | -0.700 | | | |
| 3 | Objective lens | 1.153 | 2.492 | 1.50716 | 1.49517 | 81.6 |
| 4 | | -1.112 | d4 (variable) | | | |
| 5 | Transparent base board | ∞ | d5 (variable) | 1.61950 | 1.57752 | 30.0 |
| 6 | | ∞ | | | | |

Aspherical coefficient

| Surface No. | 1 | 2 | 3 | 4 |
|---|---|---|---|---|
| κ | 1.61326E+03 | -1.74124E+00 | -5.94880E-01 | -1.92732E+01 |
| A4 | 3.66848E-03 | 2.12455E-03 | 6.00960E-03 | 4.40415E-01 |
| A6 | -1.88619E-03 | -1.01374E-03 | 9.35700E-04 | -7.43189E-01 |
| A8 | -9.40734E-04 | -7.37020E-04 | 2.30890E-03 | 6.33176E-01 |
| A10 | 3.28479E-04 | 2.06247E-04 | 1.69380E-04 | -2.21099E-01 |
| A12 | | | -1.78190E-04 | -2.52284E-04 |
| A14 | | | 1.27650E-04 | |
| A16 | | | 8.23410E-05 | |
| A18 | | | -2.90430E-05 | |
| A20 | | | -2.04210E-06 | |

Diffractive surface coefficient

| Surface No. | 3 |
|---|---|
| b2 | -5.01150E-03 |
| b4 | -2.53300E-03 |
| b6 | 5.00650E-05 |
| b8 | 3.46760E-04 |
| b10 | -4.42280E-04 |
| b12 | 2.16610E-04 |
| b14 | -1.33480E-05 |
| b16 | -1.56770E-05 |

| | λ1=405nm | λ2=655nm |
|---|---|---|
| d0(variable) | 8.721 | 5.339 |
| d2(variable) | 4.279 | 7.661 |
| d4(variable) | 0.390 | 0.224 |
| d5(variable) | 0.100 | 0.600 |

Table 7

Example 5

$NA1_{OBJ}=0.85$, $f1_{OBJ}=1.765$, $f1_{OBJ+COL}=2.648$, $\lambda1=405nm$
$NA2_{OBJ}=0.65$, $f2_{OBJ}=1.797$, $f2_{OBJ+COL}=31.840$, $\lambda2=655nm$

| Surface No. | Remarks | r (mm) | d (mm) | Nλ1 | Nλ2 | vd |
|---|---|---|---|---|---|---|
| | Light source | | d0 (variable) | | | |
| 1 | Coupling lens | 169.824 | 1.000 | 1.52491 | 1.50673 | 56.5 |
| 2 | | -8.114 | d2 (variable) | | | |
| | Diaphragm | | -0.700 | | | |
| 3 | Objective lens | 1.178 | 2.658 | 1.52491 | 1.50673 | 56.5 |
| 4 | | -0.969 | d4 (variable) | | | |
| 5 | Transparent base board | ∞ | d5 (variable) | 1.61950 | 1.57752 | 30.0 |
| 6 | | ∞ | | | | |

Aspherical coefficient

| Surface No. | 1 | 2 | 3 | 4 |
|---|---|---|---|---|
| κ | 6.45250E+03 | -1.04200E+01 | -7.83080E-01 | -1.64943E+01 |
| A4 | 5.63484E-03 | 1.53020E-03 | 2.01730E-02 | 4.02751E-01 |
| A6 | -1.26858E-03 | 2.37210E-04 | -1.84080E-03 | -8.51255E-01 |
| A8 | -1.84810E-04 | -6.06150E-04 | 7.06100E-03 | 8.29676E-01 |
| A10 | -2.11675E-04 | -3.10200E-05 | -6.87170E-04 | -3.27665E-01 |
| A12 | | | -9.64340E-04 | -2.52266E-04 |
| A14 | | | -6.64990E-05 | |
| A16 | | | 2.60470E-04 | |
| A18 | | | 4.70690E-05 | |
| A20 | | | -4.45290E-05 | |

Diffractive surface coefficient

| Surface No. | 2 | 3 |
|---|---|---|
| b2 | -1.80000E-02 | 0.00000E+00 |
| b4 | -1.44700E-06 | -1.70020E-03 |
| b6 | | -1.19540E-03 |
| b8 | | 1.24950E-03 |
| b10 | | -6.48240E-05 |
| b12 | | -2.32140E-04 |
| b14 | | -1.08670E-04 |
| b16 | | 6.76630E-05 |
| b18 | | 2.90890E-05 |
| B20 | | -1.37010E-05 |

| | $\lambda 1=405nm$ | $\lambda 2=655nm$ |
|---|---|---|
| d0(variable) | 9.000 | 4.532 |
| d2(variable) | 4.000 | 8.468 |
| d4(variable) | 0.333 | 0.202 |
| d5(variable) | 0.100 | 0.600 |

Table 8

Example 6

$NA1_{OBJ}=0.85$, $f1_{OBJ}=1.765$, $f1_{OBJ+COL}=3.251$, $\lambda 1=405nm$
$NA2_{OBJ}=0.65$, $f2_{OBJ}=1.797$, $f2_{OBJ+COL}=62.720$, $\lambda 2=655nm$

| Surface No. | Remarks | r(mm) | d(mm) | $N\lambda 1$ | $N\lambda 2$ | vd |
|---|---|---|---|---|---|---|
| | Light source | | d0 (variable) | | | |
| 1 | | -48.480 | 1.000 | 1.91409 | 1.83665 | 23.8 |
| 2 | Coupling lens | 2.316 | 2.100 | 1.71548 | 1.68962 | 53.3 |
| 3 | | -3.725 | d3 (variable) | | | |
| | Diaphragm | | -0.700 | | | |
| 4 | | 1.178 | 2.658 | 1.52491 | 1.50673 | 56.5 |
| 5 | Objective lens | -0.969 | d4 (variable) | | | |
| 6 | Transparent base board | ∞ | d5 (variable) | 1.61950 | 1.57752 | 30.0 |
| 7 | | ∞ | | | | |

Aspherical coefficient

| Surface No. | 3 | 4 | 5 |
|---|---|---|---|
| κ | 3.13672E-01 | -7.83080E-01 | -1.64943E+01 |
| A4 | -5.12334E-04 | 2.01730E-02 | 4.02751E-01 |
| A6 | -4.76439E-04 | -1.84080E-03 | -8.51255E-01 |
| A8 | 1.19244E-04 | 7.06100E-03 | 8.29676E-01 |
| A10 | -4.60848E-05 | -6.87170E-04 | -3.27665E-01 |
| A12 | | -9.64340E-04 | -2.52266E-04 |
| A14 | | -6.64990E-05 | |
| A16 | | 2.60470E-04 | |
| A18 | | 4.70690E-05 | |
| A20 | | -4.45290E-05 | |

Diffractive surface coefficient

| Surface No. | 4 |
|---|---|
| b2 | 0.00000E+00 |
| b4 | -1.70020E-03 |
| b6 | -1.19540E-03 |
| b8 | 1.24950E-03 |
| b10 | -6.48240E-05 |
| b12 | -2.32140E-04 |
| b14 | -1.08670E-04 |
| b16 | 6.76630E-05 |
| b18 | 2.90890E-05 |
| b20 | -1.37010E-05 |

| | λ1=405nm | λ2=655nm |
|---|---|---|
| d0 (variable) | 6.172 | 2.684 |
| d2 (variable) | 6.058 | 9.546 |
| d4 (variable) | 0.333 | 0.202 |
| d5 (variable) | 0.100 | 0.600 |

Table 9

Example 7

$NA_{OBJ}=0.85$, $f_{OBJ}=1.765$, $f_{OBJ+COL}=2.596$, $\lambda=405nm$

| Surface No. | Remarks | r (mm) | d (mm) | Nλ1 | νd |
|---|---|---|---|---|---|
| | Light source | | d0 (variable) | | |
| 1 | Coupling lens | -19.157 | 1.200 | 1.52491 | 56.5 |
| 2 | | -4.786 | d2 (variable) | | |
| | Diaphragm | | -1.000 | | |
| 3 | Objective lens | 1.258 | 2.620 | 1.52491 | 56.5 |
| 4 | | -1.023 | d4 (variable) | | |
| 5 | Transparent base board | ∞ | d5 (variable) | 1.61950 | 30.0 |
| 6 | | ∞ | | | |

Aspherical coefficient

| Surface No. | 1 | 2 | 3 | 4 |
|---|---|---|---|---|
| κ | -4.20298E+02 | -6.14122E+00 | -7.06310E-01 | -3.22309E+01 |
| A4 | 9.48753E-03 | 4.31052E-03 | 1.88910E-02 | 2.02088E-01 |
| A6 | 2.33804E-03 | 1.70530E-03 | -1.25940E-03 | -3.95843E-01 |
| A8 | -6.19699E-04 | 1.54552E-04 | 4.31290E-03 | 2.86204E-01 |
| A10 | -1.45759E-04 | -3.70791E-04 | -3.15230E-04 | -1.71518E+00 |
| A12 | -1.08084E-03 | -1.26068E-05 | -8.10230E-04 | -2.52269E-04 |
| A14 | | | 6.17850E-05 | |
| A16 | | | 1.70380E-04 | |
| A18 | | | -7.79150E-06 | |
| A20 | | | -1.83970E-05 | |

Diffractive surface coefficient

| Surface No. | 3 |
|---|---|
| b2 | -1.76010E-02 |
| b4 | -2.32030E-03 |
| b6 | -2.16920E-04 |
| b8 | -2.47650E-05 |
| b10 | -9.47770E-05 |

|                | 1st layer | 2nd layer |
|----------------|-----------|-----------|
| d0 (variable)  | 10.755    | 8.913     |
| d2 (variable)  | 5.245     | 7.087     |
| d4 (variable)  | 0.330     | 0.315     |
| d5 (variable)  | 0.100     | 0.200     |

Table 10

Example 8

$NA_{OBJ}=0.85$, $f_{OBJ}=1.765$, $f_{OBJ+COL}=4.201$, $\lambda=405nm$

| Surface No. | Remarks | r (mm) | d (mm) | Nλ1 | νd |
|---|---|---|---|---|---|
|  | Light source |  | d0 (variable) |  |  |
| 1 | Coupling lens | -12.906 | 1.200 | 1.52491 | 56.5 |
| 2 | | -3.960 | d2 (variable) |  |  |
|  | Diaphragm |  |  |  |  |
| 3 | Objective lens | 1.239 | 2.580 | 1.52491 | 56.5 |
| 4 | | -1.094 | 0.324 |  |  |
| 5 | Transparent base board | ∞ | 0.100 | 1.61950 | 30.0 |
| 6 | | ∞ |  |  |  |

Aspherical coefficient

| Surface No. | 1 | 2 | 3 | 4 |
|---|---|---|---|---|
| κ | -4.22516E+01 | -6.08455E-01 | -6.87700E-01 | -3.05930E+01 |
| A4 | 2.58228E-03 | 2.24042E-03 | 1.60060E-02 | 3.13367E-01 |
| A6 | 2.04663E-04 | 9.96475E-04 | 1.55150E-03 | -6.06995E-01 |
| A8 | 3.85055E-04 | -2.64016E-04 | 2.24570E-03 | 5.84353E-01 |
| A10 | -6.85899E-04 | -1.99861E-04 | -2.41620E-04 | -2.30239E-01 |
| A12 |  |  | -2.54760E-04 | -2.52265E-04 |
| A14 |  |  | 1.30460E-04 |  |
| A16 |  |  | 8.28930E-05 |  |
| A18 |  |  | -3.98270E-05 |  |
| A20 |  |  | 2.17190E-06 |  |

Diffractive surface coefficient

| Surface No. | 3 |
|---|---|
| b2 | -1.90240E-02 |
| b4 | -2.43290E-03 |
| b6 | -5.93170E-04 |
| b8 | -5.42320E-05 |
| b10 | -3.14260E-05 |

Table 11

Example 9

NA1$_{OBJ}$=0.85, f1$_{OBJ}$=1.765, f1$_{OBJ+COL}$=3.6281, λ1=405nm

NA2$_{OBJ}$=0.65, f2$_{OBJ}$=1.803, f2$_{OBJ+COL}$=-24.491, λ2=655nm

| Surface No. | Remarks | r (mm) | d (mm) | Nλ1 | Nλ2 | vd |
|---|---|---|---|---|---|---|
| | Light source | | d0 (variable) | | | |
| 1 | Coupling lens | ∞ | 1.000 | 1.52491 | 1.50673 | 56.5 |
| 2 | | -7.594 | d2 (variable) | | | |
| | Diaphragm | | -1.000 | | | |
| 3 | Objective lens | 1.163 | 2.540 | 1.52491 | 1.50673 | 56.5 |
| 4 | | -1.130 | d4 (variable) | | | |
| 5 | Transparent base board | ∞ | d5 (variable) | 1.61950 | 1.57752 | 30.0 |
| 6 | | ∞ | | | | |

Aspherical coefficient

| Surface No. | 2 | 3 | 4 |
|---|---|---|---|
| κ | 9.88027E-01 | -7.01050E-01 | -3.54158E+01 |
| A4 | -5.00008E-04 | 1.25090E-02 | 2.80096E-01 |
| A6 | 2.42635E-05 | 6.21250E-03 | -3.97196E-01 |
| A8 | -3.01114E-05 | 2.89830E-03 | 2.48929E-01 |
| A10 | 7.34415E-06 | -5.49800E-04 | -5.19453E-02 |
| A12 | | -3.59630E-04 | -2.52259E-04 |
| A14 | | 1.45510E-04 | |
| A16 | | 1.20140E-04 | |
| A18 | | -2.71410E-05 | |
| A20 | | -1.05650E-06 | |

Diffractive surface coefficient

| Surface No. | 1 | 3 |
|---|---|---|
| b2 | -1.93670E-02 | 0.00000E+00 |
| b4 | 7.31090E-04 | -5.27370E-03 |
| b6 | | 3.34910E-03 |
| b8 | | -9.67370E-04 |
| b10 | | -2.72710E-04 |
| b12 | | 1.37710E-04 |
| b14 | | -3.66100E-05 |
| b16 | | 9.87600E-06 |

| | $\lambda 1=405nm$ | $\lambda 2=655nm$ |
|---|---|---|
| d0(variable) | 9.000 | 5.408 |
| d2(variable) | 6.000 | 9.592 |
| d4(variable) | 0.376 | 0.210 |
| d5(variable) | 0.100 | 0.600 |

(Example 1)

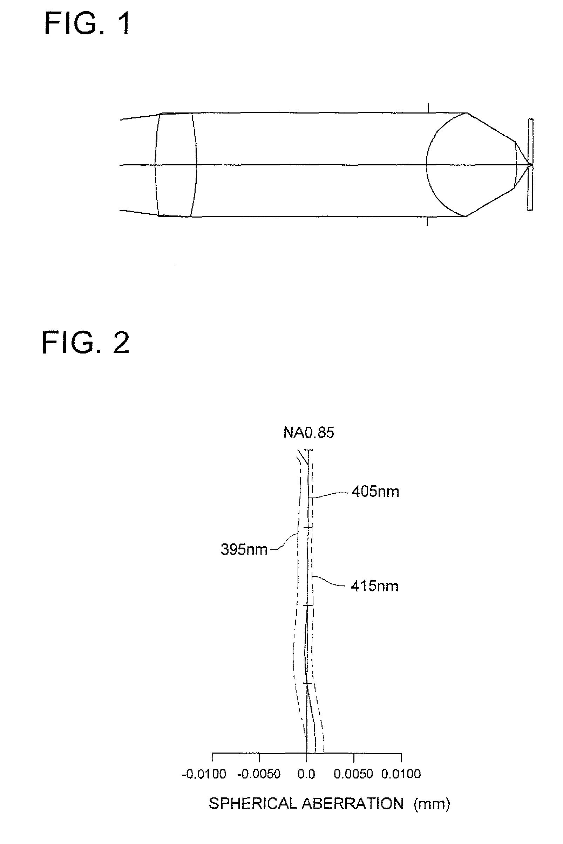

In the example 1, axial chromatic aberration and chromatic spherical aberration generated on an objective lens are corrected satisfactorily by providing a diffractive structure on the surface of the objective lens on the light source side. In the example 1, though axial chromatic aberration of the objective lens is corrected almost completely, it is also possible just to cancel the axial chromatic aberration generated on the coupling lens by correcting the axial chromatic aberration of the objected lens excessively. Further, by using plastic materials for the objective lens and the coupling lens, the light-converging optical system is made to be light in weight, and the load for the focusing mechanism and for the coupling lens moving device (driving device) is made to be light. Fig. 1 shows an optical path diagram of the light-converging optical system of the example 1, and Fig. 2 shows a spherical aberration diagram.

In the table 12 stated later, there is shown the result wherein the fluctuations of the spherical aberration generated on the light-converging optical system by the various causes are corrected by moving the coupling lens in the direction of an optical axis. As is understood from the table 12, spherical aberrations caused by fluctuations of wavelength of a laser light source, temperature changes and by errors of transparent base boards are corrected satisfactorily, in the light-converging optical system of the example 1. Further, spherical aberration fluctuations caused by errors of the central thickness of the objective lens can also be corrected satisfactorily.

(Example 2)

In the example 2, axial chromatic aberration and chromatic spherical aberration generated on an objective lens are corrected satisfactorily by providing a diffractive structure on each of the surface of a coupling lens on the light source side and the surface of an objective lens on the light source side. By providing the diffractive structure only on the one side of the coupling lens, deterioration of wavefront aberration caused by decentering between each surface of the coupling lens is prevented. Further, by using plastic materials for the objective lens and the coupling lens, the total light-converging optical system is made to be light in weight, and load for a focusing mechanism and for a coupling lens moving device is lightened. Fig. 1 shows an optical path diagram of the light-converging optical system in Example 1, and Fig. 2 shows a spherical aberration diagram.

Further, Table 13 shows results wherein fluctuations of spherical aberration caused on the light-converging optical system by various causes are corrected by moving the coupling lens in the direction of an optical axis. As is clear from this Table 13, spherical aberration caused by wavelength fluctuations of a laser light source, temperature changes and by errors of transparent base board thickness can be corrected satisfactorily in the light-converging optical system of Example 2. In addition, spherical aberration fluctuations caused by errors of the central thickness of the objective lens can also be corrected satisfactorily.

(Example 3)

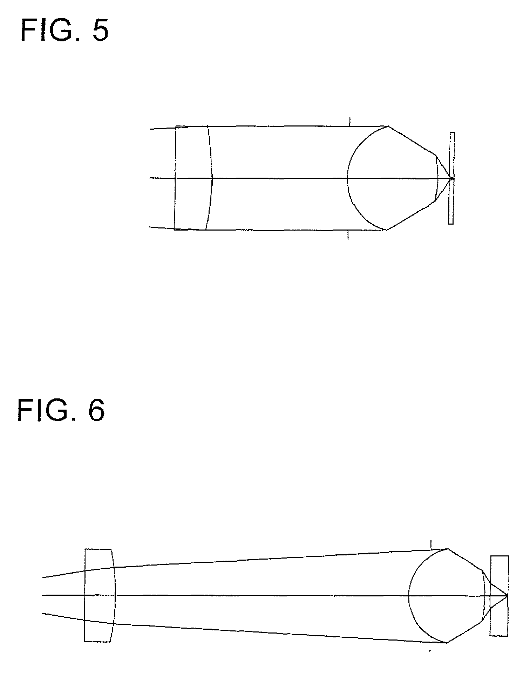

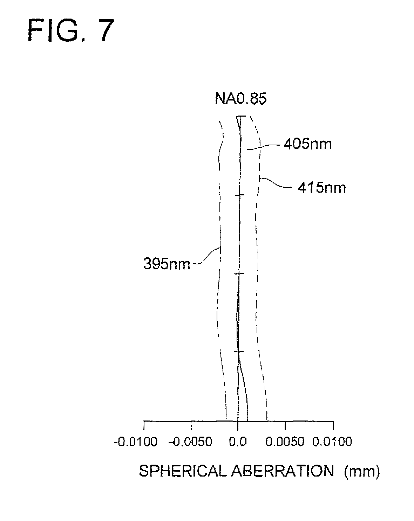

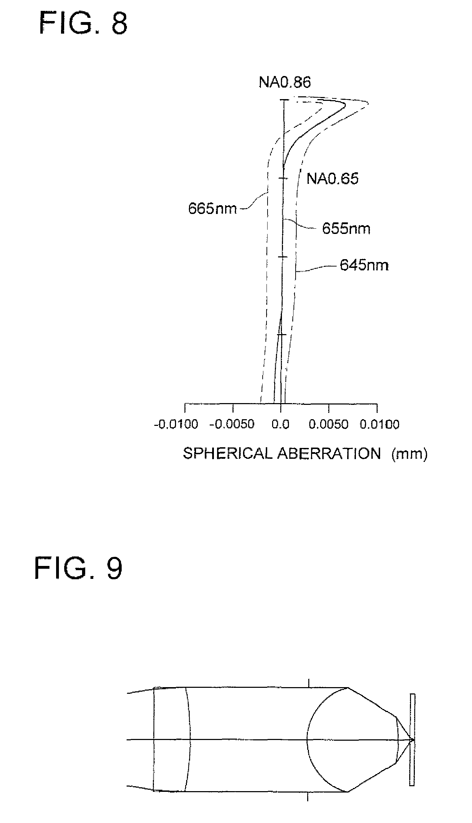

Example 3 represents a light-converging optical system capable of recording and reproducing for two types of optical information recording media one of which has a transparent base board with a thickness of 0.1 mm and the other has a transparent base board with a thickness of 0.6 mm. Spherical aberration caused by changes of transparent base board thickness is corrected by providing a diffractive structure on the surface of an objective lens on the light source side. Fig. 5 shows an optical path diagram for the transparent base board having a thickness of 0.1 mm, and Fig. 6 shows an optical path diagram for the transparent base board having a thickness of 0.6 mm. As is understood from the spherical aberration diagram in Fig. 7, all apertures up to NA 0.85 for wavelength λ1 = 405 nm and transparent base board thickness t1 = 0.1 mm are almost free from aberration, in this light-converging optical system. On the other hand, as shown on the spherical aberration diagram in Fig. 8, it is corrected so that all apertures up to NA 0.65 for wavelength λ2 = 655 nm and transparent base board thickness t2 = 0.6 mm may be almost free from aberration. In that case, a spot diameter is not made to be too small on the image recording surface and detection of unnecessary signals by a light-receiving element of an optical pickup device is prevented, by making the light flux of NA 0.65 or more to be flare components. Further, by making the light flux having wavelength λ2 to enter the objective lens on a divergent light basis, it is possible to secure a large working distance for recording and reproducing for an information recording medium having, for example, a transparent base board whose thickness t2 is 0.6 mm.

In addition to the foregoing, axial chromatic aberration caused on each of areas of λ1 and λ2 respectively is corrected, by establishing diffractive power of a diffractive structure appropriately for refractive power and Abbe constant of the objective lens. Further, by using plastic materials for the objective lens and the coupling lens, the total light-converging optical system is made to be light in weight, and the load for the focusing mechanism and for the coupling lens moving device is lightened.

Table 14 shows results wherein fluctuations of spherical aberration caused on a light-converging optical system by various causes are corrected by moving a coupling lens in the direction of an optical axis. As is clear from this Table 14, spherical aberration caused by wavelength fluctuations of a laser light source, temperature changes and by errors of transparent base board thickness can be corrected satisfactorily in the light-converging optical system of Example 3.

Incidentally, an upper part of Table 14 shows the results of correction for fluctuations of spherical aberration in the case of recording or reproducing information for a high density optical information recording medium having a thin transparent base board, while, a lower part of Table 14 shows the results of correction for fluctuations of spherical aberration in the case of recording or reproducing information for a conventional optical information recording medium having a thick transparent base board. The foregoing also applies to Tables 15, 16, 17 and 19 which will be explained later.

Further, by moving the coupling lens in the direction of an optical axis depending on a thickness of a transparent base board for the optical information recording media of two types, a degree of divergence of the light flux entering the objective lens is changed. In the Example 3, a diaphragm that regulates a light flux is positioned to be deviated from the vertex of the surface of the objective lens on the light source side toward the optical information recording medium side. Due to this, it is possible to control the height for passage of a beam of light on the surface of the objective lens closest to the light source to be low in the case of incidence of a divergent light flux, which is preferable for making an objective lens to be of a small diameter or for correcting aberration.

Table 12

| Example 1 | | | | |
|---|---|---|---|---|
| Cause of spherical aberration fluctuation | | Wavefront aberration after correction | d0 (variable) | d2 (variable) |
| Standard state (λ=405nm, T=25°C, t=0.100mm) | | 0.006λ | 9.300 | 6.700 |
| Wavelength fluctuation of LD | Δλ=+10nm | 0.006λ | 9.329 | 6.671 |
| | Δλ=-10nm | 0.008λ | 9.273 | 6.727 |
| Temperature change | ΔT=+30°C | 0.013λ | 9.167 | 6.833 |
| | ΔT=-30°C | 0.025λ | 9.436 | 6.564 |
| Error of transparent base board thickness | Δt=+0.02mm | 0.007λ | 8.996 | 7.004 |
| | Δt=-0.02mm | 0.014λ | 9.614 | 6.386 |

Table 13

| Example 2 | | | | |
|---|---|---|---|---|
| Cause of spherical aberration fluctuation | | Wavefront aberration after correction | d0 (variable) | d2 (variable) |
| Standard state ($\lambda$=405nm, T=25°C, t=0.100mm) | | 0.006$\lambda$ | 7.929 | 5.071 |
| Wavelength fluctuation of LD | $\Delta\lambda$=+10nm | 0.008$\lambda$ | 7.861 | 5.139 |
| | $\Delta\lambda$=-10nm | 0.012$\lambda$ | 8.000 | 5.000 |
| Temperature change | $\Delta$T=+30°C | 0.025$\lambda$ | 7.870 | 5.130 |
| | $\Delta$T=-30°C | 0.035$\lambda$ | 7.990 | 5.010 |
| Error of transparent base board thickness | $\Delta$t=+0.02mm | 0.017$\lambda$ | 7.738 | 5.262 |
| | $\Delta$t=-0.02mm | 0.020$\lambda$ | 8.133 | 4.867 |

Table 14

| Example 3 | | | | |
|---|---|---|---|---|
| Cause of spherical aberration fluctuation | | Wavefront aberration after correction | d0 (variable) | d2 (variable) |
| Standard state ($\lambda_1$=405nm, T=25°C, t=0.100mm) | | 0.004$\lambda$1 | 11.340 | 4.660 |
| Wavelength fluctuation of LD | $\Delta\lambda$=+10nm | 0.008$\lambda$1 | 11.370 | 4.630 |
| | $\Delta\lambda$=-10nm | 0.006$\lambda$1 | 11.316 | 4.684 |
| Temperature change | \|$\Delta$T=+30°C | 0.011$\lambda$1 | 11.129 | 4.871 |
| | $\Delta$T=-30°C | 0.018$\lambda$1 | 11.569 | 4.431 |
| Error of transparent base board thickness | $\Delta$t=+0.02mm | 0.009$\lambda$1 | 10.889 | 5 . 111 |
| | $\Delta$t=-0.02mm | 0.011$\lambda$1 | 11.833 | 4.167 |

| Cause of spherical aberration fluctuation | | Wavefront aberration after correction | d0 (variable) | d2 (variable) |
|---|---|---|---|---|
| Standard state ($\lambda$2=655nm, T=25°C, t=0.600mm) | | 0.003$\lambda$2 | 5.675 | 10.325 |
| Wavelength fluctuation of LD | $\Delta\lambda$+10nm | 0.002$\lambda$2 | 5.708 | 10 .292 |
| | $\Delta\lambda$=-10nm | 0.004$\lambda$2 | 5.630 | 10.370 |
| Temperature change | $\Delta$T=+30°C | 0.006$\lambda$2 | 5.730 | 10.270 |
| | $\Delta$T=-30°C | 0.003$\lambda$2 | 5.611 | 10.389 |
| Error of transparent base board thickness | $\Delta$t=+0.02mm | 0.004$\lambda$2 | 5.444 | 10.556 |
| | $\Delta$t=-0.02mm | 0.002$\lambda$2 | 5.891 | 10.109 |

(Example 4)

Example 4 represents a light-converging optical system capable of recording and reproducing for two types of optical information recording media one of which has a transparent base board with a thickness of 0.1 mm and the other has a transparent base board with a thickness of 0.6 mm. By using a material having large Abbe constant for an objective lens, secondary spectrum in the case of correction of axial chromatic aberration caused on the objective lens for each of areas of $\lambda$1 and $\lambda$2 by a function of the diffractive structure is controlled to be small.

In addition to the foregoing, axial chromatic aberration caused on an objective lens for each of areas of $\lambda$1 and $\lambda$2 respectively is corrected, by establishing diffractive power of a diffractive structure appropriately for refractive power and Abbe constant of the objective lens.

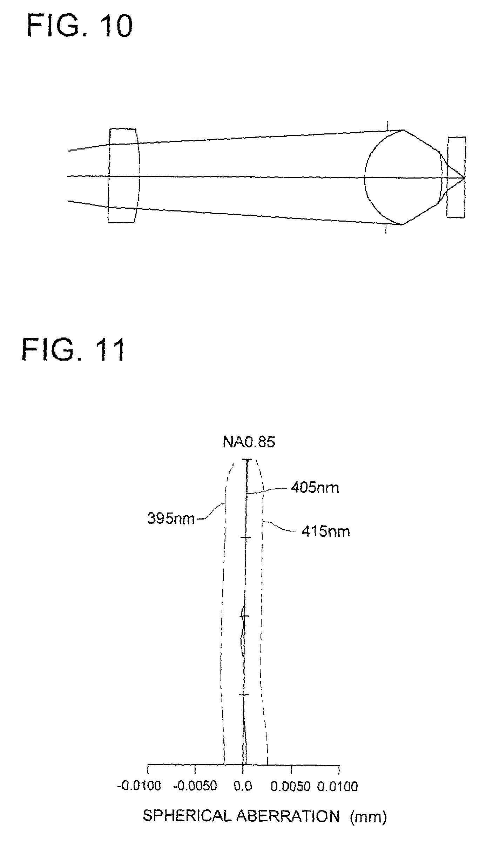

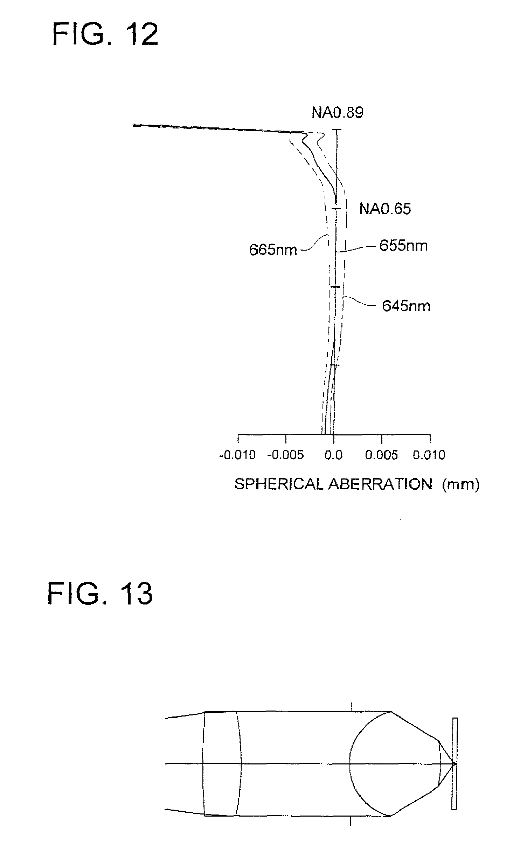

Fig. 9 shows an optical path diagram for the transparent base board having a thickness of 0.1 mm, and Fig. 10 shows an optical path diagram for the transparent base board having a thickness of 0.6 mm. As is understood from the spherical aberration diagram in Fig. 11, all apertures up to NA 0.85 for wavelength $\lambda 1 = 405$ nm and transparent base board thickness $t1 = 0.1$ mm are almost free from aberration, in this light-converging optical system. On the other hand, as shown on the spherical aberration diagram in Fig. 12, it is corrected so that all apertures up to NA 0.65 for wavelength $\lambda 2 = 655$ nm and transparent base board thickness $t2 = 0.6$ mm may be almost free from aberration.

Further, Table 15 described later shows results wherein fluctuations of spherical aberration caused on the light-converging optical system by various causes are corrected by moving the coupling lens in the direction of an optical axis. As is clear from this Table 15, spherical aberration caused by wavelength fluctuations of a laser light source, temperature changes and by errors of transparent base board thickness can be corrected satisfactorily in the light-converging optical system of Example 4. In addition, spherical aberration fluctuations caused by errors of the central thickness of the objective lens can also be corrected satisfactorily.

Further, by moving the coupling lens in the direction of an optical axis depending on a thickness of a transparent base board for the optical information recording media of two types, a degree of divergence of the light flux entering the objective lens is changed. Further, by using plastic materials for the objective lens and the coupling lens, the total light-converging optical system is made to be light in weight, and the load for the coupling lens moving device is lightened.

(Example 5)

Example 5 represents a light-converging optical system capable of recording and reproducing for two types of optical information recording media one of which has a transparent base board with a thickness of 0.1 mm and the other has a transparent base board with a thickness of 0.6 mm. Spherical aberration caused by changes of transparent base board thickness are corrected by providing a diffractive structure on the surface of an objective lens on the light source side.

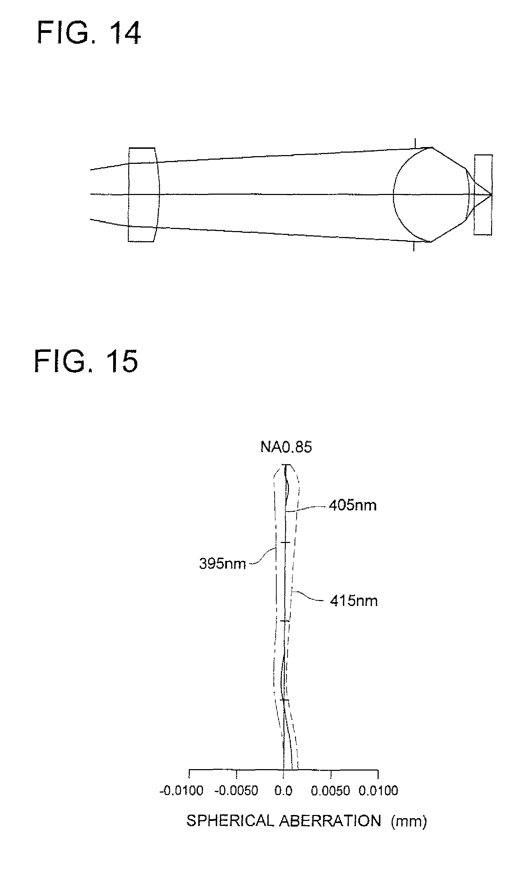

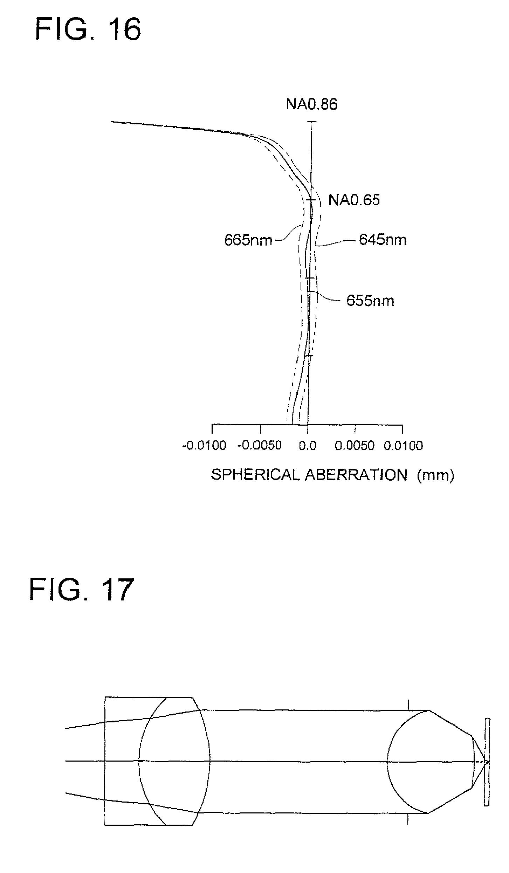

Fig. 13 shows an optical path diagram for the transparent base board having a thickness of 0.1 mm, and Fig. 14 shows an optical path diagram for the transparent base board having a thickness of 0.6 mm. As is understood from the spherical aberration diagram in Fig. 15, all apertures up to NA 0.85 for wavelength $\lambda 1 = 405$ nm and transparent base board thickness $t1 = 0.1$ mm are almost free from aberration, in this light-converging optical system. On the other hand, as shown on the spherical aberration diagram in Fig. 16, it is corrected so that all apertures up to NA 0.65 for wavelength $\lambda 2 = 655$ nm and transparent base board thickness $t2 = 0.6$ mm may be almost free from aberration.

Axial chromatic aberration generated on an objective lens for each of areas with $\lambda 1$ and $\lambda 2$ respectively is corrected satisfactorily by providing a diffractive structure on the surface of a coupling lens on the optical information recording medium side. By providing the diffractive structure only on one side of the coupling lens, deterioration of wavefront aberration caused by decentering between each surface of the coupling lens is prevented.

Table 16 shows results wherein fluctuations of spherical aberration caused on a light-converging optical system by various causes are corrected by moving a coupling lens in the direction of an optical axis. As is clear from this table, spherical aberration caused by wavelength fluctuations of a laser light source, temperature changes and by errors of transparent base board thickness can be corrected satisfactorily in the light-converging optical system of the present example.

Further, by moving the coupling lens in the direction of an optical axis depending on a thickness of a transparent base board for the optical information recording media of two types, a degree of divergence of the light flux entering the objective lens is changed. Further, by using plastic materials for the objective lens and the coupling lens, the total light-converging optical system is made to be light in weight, and the load for the focusing mechanism or for the coupling lens moving device is lightened.

(Example 6)

Example 6 represents a light-converging optical system capable of recording and reproducing for two types of optical information recording media one of which has a transparent base board with a thickness of 0.1 mm and the other has a transparent base board with a thickness of 0.6 mm. Spherical aberration caused by changes of transparent base board thickness are corrected by providing a diffractive structure on the surface of an objective lens on the light source side.

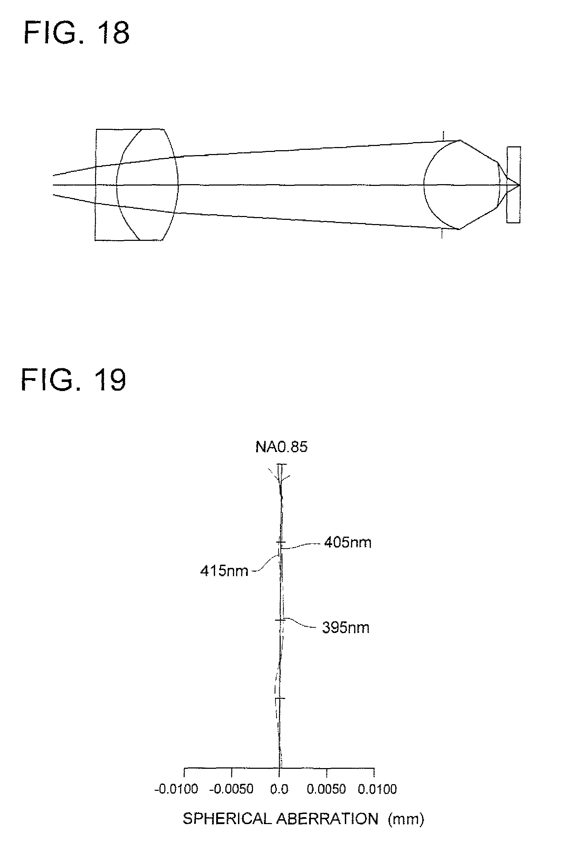

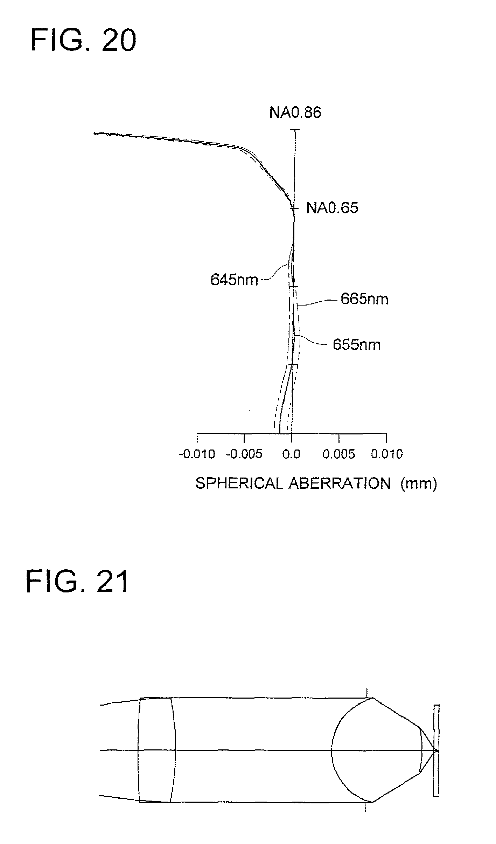

Fig. 17 shows an optical path diagram for the transparent base board having a thickness of 0.1 mm, and Fig. 18 shows an optical path diagram for the transparent base board having a thickness of 0.6 mm. As is understood from the spherical aberration diagram in Fig. 19, all apertures up to NA 0.85 for wavelength $\lambda 1 = 405$ nm and transparent base board thickness $t1 = 0.1$ mm are almost free from aberration, in this light-converging optical system. On the other hand, as shown on the spherical aberration diagram in Fig. 20, it is corrected so that all apertures up to NA 0.65 for wavelength $\lambda 2 = 655$ nm and transparent base board thickness $t2 = 0.6$ mm may be almost free from aberration.

Axial chromatic aberration generated on an objective lens for each of areas of $\lambda 1$ and $\lambda 2$ respectively is corrected satisfactorily by making the coupling lens to be a doublet lens of 2 elements in 1 group structure.

Table 17 shows results wherein fluctuations of spherical aberration caused on a light-converging optical system by various causes are corrected by moving a coupling lens in the direction of an optical axis. As is clear from this table, spherical aberration caused by wavelength fluctuations of a laser light source, temperature changes and by errors of transparent base board thickness can be corrected satisfactorily in the light-converging optical system of the present example.

Further, by moving the coupling lens in the direction of an optical axis depending on a thickness of a transparent base board for the optical information recording media of two types, a degree of divergence of the light flux entering the objective lens is changed. Further, by using plastic materials for the objective lens, the total light-converging optical system is made to be light in weight, and the load for the focusing mechanism is lightened.

Table 15

| Example 4 | | | | |
|---|---|---|---|---|
| Cause of spherical aberration fluctuation | | Wavefront aberration after correction | d0 (variable) | d2 (variable) |
| Standard state ($\lambda$1=405nm, T=25°C, t=0.100mm) | | 0.002$\lambda$1 | 8.721 | 4.279 |
| Wavelength fluctuation of LD | $\Delta\lambda$=+10nm | 0.007$\lambda$1 | 8.742 | 4.258 |
| | $\Delta\lambda$=-10nm | 0.007$\lambda$1 | 8.702 | 4.298 |
| Temperature change | $\Delta$T=+30°C | 0.003$\lambda$1 | 8.783 | 4.217 |
| | $\Delta$T=-30°C | 0.003$\lambda$1 | 8.660 | 4.340 |
| Error of transparent base board thickness | $\Delta$t=+0.02mm | 0.009$\lambda$1 | 8.473 | 4.527 |
| | $\Delta$t=-0.02mm | 0.010$\lambda$1 | 9.000 | 4.000 |
| | | | | |
| Cause of spherical aberration fluctuation | | Wavefront aberration after correction | d0 (variable) | d2 (variable) |
| Standard state ($\lambda$2=655nm, T=25°C, t=0.600mm) | | 0.003$\lambda$2 | 5.339 | 7.661 |
| Wavelength fluctuation of LD | $\Delta\lambda$ =+10nm | 0.002$\lambda$2 | 5.385 | 7.615 |
| | $\Delta\lambda$=-10nm | 0.006$\lambda$2 | 5.303 | 7.697 |
| Temperature change | $\Delta$T=+30°C | 0.001$\lambda$2 | 5.398 | 7.602 |
| | $\Delta$T=-30°C | 0.005$\lambda$2 | 5.291 | 7.709 |
| Error of transparent base board thickness | $\Delta$t=+0.02mm | 0.006$\lambda$2 | 5.213 | 7.787 |
| | $\Delta$t=-0.02mm | 0.002$\lambda$2 | 5.476 | 7.524 |

Table 16

| Example 5 | | | | |
|---|---|---|---|---|
| Cause of spherical aberration fluctuation | | Wavefront aberration after correction | d0 (variable) | d2 (variable) |
| Standard state ($\lambda$1=405nm, T=25°C, t=0.100mm) | | 0.004$\lambda$1 | 9.000 | 4.000 |
| Wavelength fluctuation of LD | $\Delta\lambda$=+10nm | 0.004$\lambda$1 | 8.990 | 4.010 |
| | $\Delta\lambda$=-10nm | 0.010$\lambda$1 | 9.065 | 3.935 |
| Temperature change | $\Delta$T=+30°C | 0.017$\lambda$1 | 8.804 | 4.196 |
| | $\Delta$T=-30°C | 0.030$\lambda$1 | 9.205 | 3.795 |
| Error of transparent base board thickness | $\Delta$t=+0.02mm | 0.009$\lambda$1 | 8.690 | 4.310 |
| | $\Delta$t=-0.02mm | 0.014$\lambda$1 | 9.334 | 3.666 |

(continued)

| Cause of spherical aberration fluctuation | | Wavefront aberration after correction | d0 (variable) | d2 (variable) |
|---|---|---|---|---|
| Standard state (λ2=655nm, T=25°C, t=0.600mm) | | 0.008λ2 | 4.532 | 8.468 |
| Wavelength fluctuation of LD | Δλ=+10nm | 0.007λ2 | 4.547 | 8.453 |
| | Δλ=-10nm | 0.008λ2 | 4.515 | 8.485 |
| Temperature change | ΔT=+30°C | 0.012λ2 | 4.523 | 8.477 |
| | ΔT=-30°C | 0.008λ2 | 4.543 | 8.457 |
| Error of transparent base board thickness | Δt=+0.02mm | 0.010λ2 | 4.417 | 8.583 |
| | Δt=-0.02mm | 0.008λ2 | 4.648 | 8.352 |

Table 17

| Example 6 | | | | |
|---|---|---|---|---|
| Cause of spherical aberration fluctuation | | Wavefront aberration after correction | d0 (variable) | d2 (variable) |
| Standard state (λ1=405nm, T=25°C, t=0.100mm) | | 0.007λ1 | 6.172 | 6.058 |
| Wavelength fluctuation of LD | Δλ=+10nm | 0.018λ1 | 6.175 | 6.055 |
| | Δλ=-10nm | 0.009λ1 | 6.185 | 6.045 |
| Temperature change | ΔT=+30°C | 0.020λ1 | 5.925 | 6.305 |
| | ΔT=-30°C | 0.051λ1 | 6.445 | 5.785 |
| Error of transparent base board thickness | Δt=+0.02mm | 0.014λ1 | 5.834 | 6.396 |
| | Δt=-0.02mm | 0.039λ1 | 6.590 | 5.640 |
| | | | | |
| Cause of spherical aberration fluctuation | | Wavefront aberration after correction | d0 (variable) | d2 (variable) |
| Standard state (λ2=655nm, T=25°C, t=0.600mm) | | 0.010λ2 | 2.684 | 9.546 |
| Wavelength fluctuation of LD | Δλ=+10nm | 0.007λ2 | 2.743 | 9.487 |
| | Δλ=-10nm | 0.008λ2 | 2.659 | 9.571 |
| Temperature change | ΔT=+30°C | 0.011λ2 | 2.694 | 9.536 |
| | ΔT=-30°C | 0.009λ2 | 2.710 | 9 .520 |
| Error of transparent base board thickness | Δt=+0.02mm | 0.009λ2 | 2.582 | 9.648 |
| | Δt=-0.02mm | 0.008λ2 | 2.821 | 9.409 |

(Example 7)

Example 7 represents a light-converging optical system suitable for recording on and reproducing from an optical information recording medium having at an light flux incident surface side two recording layers so as to put an transparent base board therebetween. A thickness of a transparent base board for the first recording layer is 0.1 mm and that for the second recording layer is 0.2 mm. Spherical aberration (its components are mainly 3rd order spherical aberration) caused by a difference between transparent base board thickness is corrected by moving the coupling lens in the direction of an optical axis.

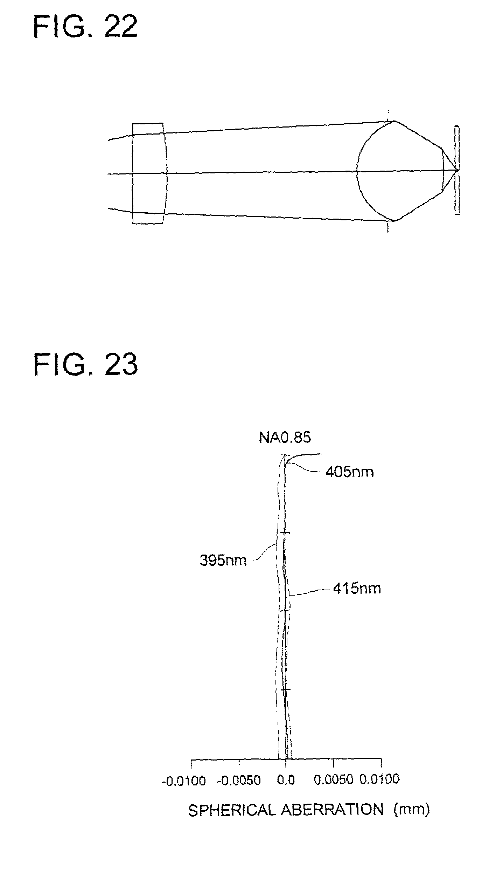

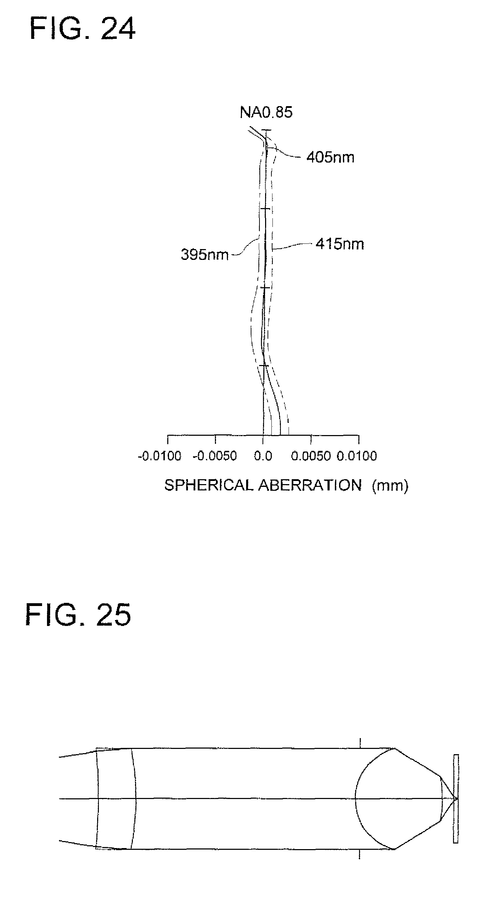

Axial chromatic aberration and chromatic spherical aberration generated on an objective lens are corrected satisfactorily by providing a diffractive structure on an objective lens on the light source side, and by using plastic materials for the objective lens and the coupling lens, the total light-converging optical system is made to be light in weight, and the load for the focusing mechanism or for the coupling lens moving device is made to be light. Fig. 21 shows an optical path diagram in the case of thickness 0.1 mm for a transparent base board, and Fig. 22 shows an optical path diagram in the case of thickness 0.2 mm for a transparent base board. Fig. 23 shows a spherical aberration diagram in the case of Fig. 21, and Fig. 24 shows a spherical aberration diagram in the case of Fig. 22.

(Example 8)

In Example 8, axial chromatic aberration and chromatic spherical aberration generated on an objective lens are corrected satisfactorily by providing a diffractive structure on the surface of the objective lens on the light source side. In the example, the axial chromatic lens on the objective lens is over-corrected, and thereby, axial chromatic aberration generated on a coupling lens is canceled by the objective lens.

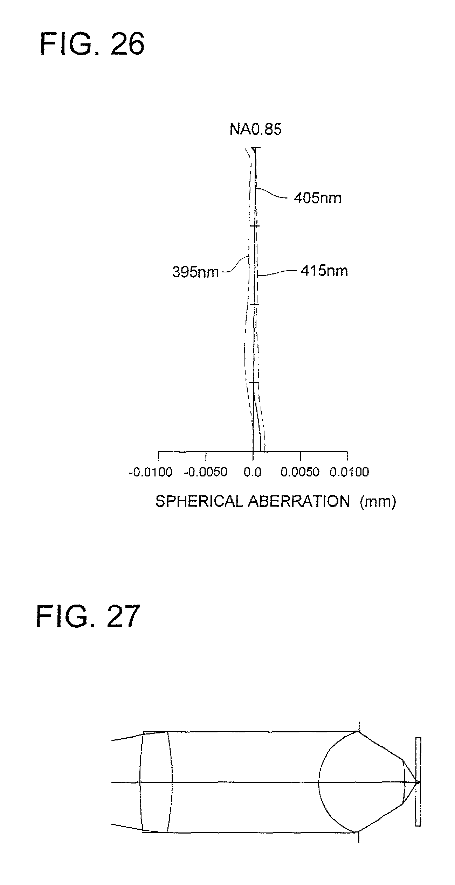

By using plastic materials for the objective lens and the coupling lens, the total light-converging optical system is made to be light in weight, and the load for the focusing mechanism or for the coupling lens moving device is made to be light. Fig. 25 shows an optical path diagram of the light-converging optical system in the Example 8, and Fig. 26 shows a spherical aberration diagram.

Further, Table 18 described later shows results wherein fluctuations of spherical aberration caused on the light-converging optical system by various causes are corrected by moving the coupling lens in the direction of an optical axis. As is clear from this Table 18, spherical aberration caused by wavelength fluctuations of a laser light source, temperature changes and by errors of transparent base board thickness can be corrected satisfactorily in the light-converging optical system of Example 8. In addition, since the objective lens in Example 8 is designed so that components of spherical aberration generated by minute errors of the central thickness may be mainly 3rd order spherical aberration, it is possible to correct satisfactorily spherical aberration caused by errors of the central thickness of the objective lens, by moving a collimator.

(Example 9)

Example 9 represents a light-converging optical system capable of recording and reproducing for two types of optical information recording media one of which has a transparent base board with a thickness of 0.1 mm and the other has a transparent base board with a thickness of 0.6 mm. Spherical aberration caused by changes of transparent base board thickness is corrected by providing a diffractive structure on the surface of an objective lens on the light source side.

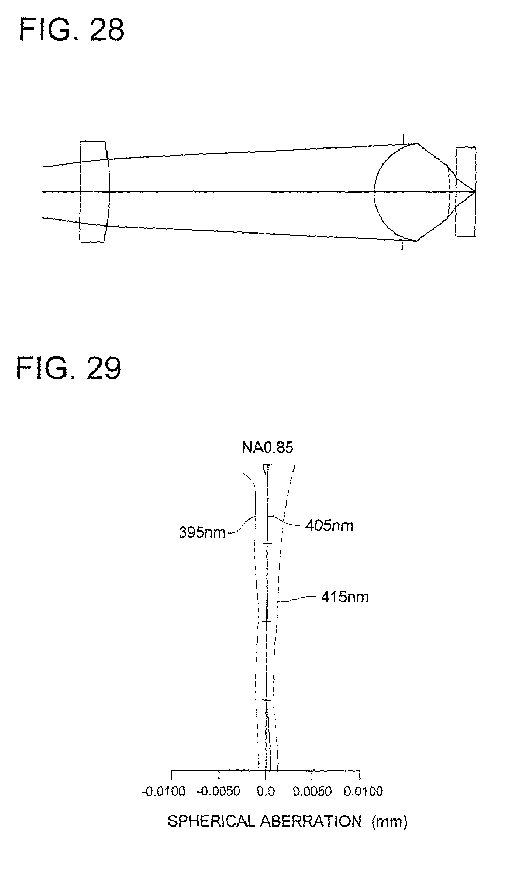

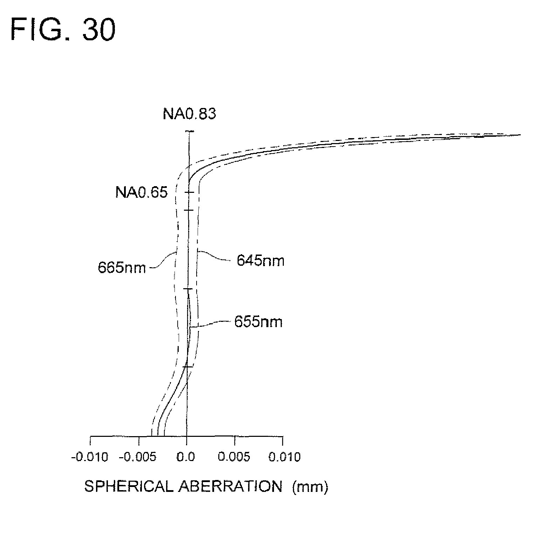

Fig. 27 shows an optical path diagram for the transparent base board having a thickness of 0.1 mm, and Fig. 28 shows an optical path diagram for the transparent base board having a thickness of 0.6 mm. As is understood from the spherical aberration diagram in Fig. 29, all apertures up to NA 0.85 for wavelength $\lambda 1 = 405$ nm and transparent base board thickness $t1 = 0.1$ mm are almost free from aberration, in this light-converging optical system. On the other hand, as shown on the spherical aberration diagram in Fig. 30, it is corrected so that all apertures up to NA 0.65 for wavelength $\lambda 2 = 655$ nm and transparent base board thickness $t2 = 0.6$ mm may be almost free from aberration.

Further, axial chromatic aberration generated on an objective lens for each of areas with $\lambda 1$ and $\lambda 2$ respectively is corrected satisfactorily by providing the diffractive structure on the surface of the coupling lens on the light source side. By providing the diffractive structure only on one side of the coupling lens, deterioration of wavefront aberration caused by decentering between each surface of the coupling lens is controlled to be small.

Table 19 shows results wherein fluctuations of spherical aberration caused on a light-converging optical system by various causes are corrected by moving a coupling lens in the direction of an optical axis. As is clear from this Table 19, spherical aberration caused by wavelength fluctuations of a laser light source, temperature changes and by errors of transparent base board thickness can be corrected satisfactorily in the light-converging optical system of Example 9.

Further, by moving the coupling lens in the direction of an optical axis depending on a thickness of a transparent base board for the optical information recording media of two types, a degree of divergence of the light flux entering the objective lens is changed. In addition, since the objective lens in the present example is designed so that components of spherical aberration generated by minute errors of the central thickness may be mainly 3rd order spherical aberration, it is possible to correct satisfactorily spherical aberration caused by errors of the central thickness of the objective lens, by moving a collimator. Further, by using plastic materials for the objective lens and the coupling lens, the total light-converging optical system is made to be light in weight, and the load for the focusing mechanism or the coupling lens moving device is lightened.

Table 18

| Example 8 | | | | |
| --- | --- | --- | --- | --- |
| Cause of spherical aberration fluctuation | | Wavefront aberration after correction | d0 (variable) | d2 (variable) |
| Standard state (λ1=405nm, T=25°C, t=0.100mm) | | 0.005λ | 9.300 | 6.700 |
| Wavelength fluctuation of LD | Δλ=+10nm | 0.006λ | 9.334 | 6.666 |
| | Δλ=-10nm | 0.011λ | 9.270 | 6.730 |
| Temperature change | ΔT=+30°C | 0.023λ | 9.174 | 6.826 |
| | ΔT=-30°C | 0.033λ | 9.424 | 6.576 |
| Error of transparent base board thickness | Δt=+0.02mm | 0.006λ | 8.949 | 7.051 |
| | Δt=-0.02mm | 0.012λ | 9.662 | 6.338 |

Table 19

| Example 9 | | | | |
| --- | --- | --- | --- | --- |
| Cause of spherical aberration fluctuation | | Wavefront aberration after correction | d0 (variable) | d2 (variable) |
| Standard state (λ1=405nm, T=25°C, t=0.100mm) | | 0.004λ1 | 9.000 | 6.000 |
| Wavelength fluctuation of LD | Δλ=+10nm | 0.003λ1 | 8.935 | 6.065 |
| | Δλ=-10nm | 0.009λ1 | 9.071 | 5.929 |
| Temperature change | ΔT=+30°C | 0.006λ1 | 8.890 | 6.110 |
| | ΔT=-30°C | 0.014λ1 | 9.122 | 5.878 |
| Error of transparent base board thickness | Δt=+0.02mm | 0.006λ1 | 8.762 | 6.238 |
| | Δt=-0.02mm | 0.009λ1 | 9.256 | 5.744 |
| | | | | |
| Cause of spherical aberration fluctuation | | Wavefront aberration after correction | d0 (variable) | d2 (variable) |
| Standard state (λ2=655nm, T=25°C, t=0.600mm) | | 0.004λ2 | 5.408 | 9.592 |
| Wavelength fluctuation of LD | Δλ=+10nm | 0.004λ2 | 5.417 | 9.583 |
| | Δλ=-10nm | 0.004λ2 | 5.408 | 9.592 |
| Temperature change | ΔT=+30°C | 0.005λ2 | 5.437 | 9.563 |
| | ΔT=-30°C | 0.006λ2 | 5.390 | 9.610 |
| Error of transparent base board thickness | Δt=+0.02mm | 0,004λ2 | 5.322 | 9.678 |
| | Δt=-0.02mm | 0.004λ2 | 5.503 | 9.497 |

In the descriptive text for each of Examples 10 - 20 and lens data tables for Examples 10 - 20 shown below, $NA_{OBJ}$ represents a numerical aperture of an objective lens on the image side, $f_{OBJ}$ represents a focal length at a design basis standard wavelength of an objective lens, and λ represents a design basis standard wavelength.

In the lens data of Examples 10 - 20, the standard wavelength (blazed wavelength) of the refracting surface coefficient agrees with the wavelength λ of the light source.

Further, in the lens data of Examples 10 - 20, the diffractive surface coefficient is determined so that the 1st ordered diffracted ray may have an amount that is larger than that of any other ordered ray. However, it is also possible that the diffractive surface coefficient is determined so that high ordered diffracted ray of the 2nd ordered or higher may have an amount that is larger than that of any other ordered diffracted ray.

Table 20

Example list

| Example | | 10 | 11 | 12 | 13 | 14 | 15 |
|---|---|---|---|---|---|---|---|
| Diffractive surface | | First surface | First surface | First surface | First surface | First surface / Second surface | First surface |
| Diffraction order | First surface | 1 | 1 | 1 | 1 | | 1 |
| | Second surface | - | - | - | - | | - |
| Lens material | | Plastic | Plastic | Plastic | Plastic | Plastic | Glass |
| $f_{OBJ}$ (mm) | | 2.667 | 1.875 | 1.765 | 1.765 | 1.765 | 1.765 |
| $NA_{OBJ}$ | | 0.75 | 0.80 | 0.85 | 0.85 | 0.85 | 0.85 |
| $\lambda$ (nm) | | 405 | 405 | 655 | 405 | 405 | 405 |

| $fD/f$ | | 11.5 | 14.8 | 41.1 | 15.7 | 4.5 | 15.7 |
|---|---|---|---|---|---|---|---|
| $\lambda \cdot f \cdot \Sigma(ni/(Mi \cdot Pi^2))$ | | 0.26 | 0.46 | 0.23 | 0.53 | 0.43 | 0.45 |
| $(X1-X2) \cdot (N-1)/(NA \cdot f)$ | | 0.38 | 0.40 | 0.45 | 0.44 | 0.43 | 0.45 |
| $b_{4i} \cdot (himax)^4 / (\lambda \cdot f \cdot NA^4)$ | First surface | 96 | 1 | -8 | -65 | -31 | -58 |
| | Second surface | - | - | - | - | -34 | - |
| $|(Ph/Pf)-2|$ | First surface | 0.8 | 2.0 | 2.7 | 2.0 | 0.4 | 1.7 |
| | Second surface | - | - | - | - | 0.0 | - |
| $\Delta CA/\Delta SA$ | | - | - | - | - | - | - |

| Example | | 16 | 17 | 18 | 19 | 20 |
|---|---|---|---|---|---|---|
| Diffractive surface | | First surface Second surface | First surface | First surface Second surface | First surface | First surface |
| Diffraction order | First surface | 1 | 1 | 1 | 1 | 1 |
| | Second surface | 1 | – | 1 | – | – |
| Lens material | | Glass | Plastic | Plastic | Plastic | Plastic |
| $f_{OBJ}$ (mm) | | 1.765 | 2.273 | 1.667 | 2.222 | 1.765 |
| $NA_{OBJ}$ | | 0.85 | 0.88 | 0.90 | 0.90 | 0.85 |
| $\lambda$ (nm) | | 405 | 405 | 405 | 405 | 405 |

| | | | | | | |
|---|---|---|---|---|---|---|
| $fD/f$ | | 5.0 | 15.0 | 16.7 | 16.1 | 10.5 |
| $\lambda \cdot f \cdot \Sigma (ni/(Mi \cdot Pi^2))$ | | 1.20 | 0.97 | 1.72 | 1.27 | 0.19 |
| $(X1-X2) \cdot (N-1)/(NA \cdot f)$ | | 0.45 | 0.49 | 0.48 | 0.52 | 0.44 |
| $b_{4i} \cdot (himax)^4/(\lambda \cdot f \cdot NA^4)$ | First surface | -33 | -175 | -105 | -130 | 0 |
| | Second surface | -18 | – | -121 | – | – |
| $\|(Ph/Pf)-2\|$ | First surface | 0.0 | 2.9 | 6.3 | 4.0 | 0.0 |
| | Second surface | 2.4 | – | 1.6 | – | – |
| $\Delta CA/\Delta SA$ | | – | – | – | – | -0.5 |

(Example 10)

The objective lens in Example 10 is a bi-aspherical objective lens with $NA_{OBJ}$ = 0.75, $f_{OBJ}$ = 2.667 mm and $\lambda$ = 405 nm. As a lens material, there was used a plastic material wherein the internal transmission factor in the vicinity of 400 nm was 90% or more and the saturation water absorption was not more than 0.1%. In the objective lens in Example 10, axial chromatic aberration was corrected by forming on the aspheric surface on the light source side a diffractive structure having positive power. Further, a change of spherical aberration caused by a change of wavelength in a small amount was controlled to be small by using a high order term of not less than 4th order of the optical path difference function showing the diffractive structure. When it is assumed that an amount of instantaneous wavelength change caused by a mode hop of a violet semiconductor laser that cannot be followed by focusing of the objective lens is +1 nm, a defocus component of wavefront aberration in the case of mode hop in the objective lens in Example 10 is not more than 0.001 $\lambda$rms.

Table 21

Example 10

NA$_{OBJ}$=0.75, f$_{OBJ}$=2.667, $\lambda$=405nm

| Surface No. | Remarks | r (mm) | d (mm) | N$\lambda$ | vd |
|---|---|---|---|---|---|
| 0 | Diaphragm | ∞ | | | |
| 1 | Objective lens | 1.915 | 2.900 | 1.56037 | 55.0 |
| 2 | | -4.456 | 0.870 | | |
| 3 | Transparent base board | ∞ | 0.300 | 1.61950 | 30.0 |
| 4 | | ∞ | | | |

Aspherical coefficient

| Surface No. | 1 | 2 |
|---|---|---|
| $\kappa$ | -6.41010E-01 | 1.72346E+00 |
| A4 | 8.00670E-03 | 1.01811E-01 |
| A6 | -9.11060E-05 | -7.10669E-02 |
| A8 | -3.06660E-04 | 3.66800E-02 |
| A10 | 8.14520E-05 | -1.22905E-02 |
| A12 | -8.17660E-06 | 1.90782E-03 |
| A14 | 1.99640E-06 | |
| A16 | -2.89380E-07 | |

Diffractive surface coefficient

| Surface No. | 1 |
|---|---|
| b2 | -1.63000E-02 |
| b4 | 2.05590E-03 |
| b6 | -6.63630E-04 |
| b8 | -9.17880E-05 |
| b10 | 2.73080E-05 |

(Example 11)

The objective lens in Example 11 is a bi-aspherical objective lens with NA$_{OBJ}$ = 0.80, f$_{OBJ}$ = 1.875 mm and $\lambda$ = 405 nm. As a lens material, there was used a plastic material wherein the internal transmission factor in the vicinity of 400 nm was 90% or more and the saturation water absorption was not more than 0.1%. In the objective lens in Example 11, axial chromatic aberration was corrected by forming on the aspheric surface on the light source side a diffractive structure having positive power. Further, a change of spherical aberration caused by a change of wavelength in a small amount was controlled to be small by using a high order term of not less than 4th order of the optical path difference function showing the diffractive structure. A defocus component of wavefront aberration in the case of mode hop in the objective lens in Example 10 is 0.001 $\lambda$rms.

Table 22

Example 11

NA$_{OBJ}$=0.80, f$_{OBJ}$=1.875, λ=405nm

| Surface No. | Remarks | r(mm) | d(mm) | Nλ | νd |
|---|---|---|---|---|---|
| 0 | Diaphragm | ∞ | | | |
| 1 | Objective lens | 1.364 | 2.550 | 1.56037 | 55.0 |
| 2 | | -1.748 | 0.444 | | |
| 3 | Transparent base board | ∞ | 0.100 | 1.61950 | 30.0 |
| 4 | | ∞ | | | |

Aspherical coefficient

| Surface No. | 1 | 2 |
|---|---|---|
| κ | -6.79920E-01 | -4.04602E+01 |
| A4 | 1.50590E-02 | 2.16165E-01 |
| A6 | 4.29380E-04 | -4.71774E-01 |
| A8 | -1.35450E-03 | 5.16381E-01 |
| A10 | 1.91340E-03 | -3.17013E-01 |
| A12 | -7.12830E-04 | 8.06678E-02 |
| A14 | 1.33660E-04 | |
| A16 | 1.63880E-05 | |
| A18 | -1.20020E-05 | |
| A20 | -2.69500E-06 | |

Diffractive surface coefficient

| Surface No. | 1 |
|---|---|
| b2 | -1.80000E+00 |
| b4 | 3.37080E-05 |
| b6 | -1.36900E-03 |
| b8 | -5.52560E-04 |
| b10 | 4.75200E-04 |
| b12 | -3.83440E-05 |
| b14 | -1.34940E-05 |
| b16 | -4.32630E-06 |

(Example 12)

The objective lens in Example 12 is a bi-aspherical objective lens with NA$_{OBJ}$ = 0.85, f$_{OBJ}$ = 1.765 mm and λ = 655 nm. As a lens material, there was used a plastic material wherein the internal transmission factor in the vicinity of 655 nm was 90% or more and the saturation water absorption was not more than 0.1%. In the objective lens in Example 12, axial chromatic aberration was corrected by forming on the aspheric surface on the light source side a diffractive structure having positive power. Further, a change of spherical aberration caused by a change of wavelength in a small amount was controlled to be small by using a high order term of not less than 4th order of the optical path difference function showing the diffractive structure. When it is assumed that an amount of instantaneous wavelength change caused by a mode hop of a red semiconductor laser that cannot be followed by focusing of the objective lens is +3 nm, a defocus component of wavefront aberration in the case of mode hop in the objective lens in Example 12 is 0.001 λrms.

Table 23

Example 12

$NA_{OBJ}=0.85$, $f_{OBJ}=1.765$, $\lambda=655nm$

| Surface No. | Remarks | r (mm) | d (mm) | Nλ | vd |
|---|---|---|---|---|---|
| 0 | Diaphragm | | | | |
| 1 | Objective lens | 1.210 | 2.680 | 1.50673 | 56.5 |
| 2 | | -0.872 | 0.342 | | |
| 3 | Transparent base board | ∞ | 0.100 | 1.57752 | 30.0 |
| 4 | | ∞ | | | |

Aspherical coefficient

| Surface No. | 1 | 2 |
|---|---|---|
| κ | -6.89310E-01 | -1.90308E+01 |
| A4 | 1.81650E-02 | 2.93358E-01 |
| A6 | -2.65050E-03 | -6.33226E-01 |
| A8 | 4.89910E-03 | 5.46447E-01 |
| A10 | 2.90660E-04 | -1.85876E-01 |
| A12 | -9.65310E-04 | -2.52298E-04 |
| A14 | -2.29250E-04 | |
| A16 | 2.29980E-04 | |
| A18 | 1.01560E-04 | |
| A20 | -5.89110E-05 | |

Diffractive surface coefficient

| Surface No. | 1 |
|---|---|
| b2 | -6.89430E-03 |
| b4 | -9.83830E-04 |
| b6 | 4.18320E-05 |
| b8 | -7.10440E-05 |
| b10 | -3.99760E-05 |

(Example 13)

The objective lens in Example 13 is a bi-aspherical objective lens with $NA_{OBJ}$ = 0.85, $f_{OBJ}$ = 1.765 mm and λ = 405 nm. As a lens material, there was used a plastic material wherein the internal transmission factor in the vicinity of 400 nm was 90% or more and the saturation water absorption was not more than 0.1%. In the objective lens in Example 13, axial chromatic aberration was corrected by forming on the aspheric surface on the light source side a diffractive structure having positive power. Further, a change of spherical aberration caused by a change of wavelength in a small amount was controlled to be small by using a high order term of not less than 4th order of the optical path difference function showing the diffractive structure. A defocus component of wavefront aberration in the case of mode hop in the objective lens in Example 13 is 0.011 λrms.

Table 24

Example 13

$NA_{OBJ}=0.85,\ f_{OBJ}=1.765,\ \lambda=405nm$

| Surface No. | Remarks | r (mm) | d (mm) | Nλ | νd |
|---|---|---|---|---|---|
| 0 | Diaphragm | | | | |
| 1 | Objective lens | 1.286 | 2.550 | 1.56037 | 55.0 |
| 2 | | -1.352 | 0.342 | | |
| 3 | Transparent base board | ∞ | 0.100 | 1.61950 | 30.0 |
| 4 | | ∞ | | | |

Aspherical coefficient

| Surface No. | 1 | 2 |
|---|---|---|
| κ | -5.68250E-01 | -4.39670E+01 |
| A4 | 5.48180E-03 | 3.36428E-01 |
| A6 | -3.16510E-03 | -8.18253E-01 |
| A8 | 7.94800E-03 | 8.46297E-01 |
| A10 | -4.20640E-03 | -3.01652E-01 |
| A12 | 4.13280E-04 | -5.58799E-02 |
| A14 | 5.39340E-04 | |
| A16 | -1.78600E-04 | |
| A18 | 6.30010E-06 | |
| A20 | -3.70150E-06 | |

Diffractive surface coefficient

| Surface No. | 1 |
|---|---|
| b2 | -1.80000E-02 |
| b4 | -4.79270E-03 |
| b6 | 4.68280E-04 |
| b8 | 1.97170E-04 |
| b10 | -1.79110E-04 |

(Example 14)

The objective lens in Example 14 is a bi-aspherical objective lens with $NA_{OBJ}$ = 0.85, $f_{OBJ}$ = 1.765 mm and λ = 405 nm. As a lens material, there was used a plastic material wherein the internal transmission factor in the vicinity of 400 nm was 90% or more and the saturation water absorption was not more than 0.1%. In the objective lens in Example 14, a diffractive structure having positive power was formed on the aspheric surface on the light source side and on the aspheric surface on the optical information recording medium side, for dispersing diffractive power necessary for correction of axial chromatic aberration and for relaxing an interval in the direction perpendicular to an optical axis between adjoining diffractive ring-shaped zones. Further, a change of spherical aberration caused by a change of wavelength in a small amount was controlled to be small by using a high order term of not less than 4th order of the optical path difference function showing the diffractive structure. A defocus component of wavefront aberration in the case of mode hop in the objective lens in Example 14 is 0.011 λrms.

Table 25

Example 14

$NA_{OBJ}$=0.85, $f_{OBJ}$=1.765, $\lambda$=405nm

| Surface No. | Remarks | r (mm) | d (mm) | N$\lambda$ | vd |
|---|---|---|---|---|---|
| 0 | Diaphragm | | | | |
| 1 | Objective lens | 1.311 | 2.600 | 1.56037 | 55.0 |
| 2 | | -1.543 | 0.356 | | |
| 3 | Transparent base board | ∞ | 0.100 | 1.61950 | 30.0 |
| 4 | | ∞ | | | |

Aspherical coefficient

| Surface No. | 1 | 2 |
|---|---|---|
| κ | -5.70090E-01 | -5.47030E+01 |
| A4 | 4.79700E-03 | 3.60220E-01 |
| A6 | -3.17910E-03 | -8.15380E-01 |
| A8 | 8.20180E-03 | 8.40600E-01 |
| A10 | -3.98350E-03 | -3.05780E-01 |
| A12 | 4.42940E-04 | -5.58800E-02 |
| A14 | 5.27830E-04 | |
| A16 | -1.90040E-04 | |
| A18 | 5.42840E-06 | |
| A20 | -2.57410E-07 | |

Diffractive surface coefficient

| Surface No. | 1 | 2 |
|---|---|---|
| b2 | -1.50000E-02 | -4.80000E-02 |
| b4 | -4.27910E-03 | -4.56290E-03 |
| b6 | 9.71400E-04 | 4.87510E-03 |
| b8 | 3.79510E-04 | |
| b10 | -9.88470E-05 | |

(Example 15)

The objective lens in Example 15 is a bi-aspherical objective lens with $NA_{OBJ}$ = 0.85, $f_{OBJ}$ = 1.765 mm and $\lambda$ = 405 nm. As a lens material, there was used MlaC130 (made by HOYA Co.). In the objective lens in Example 15, axial chromatic aberration was corrected by forming on the aspheric surface on the light source side a diffractive structure having positive power. Further, a change of spherical aberration caused by a change of wavelength in a small amount was controlled to be small by using a high order term of not less than 4th order of the optical path difference function showing the diffractive structure. A defocus component of wavefront aberration in the case of mode hop in the objective lens in Example 15 is 0.006 $\lambda$rms.

Table 26

Example 15

$NA_{OBJ}=0.85$, $f_{OBJ}=1.765$, $\lambda=405nm$

| Surface No. | Remarks | r(mm) | d(mm) | Nλ | νd |
|---|---|---|---|---|---|
| 0 | Diaphragm | | | | |
| 1 | Objective lens | 1.469 | 2.580 | 1.71558 | 53.3 |
| 2 | | -3.508 | 0.313 | | |
| 3 | Transparent base board | ∞ | 0.100 | 1.61950 | 30.0 |
| 4 | | ∞ | | | |

Aspherical coefficient

| Surface No. | 1 | 2 |
|---|---|---|
| κ | -4.60410E-01 | -4.02877E+02 |
| A4 | 2.19850E-03 | 3.61766E-01 |
| A6 | -4.66870E-03 | -1.22684E+00 |
| A8 | 6.98400E-03 | 1.75074E+00 |
| A10 | -3.51040E-03 | -1.02084E+00 |
| A12 | 3.47710E-04 | -2.52228E-04 |
| A14 | 3.24050E-04 | |
| A16 | -1.11810E-04 | |

Diffractive surface coefficient

| Surface No. | 1 |
|---|---|
| b2 | -1.80000E-02 |
| b4 | -4.25450E-03 |
| b6 | -4.49120E-05 |
| b8 | 7.82220E-04 |
| b10 | -3.03930E-04 |

(Example 16)

The objective lens in Example 16 is a bi-aspherical objective lens with $NA_{OBJ}$ = 0.85, $f_{OBJ}$ = 1.765 mm and $\lambda$ = 405 nm. As a lens material, there was used MNBF82 (made by HOYA Co.). In the objective lens in Example 16, a diffractive structure having positive power was formed on the aspheric surface on the light source side and on the aspheric surface on the optical information recording medium side, for dispersing diffractive power necessary for correction of axial chromatic aberration and for relaxing an interval in the direction perpendicular to an optical axis between adjoining diffractive ring-shaped zones. Further, a change of spherical aberration caused by a change of wavelength in a small amount was controlled to be small by using a high order term of not less than 4th order of the optical path difference function showing the diffractive structure. A defocus component of wavefront aberration in the case of mode hop in the objective lens in Example 16 is 0.003 λrms.

Table 27

Example 16

$NA_{OBJ}=0.85$, $f_{OBJ}=1.765$, $\lambda=405nm$

| Surface No. | Remarks | r (mm) | d (mm) | Nλ | vd |
|---|---|---|---|---|---|
| 0 | Diaphragm | | | | |
| 1 | Objective lens | 1.643 | 2.550 | 1.85403 | 40.7 |
| 2 | | 8.646 | 0.307 | | |
| 3 | Transparent base board | ∞ | 0.100 | 1.61950 | 30.0 |
| 4 | | ∞ | | | |

Aspherical coefficient

| Surface No. | 1 | 2 |
|---|---|---|
| κ | -5.92090E-01 | 0.00000E+00 |
| A4 | 6.66760E-03 | 5.26280E-01 |
| A6 | 2.44820E-03 | -2.18900E+00 |
| A8 | -8.85650E-04 | 4.85120E+00 |
| A10 | 3.95960E-04 | -4.15790E+00 |
| A12 | 2.78400E-04 | -7.78810E-05 |
| A14 | -1.86060E-04 | |
| A16 | -1.72880E-05 | |
| A18 | 3.67460E-05 | |
| A20 | -7.70340E-06 | |

Diffractive surface coefficient

| Surface No. | 1 | 2 |
|---|---|---|
| b2 | -2.77440E-02 | -2.84340E-02 |
| b4 | -2.46430E-03 | -9.06730E-02 |
| b6 | 9.19820E-05 | -1.39440E-02 |
| b8 | -2.11860E-04 | -6.46650E-02 |
| b10 | 1.33950E-04 | -2.49170E-01 |

(Example 17)

The objective lens in Example 17 is a bi-aspherical objective lens with $NA_{OBJ}$ = 0.88, $f_{OBJ}$ = 2.273 mm and $\lambda$ = 405 nm. As a lens material, there was used a plastic material wherein the internal transmission factor in the vicinity of 400 nm was 90% or more and the saturation water absorption was not more than 0.1%. In the objective lens in Example 17, axial chromatic aberration was corrected by forming on the aspheric surface on the light source side a diffractive structure having positive power. Further, a change of spherical aberration caused by a change of wavelength in a small amount was controlled to be small by using a high order term of not less than 4th order of the optical path difference function showing the diffractive structure. A defocus component of wavefront aberration in the case of mode hop in the objective lens in Example 17 is 0.051 $\lambda$rms.

Table 28

Example 17

$NA_{OBJ}=0.88$, $f_{OBJ}=2.273$, $\lambda=405nm$

| Surface No. | Remarks | r (mm) | d (mm) | Nλ | vd |
|---|---|---|---|---|---|
| 0 | Diaphragm | | | | |
| 1 | Objective lens | 1.597 | 3.220 | 1.85403 | 40.7 |
| 2 | | -2.020 | 0.459 | | |
| 3 | Transparent base board | ∞ | 0.050 | 1.61950 | 30.0 |
| 4 | | ∞ | | | |

Aspherical coefficient

| Surface No. | 1 | 2 |
|---|---|---|
| κ | -6.96710E-01 | -7.28018E+01 |
| A4 | -9.11750E-04 | 2.27544E-01 |
| A6 | 3.63810E-03 | -2.92191E-01 |
| A8 | 2.03600E-06 | 1.87414E-01 |
| A10 | 3.74390E-05 | -4.87689E-02 |
| A12 | -8.51220E-06 | -1.06557E-05 |
| A14 | 1.45070E-06 | |
| A16 | 1.02320E-06 | |
| A18 | -2.02090E-07 | |
| A20 | 1.28450E-09 | |

Diffractive surface coefficient

| Surface No. | 1 |
|---|---|
| b2 | -1.47060E-02 |
| b4 | -6.04900E-03 |
| b6 | 1.25550E-03 |
| b8 | 7.26750E-05 |
| b10 | -8.43540E-05 |
| b12 | 3.36070E-06 |
| b14 | 1.55520E-06 |
| b16 | -2.24120E-07 |

(Example 18)

The objective lens in Example 18 is a bi-aspherical objective lens with $NA_{OBJ}$ = 0.90, $f_{OBJ}$ = 1.667 mm and λ = 405 nm. As a lens material, there was used a plastic material wherein the internal transmission factor in the vicinity of 400 nm was 90% or more and the saturation water absorption was not more than 0.1%. In the objective lens in Example 18, a diffractive structure having positive power was formed on the aspheric surface on the light source side and on the aspheric surface on the optical information recording medium side, for dispersing diffractive power necessary for correction of axial chromatic aberration and for relaxing an interval in the direction perpendicular to an optical axis between adjoining diffractive ring-shaped zones. Further, a change of spherical aberration caused by a change of wavelength in a small amount was controlled to be small by using a high order term of not less than 4th order of the optical path difference function showing the diffractive structure. A defocus component of wavefront aberration in the case of mode hop in the objective lens in Example 18 is 0.020 λrms.

Table 29

Example 18

NA$_{OBJ}$=0.90, f$_{OBJ}$=1.667, λ=405nm

| Surface No. | Remarks | r (mm) | d (mm) | Nλ | vd |
|---|---|---|---|---|---|
| 0 | Diaphragm | | | | |
| 1 | Objective lens | 1.237 | 2.520 | 1.56037 | 55.0 |
| 2 | | -1.062 | 0.320 | | |
| 3 | Transparent base board | ∞ | 0.050 | 1.56037 | 30.0 |
| 4 | | ∞ | | | |

Aspherical coefficient

| Surface No. | 1 | 2 |
|---|---|---|
| κ | -6.46800E-01 | -3.60880E+01 |
| A4 | -8.83050E-04 | 5.89520E-01 |
| A6 | 1.16500E-02 | -1.09310E+00 |
| A8 | -3.72480E-03 | 1.29000E+00 |
| A10 | 3.03420E-03 | -8.19720E-01 |
| A12 | -3.35550E-04 | -2.20050E-04 |
| A14 | -3.22730E-04 | |
| A16 | 3.12030E-05 | |
| A18 | 7.11790E-05 | |
| A20 | -5.99840E-06 | |

Diffractive surface coefficient

| Surface No. | 1 | 2 |
|---|---|---|
| b2 | -1.80000E-02 | 0.00000E+00 |
| b4 | -9.15570E-03 | -1.74220E-01 |
| b6 | 2.54090E-03 | -4.84020E-02 |
| b8 | 9.97970E-04 | 3.64290E-01 |
| b10 | -2.49880E-04 | -4.89460E-01 |
| b12 | -2.50240E-04 | 4.30880E-01 |
| b14 | 3.95110E-05 | |
| b16 | 4.80190E-05 | |

(Example 19)

The objective lens in Example 19 is a bi-aspherical objective lens with NA$_{OBJ}$ = 0.90, f$_{OBJ}$- = 2.222 mm and λ = 405 nm. As a lens material, there was used a plastic material wherein the internal transmission factor in the vicinity of 400 nm was 90% or more and the saturation water absorption was not more than 0.1%. In the objective lens in Example 19, axial chromatic aberration was corrected by forming on the aspheric surface on the light source side a diffractive structure having positive power. Further, a change of spherical aberration caused by a change of wavelength in a small amount was controlled to be small by using a high order term of not less than 4th order of the optical path difference function showing the diffractive structure. A defocus component of wavefront aberration in the case of mode hop in the objective lens in Example 19 is 0.035 $\lambda$rms.

Table 30

Example 19

$NA_{OBJ}=0.90$, $f_{OBJ}=2.222$, $\lambda=405nm$

| Surface No. | Remarks | r (mm) | d (mm) | N$\lambda$ | vd |
|---|---|---|---|---|---|
| 0 | Diaphragm | | | | |
| 1 | Objective lens | 1.562 | 3.200 | 1.56037 | 55.0 |
| 2 | | -1.833 | 0.430 | | |
| 3 | Transparent base board | ∞ | 0.050 | 1.61950 | 30.0 |
| 4 | | ∞ | | | |

Aspherical coefficient

| Surface No. | 1 | 2 |
|---|---|---|
| K | -5.90670E-01 | -7.42228E+01 |
| A4 | -1.59160E-03 | 2.49747E-01 |
| A6 | 2.34430E-03 | -3.24661E-01 |
| A8 | -1.19450E-04 | 2.09780E-01 |
| A10 | 1.37550E-04 | -5.47619E-02 |
| A12 | -4.66040E-06 | -1.06545E-05 |
| A14 | -5.25050E-06 | |
| A16 | 1.12520E-06 | |
| A18 | 3.27640E-07 | |
| A20 | -9.09930E-08 | |

Diffractive surface coefficient

| Surface No. | 1 |
|---|---|
| b2 | -1.40000E-02 |
| b4 | -4.80100E-03 |
| b6 | 5.46750E-04 |
| b8 | 1.37010E-04 |
| b10 | -5.04610E-05 |
| b12 | 1.87380E-06 |
| b14 | 1.09100E-07 |
| b16 | -1.80980E-07 |

(Example 20)

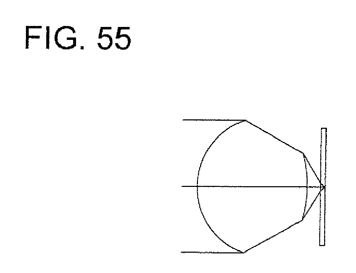

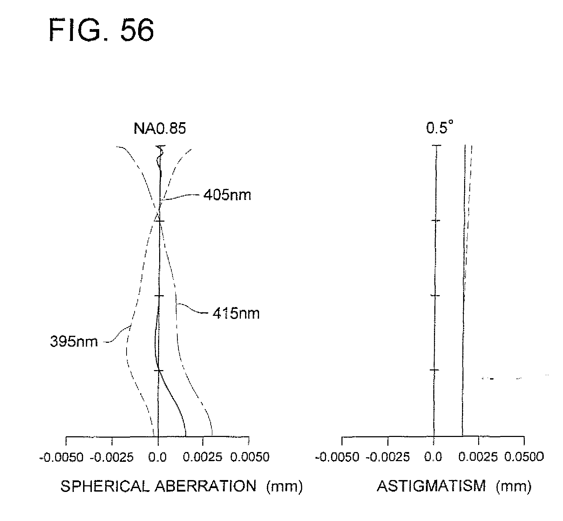

The objective lens in Example 20 is a bi-aspherical objective lens with $NA_{OBJ}$ = 0.85, $f_{OBJ}$ = 1.755 mm and $\lambda$ = 405 nm. The lens data is indicated in Table 31, the optical path is shown in Fig. 55 and the spherical aberration and astigmatic aberration are shown in Fig. 56. As a lens material, there was used a plastic material wherein the internal transmission factor in the vicinity of 400 nm was 90% or more and the saturation water absorption was not more than 0.1%. In the objective lens in Example 20, axial chromatic aberration was corrected by forming on the aspheric surface on the light source side a diffractive structure having positive power. In this case, as shown in a spherical aberration diagram in Fig. 56, a movement of the best focus position in the case of a change of wavelength of the light source was controlled to be small by making a spherical aberration curve for the design basis standard wavelength (405 nm), a spherical aberration curve for the long wavelength side (415 nm) and a spherical aberration curve for the short wavelength side (395 nm) to cross each other, under the condition of over-correction of axial chromatic aberration of the objective lens. Incidentally, amount of change ΔCA of axial chromatic aberration is shown by a width of movement of the bottom end of the spherical aberration curve for 405 nm and 415 nm in the spherical aberration diagram in Fig. 56, when a wavelength of the light source is changed by +10 nm toward the long wavelength side, and the direction for the movement is in the direction in which the back focus becomes shorter, depending on the change of the wavelength of the light source toward the long wavelength side. Amount of change ΔSA of spherical aberration of marginal ray of light is shown by a width between an upper end of the spherical aberration curve and an upper end of a spherical aberration curve for 415 nm in the case of parallel displacement of the spherical aberration curve for 405 nm to the position where the bottom end of the spherical aberration curve for 405 nm overlaps with that of the spherical aberration curve for 415 nm. Further, in the objective lens in Example 20, it was possible to multiply the minimum interval of the diffractive ring-shaped zones in an effective diameter by 1.7, by relaxing the interval of adjoining diffractive ring-shaped zones in the direction perpendicular to an optical axis without correcting the spherical aberration caused by the change of wavelength, compared with the objective lens in Example 13 wherein spherical aberration caused by the change of wavelength was corrected. A defocus component of wavefront aberration in the case of a mode hop in the objective lens in Example 20 is not more than 0.001 λrms.

Table 31

Example 20

$NA_{OBJ}=0.85$, $f_{OBJ}=1.765$, $\lambda=405nm$

| Surface No. | Remarks | r (mm) | d (mm) | Nλ | vd |
|---|---|---|---|---|---|
| 0 | Diaphragm | | | | |
| 1 | Objective lens | 1.335 | 2.520 | 1.56037 | 55.0 |
| 2 | | -1.416 | 0.351 | | |
| 3 | Transparent base board | ∞ | 0.100 | 1.61950 | 30.0 |
| 4 | | ∞ | | | |

Aspherical coefficient

| Surface No. | 1 | 2 |
|---|---|---|
| κ | -5.33800E-01 | -3.98083E+01 |
| A4 | 1.31110E-02 | 3.43726E-01 |
| A6 | -3.76070E-03 | -8.37765E-01 |
| A8 | 7.87750E-03 | 9.23861E-01 |
| A10 | -3.94330E-03 | -3.62683E-01 |
| A12 | 4.99270E-04 | -5.58799E-02 |
| A14 | 5.34370E-04 | |
| A16 | -1.89530E-04 | |
| A18 | 2.74060E-06 | |
| A20 | 3.15440E-07 | |

Diffractive surface coefficient

| Surface No. | 1 |
|---|---|
| b2 | -2.70000E-02 |

In the objective lens of each of Examples 10 - 20 stated above, a coefficient of diffractive surface (coefficient of optical path difference function) was determined so that the first order diffracted light may have the maximum amount of diffracted light among diffracted light generated by the diffractive structure.

Incidentally, in the above Tables and drawings, E (or e) is used for expression of the exponent for 10, and an example thereof is E - 02 (= $10^{-2}$).

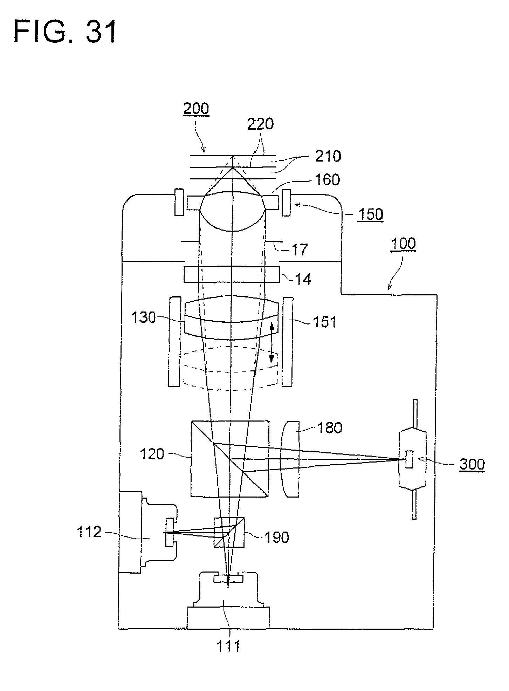

Nest, optical pickup device of the first to fourth embodiments according to the invention will be explained as follows, referring to Figs. 31 to 34.

As shown in Fig. 31, an optical pickup device of the first embodiment has therein semiconductor laser 111 representing a first light source for reproducing a first optical disk having a thin transparent base board and semiconductor laser 112 representing a second light source for reproducing a second optical disk having a thick transparent base board. As the first optical disk, it is possible to use a high density advanced optical disk having a 0.1 mm-thick transparent base board, for example, and as the second optical disk, it is possible to use conventional optical disk, namely, various types of DVDs such as DVD having a 0.6 mm-thick transparent base board, DVD-ROM, DVE-RAM, DVD-R, DVD-RW and DVD+RW or various types of CDs such as CD having a 1.2 mm-thick transparent base board, CD-R, CD-RW, CD-Video and CD-ROM.

As the first light source, it is possible to use a GaN type violet semiconductor laser emitting light with a wavelength of about 400 nm and a violet SHG laser, and as the second light source, it is possible to use a red semiconductor laser emitting light with a wavelength of about 650 nm and an infrared laser emitting light with a wavelength of about 780 nm.

The optical pickup device of the first embodiment in Fig. 31 has therein objective lens 160 that can converge light fluxes coming from both semiconductor lasers 111 and 112 respectively on information recording surfaces respectively of the first optical disk and the second optical disk so that the diffraction limit may be kept within a prescribed numerical aperture on the image side. On at least one surface of the objective lens 160, there is formed a diffractive structure in a ring-shaped zonal form which can converge a light flux coming from the first light source on an information recording surface of the first optical disk through the transparent base board within numerical aperture NA1 on the image side that is necessary when reproducing the first optical disk, and can converge a light flux coming from the second light source on an information recording surface of the second optical disk through the transparent base board within numerical aperture NA2 on the image side that is necessary when reproducing the second optical disk. Numerical aperture NA1 on the image side necessary when reproducing the first optical disk can be made to be about 0.85, for example, and numerical aperture NA2 on the image side necessary when reproducing the second optical disk can be made to be about 0.60 for DVD and to be about 0.45 for CD.

First, when reproducing the first optical disk, a beam is emitted from the first semiconductor laser 111, and a light flux thus emitted passes through beam splitter 190 that is a combining means for light emitted respectively from both semiconductor lasers 111 and 112, and then, passes through beam splitter 120, collimator 130 and quarter wavelength plate 14 to become a circularly polarized parallel light flux. This light flux is stopped down by diaphragm 17 and then is converged by objective lens 160 on information recording surface 220 through transparent base board 210 of the first optical disk 200 as shown with solid lines in the diagram. In this case, the objective lens 160 converges a light flux coming from the first semiconductor laser 111 so that the diffraction limit may be kept within numerical aperture NA1 on the image side. Therefore, the first optical disk that is a high density advanced optical disk can be reproduced.

Then, the light flux modulated by information bits on information recording surface 220 and reflected passes through objective lens 160, diaphragm 17, quarter wavelength plate 14 and collimator 130 again and enters beam splitter 120 where the light flux is reflected and is given astigmatism by cylindrical lens 180 to enter photo-detector 300, thus, the output signals therefrom are used to obtain reading signals for information recorded on the first optical disk 200.

Further, a change in amount of light caused by changes of a form and a position of a spot on the photo-detector 300 is detected to conduct focusing detection and tracking detection. Based on these detections, two-dimensional actuator 150 moves objective lens 160 so that a light flux emitted from the first semiconductor laser 111 may be converged on recording surface 220 of the first optical disk 200, and moves objective lens 160 so that a light flux emitted from the first semiconductor laser 111 may be formed on a prescribed track.

When reproducing the second optical disk, a beam is emitted from the second semiconductor laser 112, and a light flux thus emitted is reflected on beam splitter 190 representing a light combining means, and in the same way as in the light flux emitted from the first semiconductor 111, the light flux passes through beam splitter 120, collimator 130, quarter wavelength plate 14, diaphragm 17 and objective lens 160 to be converged on information recording surface 220 as shown with broken lines in Fig. 31 through transparent base board 210 of the second optical disk 200. In this case, the objective lens 160 converges the light flux emitted from the second semiconductor laser 112 so that the diffraction limit may be kept within numerical aperture NA2 on the image side, and thereby, the second optical disk representing the conventional optical disk can be reproduced. When the light flux emitted from the semiconductor laser 112 is converged on information recording surface 220 of the second optical disk, a light flux passing through an area between the numerical apertures on the image side NA2 and NA1 is made to be a flare component by the function of the diffractive structure formed on at least one surface of the objective lens 160.

Therefore, even when a light flux emitted from the semiconductor laser 112 is made to pass through the whole area of the diaphragm 17 determined by NA1, the light flux passing through the area between the numerical apertures on the image side NA2 and NA1 does not form a spot on the information recording surface 220. Due to this, it is not necessary to provide an aperture switching means between NA1 and NA2, which is advantageous in terms of cost.

Then, the light flux modulated by information bits on information recording surface 220 and reflected passes through objective lens 160, diaphragm 17, quarter wavelength plate 14, collimator 130, beam splitter 120 and cylindrical lens 180 again and enters photo-detector 300, thus, the output signals therefrom are used to obtain reading signals for information recorded on the second optical disk 200.

Further, in the same way as in the first optical disk, a change in an amount of light caused by changes of a form and a position of a spot on the photo-detector 300 is detected to conduct focus detection and track detection, and objective lens 160 is moved by two-dimensional actuator 150 for focusing and tracking.

In the pickup device of the first embodiment shown in Fig. 31, collimator 130 is moved in the direction of an optical axis by one-dimensional actuator 151 to correct the spherical aberration that is caused when the refractive index of a lens material or the lens shape is changed by temperature or humidity fluctuations, when there is an error in a thickness of transparent base board 210, when there is an error in generated wavelength caused by manufacturing errors of semiconductor lasers 111 and 112, or when there is an error in a thickness of a lens constituting a light-converging optical system. Further, collimator 130 that is movable in the direction of an optical axis changes a degree of divergence of a light flux entering objective lens 160, depending on the thickness of a transparent base board of an optical disk as shown with broken lines in the diagram.

In the optical pickup device of the first embodiment shown in Fig. 31, axial chromatic aberration caused on objective lens 160 is corrected by making collimator 130 to be a doublet lens wherein a positive lens having a large Abbe number relatively and a negative lens having a small Abbe number relatively are cemented. In this case, correction of axial chromatic aberration in a wavelength area of each of semiconductor lasers 111 and 112 is balanced by selecting appropriately a difference of Abbe number between the positive lens and the negative lens and by selecting power appropriately.

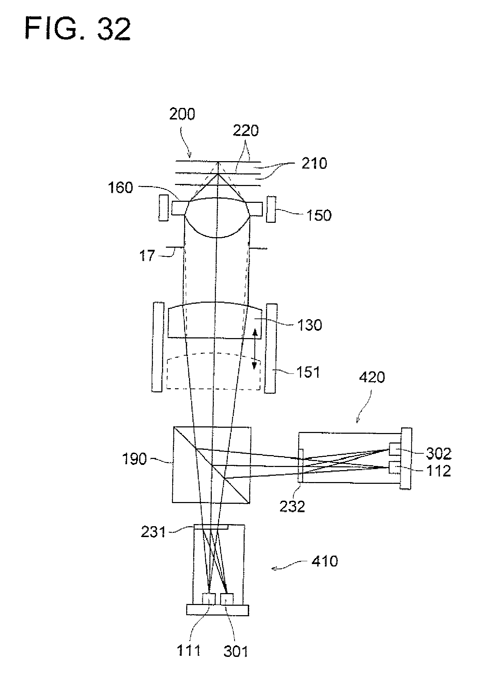

As shown in Fig. 32, the first semiconductor laser 111 is unitized in laser/detector integrated unit 410 together with photo-detector 301 and hologram 231 in the optical pickup device of the second embodiment. The second semiconductor laser 112 is unitized in laser/detector integrated unit 420 together with photo-detector 302 and hologram 232.

When reproducing the first optical disk, the light flux emitted from the first semiconductor laser 111 passes through hologram 231, then, passes through beam splitter 190 representing a light combining means and collimator 130 to become a parallel light flux, and then, is further stopped down by diaphragm 17 to be converged by objective lens 160 on information recording surface 220 through transparent base board 210 of the first optical disk 200 as shown with solid lines in the diagram.

Then, the light flux modulated by information bits and reflected on information recording surface 220 passes through collimator 130 and beam splitter 190 through objective lens 160 and diaphragm 17 again, and is diffracted by hologram 231 to enter photo-detector 301, and thereby, output signals therefrom are used and signals of reading information recorded on the first optical disk 200 are obtained. Further, changes in amount of light caused by changes of forms and positions of the spot on the photo-detector 301 are detected for focus detection and track detection, and objective lens 160 is moved by two-dimensional actuator 150 for focusing and tracking.

When reproducing the second optical disk, the light flux emitted from the second semiconductor laser 112 passes through hologram 232, then, is reflected by beam splitter 190 representing a light combining means and passes through collimator 130 to be converged on information recording surface 220 further through diaphragm 17 and objective lens 160 and further through transparent base board 210 of the second optical disk 200 as shown with broken lines in Fig. 32.

Then, the light flux modulated by information bits and reflected on information recording surface 220 passes through collimator 130 through objective lens 160 and diaphragm 17 again, and is reflected by beam splitter 190 and diffracted by hologram 232 to enter photo-detector 302, and thereby, output signals therefrom are used and signals of reading information recorded on the second optical disk 200 are obtained.

Further, a change in an amount of light caused by changes of a form and a position of a spot on the photo-detector 302 is detected to conduct focus detection and track detection, and based on this detection, objective lens 160 is moved by two-dimensional actuator 150 for focusing and tracking.

In the optical pickup device of the second embodiment shown in Fig. 32, spherical aberration caused on each optical surface of a light-converging optical system is corrected by moving collimator 130 in the direction of an optical axis with one-dimensional actuator 151. Further, the collimator 130 movable in the direction of an optical axis changes a degree of divergence of the light flux entering objective lens 160 depending on the thickness of a transparent base board of an optical disk as shown with broken lines in the diagram.

In the optical pickup device of the second embodiment shown in Fig. 32, a ring-shaped zonal diffractive structure is formed on at least one surface of the collimator 130 to correct axial chromatic aberration caused on the objective lens 160. In this case, correction of axial chromatic aberration in a wavelength area of each of semiconductor lasers 111 and 112 is balanced by selecting appropriately the diffractive power of the diffractive structure and the refractive power as a refractive lens.

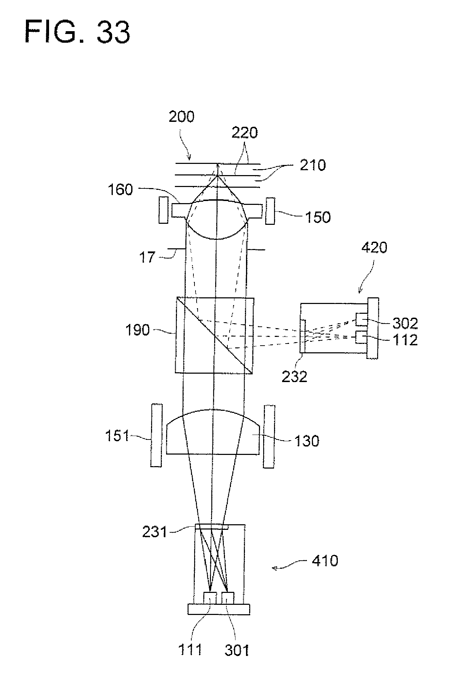

In the optical pickup device of the third embodiment shown in Fig. 33, a divergent light flux emitted from the second semiconductor laser 112 enters objective lens 160 without passing through collimator 130. Due to this, it is not necessary to change a degree of divergence of the light flux entering the objective lens 160 depending on the thickness of a transparent base board of an optical disk, as in the first and second optical pickup device stated above. Therefore, an amount of movement in the direction of an optical axis for the collimator 130 can be small, which is advantageous for down-sizing of an optical pickup device.

As is shown in Fig. 33, in the optical pickup device of the third embodiment, the first semiconductor laser 111 is unitized in laser/detector integrated unit 410 together with photo-detector 301 and hologram 231. The second semiconductor laser 112 is unitized in laser/detector integrated unit 420 together with photo-detector 302 and hologram 232.

When reproducing the first optical disk, the light flux emitted from the first semiconductor laser 111 passes through hologram 231, then, passes through collimator 130 to become a parallel light flux, and is stopped down by diaphragm 17 after passing through beam splitter 190 representing a light combining means to be converged by objective lens 160 on information recording surface 220 through transparent base board 210 of the first optical disk 200 as shown with solid lines in the diagram.

Then, the light flux modulated by information bits and reflected on information recording surface 220 passes through beam splitter 190 and collimator 130 through objective lens 160 and diaphragm 17 again, and is diffracted by hologram 232 to enter photo-detector 301, and thereby, output signals therefrom are used and signals of reading information recorded on the first optical disk 200 are obtained. Further, a change in an amount of light caused by changes of a form and a position of a spot on the photo-detector 301 is detected to conduct focus detection and track detection, and objective lens 160 is moved by two-dimensional actuator 150 for focusing and tracking.

When reproducing the second optical disk, the light flux emitted from the second semiconductor laser 112 passes through hologram 232, then, is reflected by beam splitter 190 representing a light combining means and passes through diaphragm 17 and objective lens 160 to be converged on information recording surface 220 through transparent base board 210 of the second optical disk 200 as shown with broken lines in Fig. 32.

Then, the light flux modulated by information bits and reflected on information recording surface 220 is reflected by beam splitter 190 through objective lens 160 and diaphragm 17 again, and is diffracted by hologram 232 to enter photo-detector 302, and thereby, output signals therefrom are used, and signals of reading information recorded on the second optical disk 200 are obtained.

Further, a change in an amount of light caused by changes of a form and a position of a spot on the photo-detector 302 is detected to conduct focus detection and track detection, and based on this detection, objective lens 160 is moved by two-dimensional actuator 150 for focusing and tracking.

In the optical pickup device of the third embodiment shown in Fig. 33, spherical aberration caused on each optical surface of a light-converging optical system is corrected by moving collimator 130 in the direction of an optical axis with one-dimensional actuator 151.

In the optical pickup device of the third embodiment in Fig. 33, there is formed a ring-shaped zonal diffractive structure is formed on at least one surface of collimator 130, and thereby, axial chromatic aberration caused on the objective lens 160 is corrected.

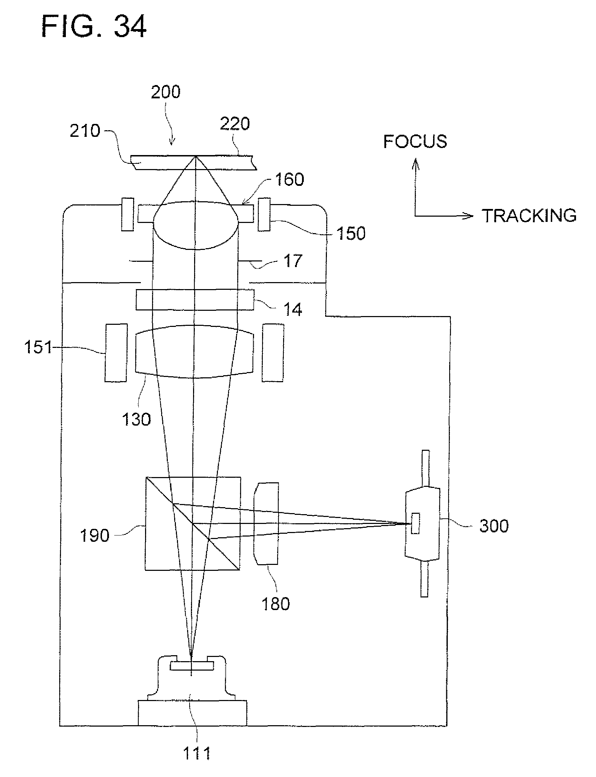

The optical pickup device of the fourth embodiment shown in Fig. 34 is an optical pickup device that is suitable for recording and/or reproducing for advanced high density recording. In the fourth optical pickup device shown in Fig. 34, there are provided semiconductor laser 111 representing a light source, collimator 130 and objective lens 160.

In the fourth optical pickup device shown in Fig. 34, fluctuations of spherical aberration caused on a light-converging optical system can be corrected by moving collimator 130 in the direction of an optical axis with a one-dimensional axial actuator 151. The semiconductor laser 111 is a GaN type violet semiconductor laser that emits a light flux having a wavelength of about 400 nm. Further, as a light source emitting a light flux having a wavelength of about 400 nm, a violet SHG laser may also be used in addition to the GaN type violet semiconductor laser stated above.

Further, there is provided a diffractive pattern that is in a shape of almost concentric circles about an optical axis on at least one optical surface of objective lens 160. Incidentally, the diffractive pattern that is in a shape of almost concentric circles may be provided either on both surfaces of the objective lens 160, or on at least one optical surface of collimator 130. Though the diffractive pattern of the objective lens is made to be almost concentric circles about the optical axis, a diffractive pattern other than this may also be provided.

A divergent light flux emitted from semiconductor laser 111 passes through beam splitter 120, then, passes through quarter wavelength plate 14 after being transformed into a parallel light flux by collimator 130 to become a circularly polarized beam, and then, becomes a spot formed on information recording surface 220 by the objective lens 160 through transparent base board 210 of a high density recording optical disk. The objective lens 160 is controlled by actuator 150 arranged on its periphery in terms of focus control and tracking control. The reflected light flux modulated by information bits on image recording surface 220 passes through objective lens 160, quarter wavelength plate 14 and collimator 130 again, then is reflected by beam splitter 120, and passes through cylindrical lens 180 to be given astigmatism, and to be converged on photo-detector 300. Thus, it is possible to read information recorded on information recording surface 220, by using output signals of photo-detector 300.

In the present embodiment, when the refractive index of a lens material or the lens shape is changed by temperature or humidity fluctuations, when there is an error in a thickness of transparent base board 220, when there is an error in generated wavelength caused by manufacturing errors of semiconductor lasers 111, or when there is an error in a thickness of a lens constituting a light-converging optical system, there is caused spherical aberration (hereinafter referred to as spherical aberration A) on a wavefront converged on information recording surface 220. When the spherical aberration A is detected, collimator 130 is moved by one-dimensional actuator 151 by a prescribed amount in the direction of an optical axis to change a degree of divergence of the light flux entering objective lens 160 (namely, changing a position of object point of objective lens 160) so that spherical aberration (hereinafter referred to as spherical aberration B) may be generated. In this case, the collimator 130 is moved so that a sign of spherical aberration B may be opposite to that of spherical aberration A and their absolute values may mostly agree. Therefore, on the wavefront converged on information recording surface 220, spherical aberration A and spherical aberration B are canceled each other to be corrected.

In the present embodiment, a diffractive pattern that is in a shape of almost concentric circles as stated above is provided on an optical surface of objective lens 160, and thereby, a light flux emitted from semiconductor laser 111 is converged on information recording surface 220 of an optical disk, while being almost free from axial chromatic aberration, after passing through the objective lens 160.

Structures (1) - (37) make it possible to provide a light and inexpensive objective lens for recording on or reproducing from an optical information recording medium which is capable of coping with a high numerical aperture and a short wavelength, and is corrected satisfactorily in terms of axial chromatic aberration.

Structures (38) - (54) make it possible to provide a light-converging optical system, an optical pickup device and a recording device as well as a reproducing device, wherein a simple structure can correct effectively fluctuations of spherical aberration caused on each optical surface of the optical pickup device by changes in generated wavelength of a laser light source, changes in temperature and humidity and by errors of thickness of transparent base board of an optical information recording medium. It is also possible to correct effectively axial chromatic aberration caused on an objective lens by mode hop phenomenon of the laser light source and by high frequency superposition.

Structures (55) - (76) make it possible to provide an objective lens for recording or reproducing of information for a plurality of optical information recording media each having a different thickness of a transparent base board.

Structures (77) - (93) make it possible to provide a light-converging optical system, an optical pickup device and a recording device as well as a reproducing device, wherein a laser light source with a short wavelength and an objective lens with a high numerical aperture are provided, and recording or reproducing of information for a plurality of optical information recording media each having a different thickness of a transparent base board can be conducted.

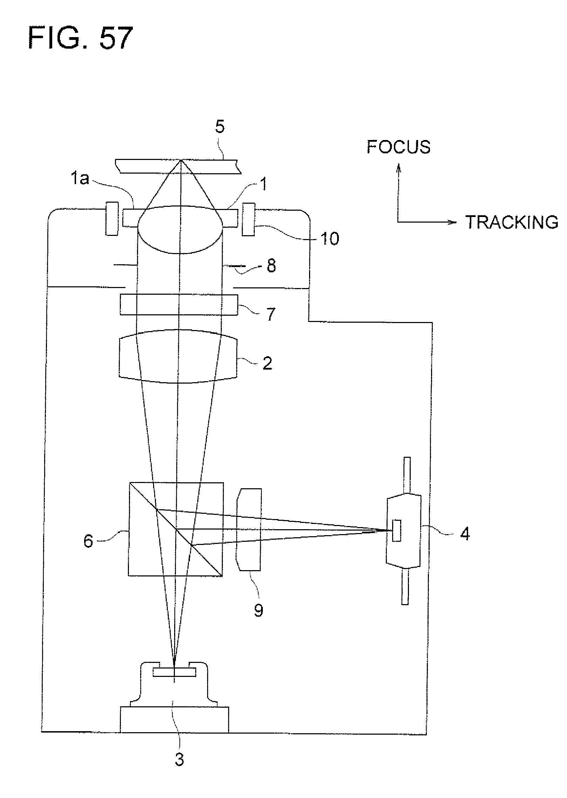

Fig. 57 is a diagram showing schematically the optical pickup device of Fifth Embodiment of the invention.

The optical pickup device in Fig. 57 is equipped with objective lens 1 of 1 element in 1 group construction, semiconductor laser 3 representing a light source, coupling lens 2 of one-group one-element construction that changes an angle of divergence of a divergent light emitted from light source 3, and with photodetector 4 that receives a reflected light from information recording surface 5 of an optical information recording medium. The semiconductor laser 3 emits a laser beam having a wavelength of 600 nm or less, and reproducing of information recorded on information recording surface 5 at higher density than a conventional optical information recording medium and/or recording of information on information recording surface 5 at higher density than a conventional optical disk is possible.

The optical pickup device in Fig. 57 is equipped with beam splitter 6 that separates a reflected light from information recording surface 5 toward photo-detector 4, 1/4 wavelength plate 7 arranged between coupling lens 2 and objective lens 1, diaphragm 8 arranged to precede the objective lens 1, light-converging lens 9 and with dual axis actuator 10 for focusing and tracking. In the present embodiment, the light-converging optical system has therein a light source, a beam splitter, a coupling lens, a 1/4 wavelength plate, an objective lens and a diaphragm. Incidentally, in the present embodiment, a beam splitter may be regarded not to be included in the light-converging optical system.

Further, the objective lens 1 has flange portion 1a that has a plane extending in the direction perpendicular to an optical axis. This flange portion le makes it possible to mount the objective lens 1 on the optical pickup device accurately. The coupling lens 2 has a diffractive structure which generates axial chromatic aberration having polarity opposite to that of axial chromatic aberration generated on the objective lens 1.

Reproduction of information from information recording surface 5 of the optical information recording medium will be explained. A divergent light emitted from the semiconductor laser 3 passes a polarization beam splitter 6, is changed by coupling lens 2 in terms of an angle of divergence, and is converged on information recording surface 5 of the optical information recording medium by the objective lens 1 through 1/4 wavelength plate 7 and diaphragm 8, then, a light flux modulated by information bits and reflected on the information recording surface 5 enters photodetector 4 through objective lens 1, diaphragm 8, 1/4 wavelength plate 7, coupling lens 2, beam splitter 6 and light-converging lens 9, and information recorded on an information recording surface of the optical information recording medium by output signals generated through the foregoing can be reproduced.

When a mode hop phenomenon takes place on semiconductor laser 3 in the course of reproducing information as state above, the semiconductor laser 3 emits a laser beam having a short wavelength of 600 nm or less, and thereby, an amount of change in a light-converging position for the objective lens 1 is large and axial chromatic aberration is caused. However, axial chromatic aberration having polarity opposite to that of axial chromatic aberration caused on the objective lens 1 is caused by the diffractive structure on the coupling lens 2, and therefore, the wavefront in the case of forming a spot on information recording surface 5 of an optical information recording medium through the light-converging optical system including the coupling lens 2 and the objective lens 1 is in the state where the axial chromatic aberration is canceled, and thus, the axial chromatic aberration is satisfactorily corrected within a range of wavelength fluctuations of the light source as the total light-converging optical system. Even in the case of recording information on information recording surface 5 of an optical information recording medium, the wavefront in the case of forming a spot on information recording surface 5 of an optical information recording medium through the light-converging optical system including the coupling lens 2 and the objective lens 1 is in the state where the axial chromatic aberration is canceled even when a mode hop phenomenon takes place on semiconductor laser 3, and thereby, information can be recorded stably, in the same way as in the foregoing.

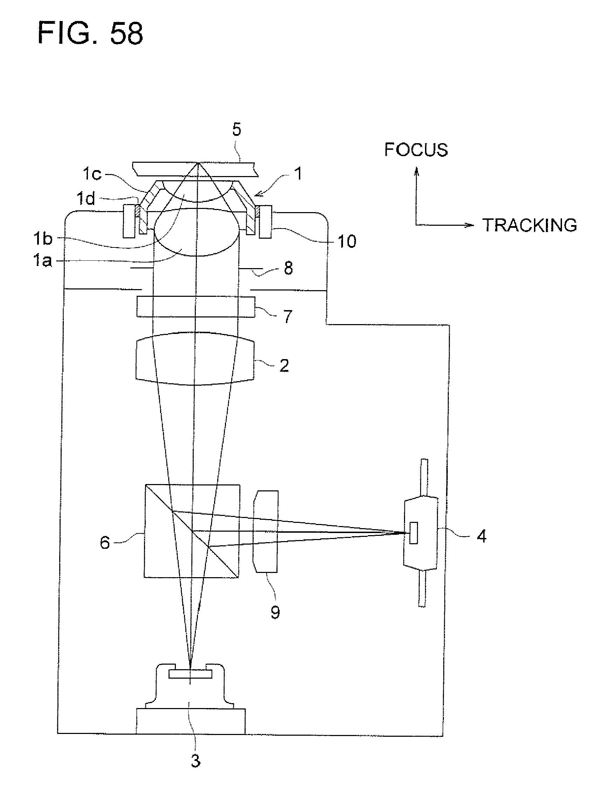

Next, another optical pickup device will be explained as follows, referring to the drawings. Optical pickup device in Fig. 58 is different from that in Fig. 57 on the point that objective lens 1 in Fig. 58 is of 2 elements in 2 groups structure. In Fig. 58, objective lens 1 is composed of first lens 1a and second lens 1b, and the objective lens 1 and the second lens 1b are integrated solidly by holding member Ic. Flange portion Id of the holding member Ic makes it possible to mount the objective lens 1 accurately on the optical pickup device. In the optical pickup device in Fig. 58, axial chromatic aberration having polarity opposite to that of axial chromatic aberration caused on the objective lens 1 is caused by the diffractive structure on the coupling lens 2 in the same way as in Fig. 57, and thus, the axial chromatic aberration is satisfactorily corrected within a range of wavelength fluctuations of the light source as the total light-converging optical system.

Next, an optical element of the Sixth Embodiment of the invention will be explained. This optical element is a diffractive optical element on which a diffractive structure in a shape of ring-shaped zones is provided, and it can constitute the coupling lens in Fig. 57 and Fig. 58.

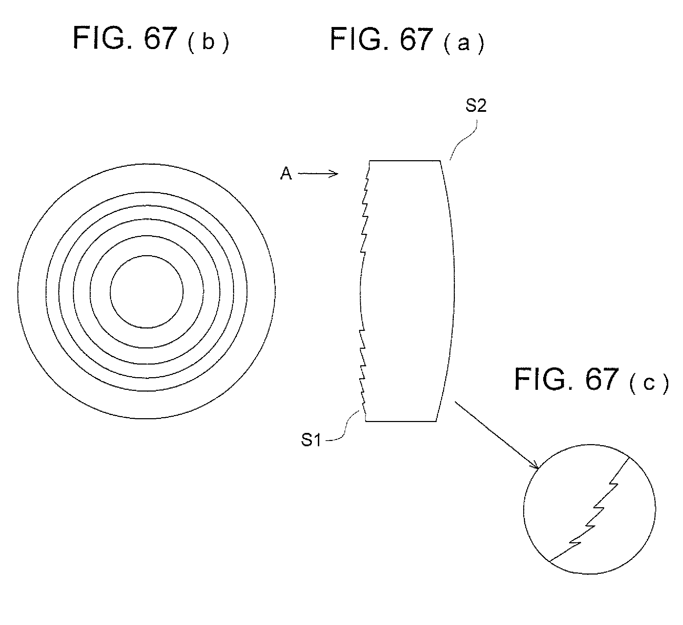

Fig. 67 shows a sectional view (a) and a front view viewed from the direction A both of an optical element wherein optical surface (S1) on one side is a flat surface on which a diffractive structure in a shape of ring-shaped zones is formed and optical surface (S2) on the other side is made to be an aspheric refractive surface. Though the ring-shaped zone structure on the S1 surface is emphasized in Fig. 67, the actual ring-shaped zone structure is a minute structure wherein an interval of ring-shaped zones in the direction perpendicular to an optical axis is about several microns, and a height of the ring-shaped zone in the direction of an optical axis is about 1 $\mu$m. Though the S2 surface is made to be an aspheric refractive surface, it may also be a spherical refractive surface, or it may further be one wherein a diffractive structure in a shape of ring-shaped zones is formed on an aspheric refractive surface and/or a spherical refractive surface, as shown in an enlarged diagram of S2 surface in Fig. 67 (c). In this case, when the ring-shaped zone structure on the S2 surface is determined so that $P_2/\lambda > 20$ abovementioned formula (10) may be satisfied, cutting metal mold work by SPDT is possible.

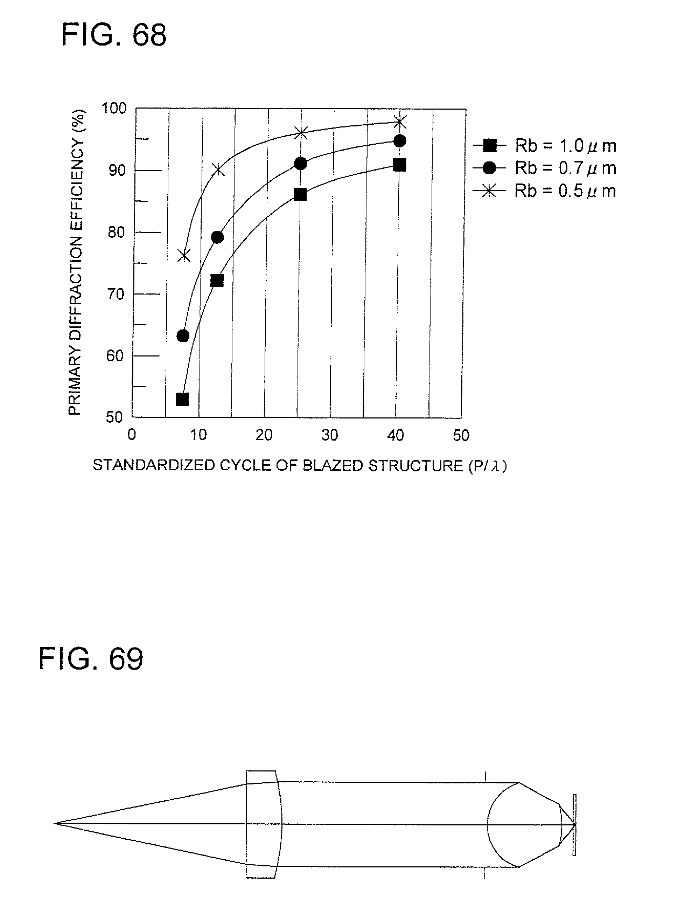

Fig. 68 is a diagram showing the relationship between a cycle ($P_1/\lambda$) of a blazed structure in the case of forming the blazed structure on a flat base board by using cutting tools each being 1.0 $\mu$m, 0.7 $\mu$m and 0.5 $\mu$m in terms of radius (Rb) of a tip for cutting work and a theoretical value of the first order diffraction efficiency. However, the refractive index of the base board was made to be 1.5 and wavelength ($\lambda$) was made to be 405 nm.

As is clear from Fig. 68, even when a cutting tool whose radius Rb of a tip portion is 0.5 $\mu$m is used, it is unavoidable that the diffraction efficiency goes down to 80% or lower when cycle $P_1/\lambda$ of the blazed structure is 10 or less, and therefore, sufficient light utilization efficiency cannot be obtained. Therefore, when cycle of the blazed structure normalized with the wavelength goes down to 20 or less, or in particular, to 10 or less, a method for making a diffractive optical element by an electron beam drafting method that is free from a fear of causing a phase uncomfortable portion is extremely effective.

Next, Examples 21 - 27 in the invention will be explained. Table 32 shows a list of data relating to a coupling lens, an objective lens and a compound system of the foregoing in each example.

Table 1

| List of Examples | | | | | | | | | |
|---|---|---|---|---|---|---|---|---|---|
| Examples | | | 21 | 22 | 23 | 24 | 25 | 26 | 27 |
| Coupling lens | Structure | | One-group one-element (One side diffraction) | One-group one-element (Both sides diffraction) | One-group one -element (Both sides diffraction) | One-group one-element (Both sides diffraction) | One-group one-element (One side diffraction) | One-group one-element (Both sides diffraction) | One-group one-element (Both sides diffraction) |
| | $\lambda$ (nm) | | 405 | 405 | 405 | 405 | 405 | 405 | 405 |
| | NA | | 0.125 | 0.080 | 0.125 | 0.080 | 0.200 | 0.200 | 0.075 |
| | f(mm) | | 12.00 | 18.75 | 12.00 | 18.75 | 9.35 | 9.35 | 20.00 |
| | Diffraction order | (Light source side) | 1 | 1 | 1 | 1 | 1 | 1 | 2 |
| | | (Optical information recording medium side) | - | 1 | 1 | 1 | - | 1 | 2 |
| | $P_D/P_{TOTAL}$ | | 0.7 | 1.1 | 0.5 | 0.7 | 2.2 | 2.4 | 0.9 |
| | $f \cdot \lambda \cdot \Sigma(ni/(Mi \cdot Pi^2))$ | | 1.5 | 2.2 | 0.9 | 1.4 | 1.4 | 2.3 | 1.8 |
| | $(\Delta f/f) \cdot NA \cdot (\lambda/\Delta\lambda)$ ($\Delta\lambda$=+10 nm) | | -0.07 | -0.09 | -0.05 | -0.05 | -0.08 | -0.04 | -0.06 |
| | $P/\lambda$ | (Light source side) | 11.4 | 23.0 | 32.3 | 33.8 | 7.7 | 7.4 | 45.0 |
| | | (Optical information recording medium side) | - | 23.0 | 32.3 | 32.1 | - | 36.3 | 46.8 |

(continued)

| | Structure | One-group one-element | One-group one-element | Two-group two-element | Two-group two-element | One-group one-element | One-group one-element | Two-group two-element |
|---|---|---|---|---|---|---|---|---|
| Objective lens | $\lambda$(nm) | 405 | 405 | 405 | 405 | 405 | 405 | 405 |
| | NA | 0.85 | 0.85 | 0.85 | 0.85 | 0.85 | 0.85 | 0.85 |
| | f(mm) | 1.765 | 1.765 | 1.765 | 1.765 | 2.2 | 2.2 | 1.765 |
| | $\|\Delta fB(\mu m)\|$ ($\Delta\lambda$=+10 nm) | 2.9 | 2.9 | 2.6 | 2.6 | 3.6 | 3.6 | 2.6 |
| | | | | | | | | |
| Compound system | $\|\Delta fB(\mu m)\|$ | 0.8 | 1.6 | 0.2 | 0.2 | 0.8 | 0.2 | 0.7 |
| | $\|\Delta fB \cdot NA_{OBJ}^2\|(\mu m)$ ($\Delta\lambda$=+10 nm) | 0.6 | 1.2 | 0.1 | 0.1 | 0.6 | 0.1 | 0.5 |

A diffractive surface provided on a coupling lens in each example is expressed by a basic aspheric surface showing a macroscopic form where a diffraction relief is removed and by an optical path difference function. The optical path difference function is assumed to express an optical path difference added by a diffraction surface for the diffracted light with a standard wavelength, and each time the value of the optical path difference function is changed by mλ (m represents the number of order for diffraction), a diffractive ring-shaped zone is provided. The optical path difference function is expressed by the aforesaid expression Numeral 2.

Further, an aspheric surface in a coupling lens and an objective lens in each example is expressed by the following expression (B);

$$x = (h^2/r) \ / \ \{1 + \sqrt{(1 - (1 + k) \ (h^2/r^2))}\} + A_4h^4 + A_6h^6$$

$$+ \ \cdots$$

wherein, $A_4$, $A_6$, $\cdots$ represent an aspheric surface coefficient, k represents the constant of the cone, r represents a paraxial radius of curvature, and r, d and n represent respectively a radius of curvature, a surface distance and a refractive index.

(Example 21)

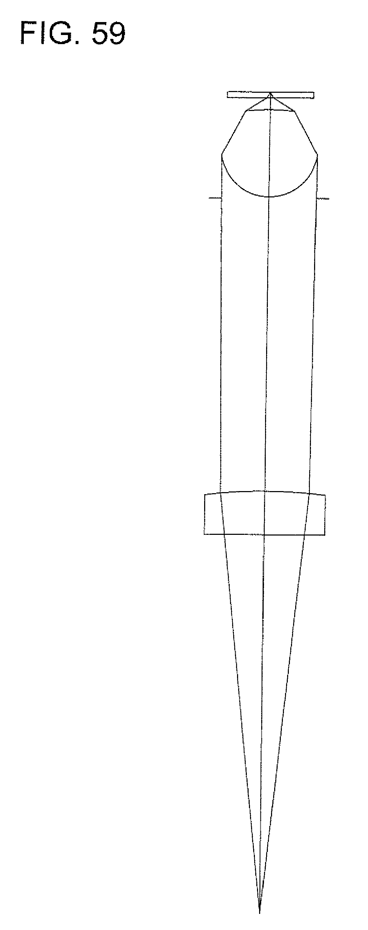

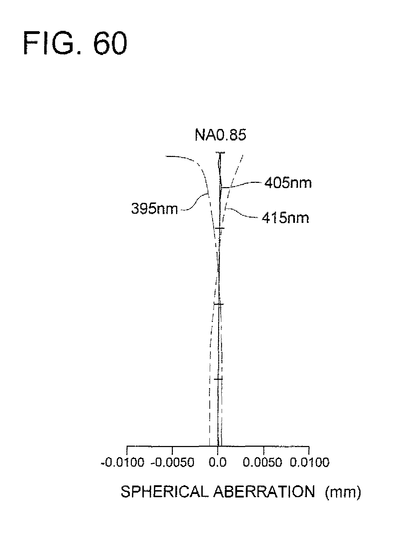

In the present example, a violet semiconductor laser with a generated wavelength of 405 nm is used as a light source, and a lens which has the structure of 1 element in 1 group and has a numerical aperture of 0.85 is used as an objective lens. By making a surface of a coupling lens closer to a light source to be a diffractive surface, axial chromatic aberration generated on the objective lens is corrected. Further, by making a surface of the coupling lens closer to an optical information recording medium to be an aspheric surface, aberration of the coupling lens was finely corrected. Incidentally, the diffractive surface coefficients in the lens data are determined such that the first ordered diffracted ray has a maximum light amount among diffracted rays generated at the diffractive surface. Further, the coupling lens of the present example is made of an olefin resin. Table 33 shows the lens data of Example 21, Fig. 59 shows an optical path diagram of Example 1, and Fig. 60 shows a spherical aberration diagram.

Table 33

Example 21

| Surface No. | Remarks | r (mm) | d (mm) | Nλ | νd |
|---|---|---|---|---|---|
| 0 | Light source | | 11.620 | | |
| 1 | Coupling lens | -55.623 | 1.200 | 1.52491 | 56.5 |
| 2 | | -13.188 | 9.000 | | |
| 3 | Diaphragm | ∞ | 0.000 | | |
| 4 | Objective lens | 1.194 | 2.650 | 1.52491 | 56.5 |
| 5 | | -0.975 | 0.355 | | |
| 6 | Transparent base board | ∞ | 0.100 | 1.61949 | 30.0 |
| 7 | | ∞ | | | |

Aspherical coefficient

| Surface No. | 2 | 4 | 5 |
|---|---|---|---|
| κ | 2.1216E+00 | -6.8335E-01 | -2.1704E+01 |
| A4 | 1.2133E-03 | 1.6203E-02 | 3.0802E-01 |
| A6 | 6.4151E-05 | 1.5491E-03 | -6.3950E-01 |
| A8 | -2.5180E-05 | 2.8929E-03 | 5.8536E-01 |
| A10 | 4.1328E-06 | -3.6771E-04 | -2.1562E-01 |
| A12 | | -3.5822E-04 | -2.5227E-04 |
| A14 | | 1.4842E-04 | |
| A16 | | 1.1960E-04 | |
| A18 | | -3.0230E-05 | |
| A20 | | -1.1052E-05 | |

Diffractive surface coefficient

| Surface No. | 1 |
|---|---|
| b2 | -2.7188E-02 |
| b4 | -6.2483E-04 |

(Example 22)

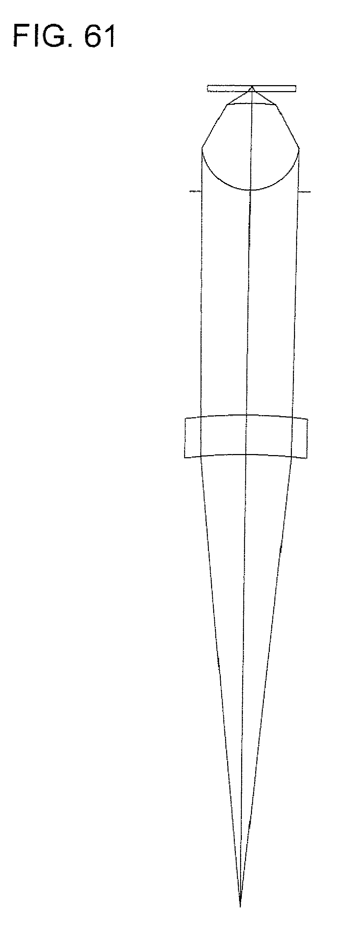

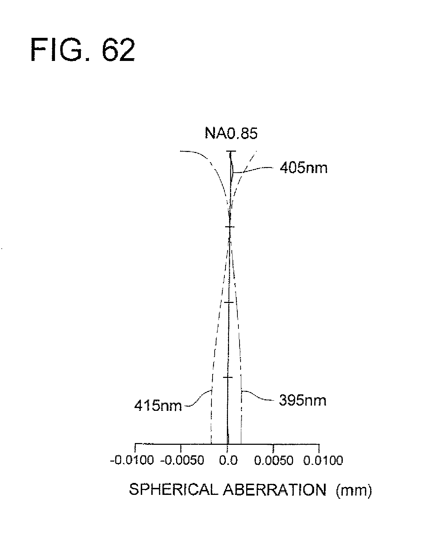

In the present example, a violet semiconductor laser with a generated wavelength of 405 nm is used as a light source, and a lens which has the structure of 1 element in 1 group and has a numerical aperture of 0.85 is used as an objective lens. By making both surfaces of a coupling lens to be a diffractive surface, axial chromatic aberration generated on the objective lens is corrected. Further, an interval of diffractive ring-shaped zones for each surface is secured to be as large as 10 μm by allocating diffractive power to two surfaces, which makes a coupling lens to be one having less decline of diffraction efficiency caused by manufacturing errors. Incidentally, the diffractive surface coefficients in the lens data are determined such that the first ordered diffracted ray has a maximum light amount among diffracted rays generated at the diffractive surface. Further, the coupling lens of the present example is made of an olefin resin. Table 34 shows the lens data of Example 22, Fig. 61 shows an optical path diagram of Example 22, and Fig. 62 shows a spherical aberration diagram.

Table 34

Example 22

| Surface No. | Remarks | r(mm) | d(mm) | Nλ | vd |
|---|---|---|---|---|---|
| 0 | Light source | | 18.154 | | |
| 1 | Coupling lens | -38.058 | 1.200 | 1.52491 | 56.5 |
| 2 | | -60.391 | 9.000 | | |
| 3 | Diaphragm | ∞ | 0.000 | | |
| 4 | Objective lens | 1.194 | 2.650 | 1.52491 | 56.5 |
| 5 | | -0.975 | 0.355 | | |
| 6 | Transparent base board | ∞ | 0.100 | 1.61949 | 30.0 |
| 7 | | ∞ | | | |

Aspherical coefficient

| Surface No. | 4 | 5 |
|---|---|---|
| κ | -6.8335E-01 | -2.1704E+01 |
| A4 | 1.6203E-02 | 3.0802E-01 |
| A6 | 1.5491E-03 | -6.3950E-01 |
| A8 | 2.8929E-03 | 5.8536E-01 |
| A10 | -3.6771E-04 | -2.1562E-01 |
| A12 | -3.5822E-04 | -2.5227E-04 |
| A14 | 1.4842E-04 | |
| A16 | 1.1960E-04 | |
| A18 | -3.0230E-05 | |
| A20 | -1.1052E-05 | |

Diffractive surface coefficient

| Surface No. | 1 | 2 |
|---|---|---|
| b2 | -1.3614E-02 | -1.5816E-02 |
| b4 | -3.0799E-04 | 2.7372E-04 |

In the objective lens used in Examples 21 and 22, under-corrected spherical aberration is generated on the short wavelength side and over-corrected spherical aberration is generated on the long wavelength side. In Examples 21 and 22, a spherical aberration curve for the standard wavelength (405 nm) and spherical aberration curves on the long wavelength side and the short wavelength side are made to cross each other, by making axial chromatic aberration of the total light-converging optical system to be overcorrected axial chromatic aberration with an effect of the diffractive structure of the coupling lens. Due to this, it is possible to control a movement of the best image plane in the case of shifting of a wavelength of the light source to be small, and to realize an optical system wherein deterioration of wave front aberration caused by a mode hop phenomenon of the light source and by high frequency superposition is small.

Further, when a spherical aberration curve for the standard wavelength (405 nm) and spherical aberration curves on the long wavelength side and the short wavelength side are made to cross each other, by making the axial chromatic aberration of the total light-converging optical system to be overcorrected without correcting the spherical aberration curves on the long wavelength side and the short wavelength side as stated above, rather than by correcting spherical aberration curves on the long wavelength side and the short wavelength side generated on the objective lens by the effect of the diffraction so that they may almost be in parallel with the spherical aberration curve for the standard wavelength, diffractive power can be less and an interval of ring-shaped zones can be made large.

Further, change amount $\Delta$CA for axial chromatic aberration is shown by a width of bottom movement for each of spherical aberration curves for 405 nm and 415 nm in spherical aberration diagrams in Fig 60 and Fig. 62, and the direction of the movement is one in which the back focus turns out to be shorter. Incidentally, change amount $\Delta$SA of spherical aberration for marginal light is shown by the width between an upper end of the spherical aberration curve for 405 nm and an upper end of the spherical aberration curve for 415 nm under the condition that the spherical aberration curve for 405 nm is moved to be in parallel until its bottom overlaps with a bottom of the spherical aberration curve for 415 nm.

(Example 23)

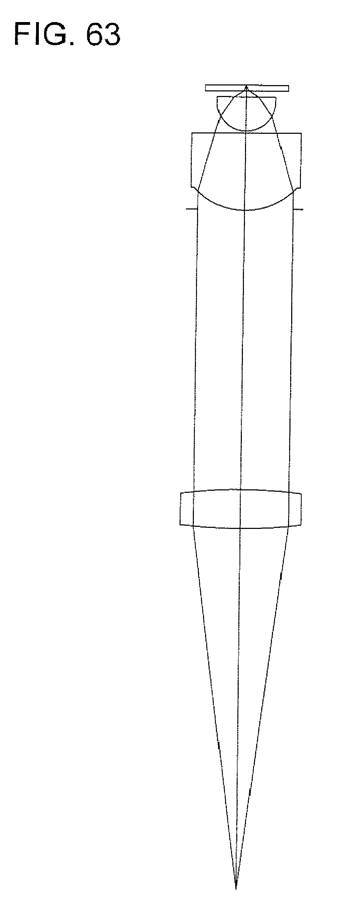

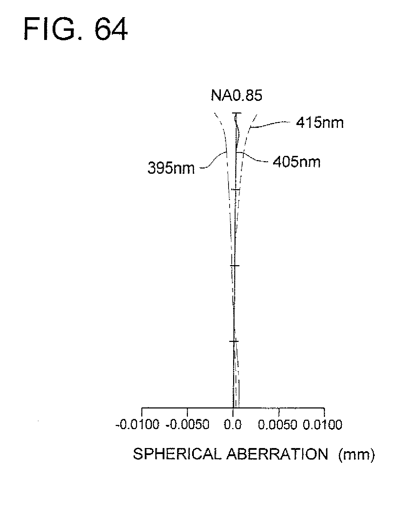

In the present example, a violet semiconductor laser with a generated wavelength of 405 nm is used as a light source, and a lens which has the structure of 1 element in 1 group and has a numerical aperture of 0.85 is used as an objective lens. By making both surfaces of a coupling lens to be a diffractive surface, axial chromatic aberration generated on the objective lens is corrected. Further, by making a surface of the coupling lens closer to an optical information recording medium to be an aspheric surface, aberration of the coupling lens was finely corrected. Further, an interval of diffractive ring-shaped zones for each surface is secured to be as large as 13 $\mu$m by allocating diffractive power to two surfaces, which makes a coupling lens to be one having less decline of diffraction efficiency caused by manufacturing errors. Incidentally, the diffractive surface coefficients in the lens data are determined such that the first ordered diffracted ray has a maximum light amount among diffracted rays generated at the diffractive surface. Further, the coupling lens of the present example is made of an olefin resin. Table 35 shows lens data of Example 23, Fig. 63 shows an optical path diagram of Example 23, and Fig. 64 shows a spherical aberration diagram.

Table 35

Example 23

| Surface No. | Remarks | r (mm) | d (mm) | Nλ | vd |
|---|---|---|---|---|---|
| 0 | Light source | | 11.450 | | |
| 1 | Coupling lens | 86.357 | 1.200 | 1.52491 | 56.5 |
| 2 | | -14.695 | 9.000 | | |
| 3 | Diaphragm | ∞ | 0.000 | | |
| 4 | Objective lens | 2.074 | 2.400 | 1.52491 | 56.5 |
| 5 | | 8.053 | 0.100 | | |
| 6 | | 0.863 | 1.100 | 1.52491 | 56.5 |
| 7 | | ∞ | 0.240 | | |
| 8 | Transparent base board | ∞ | 0.100 | 1.61949 | 30.0 |
| 9 | | ∞ | | | |

Aspherical coefficient

| Surface No. | 2 | 4 | 5 | 6 |
|---|---|---|---|---|
| κ | 1.5853E+00 | -1.2955E-01 | 4.7554E+01 | -7.1425E-01 |
| A4 | -2.7899E-04 | -3.7832E-03 | 1.3641E-02 | 1.3647E-01 |
| A6 | -8.4813E-05 | 5.1667E-04 | -2.9201E-02 | -5.3414E-02 |
| A8 | 4.3748E-05 | -1.1780E-03 | -9.3339E-03 | 3.0269E-01 |
| A10 | | -2.0628E-04 | 3.3011E-02 | -1.6898E-01 |
| A12 | | 2.5941E-05 | -2.2626E-02 | |
| A14 | | 1.4917E-04 | | |
| A16 | | -5.1578E-05 | | |

Diffractive surface coefficient

| Surface No. | 1 | 2 |
|---|---|---|
| b2 | -9.9080E-03 | -1.1457E-02 |
| b4 | -5.8306E-05 | 3.2838E-04 |

(Example 24)

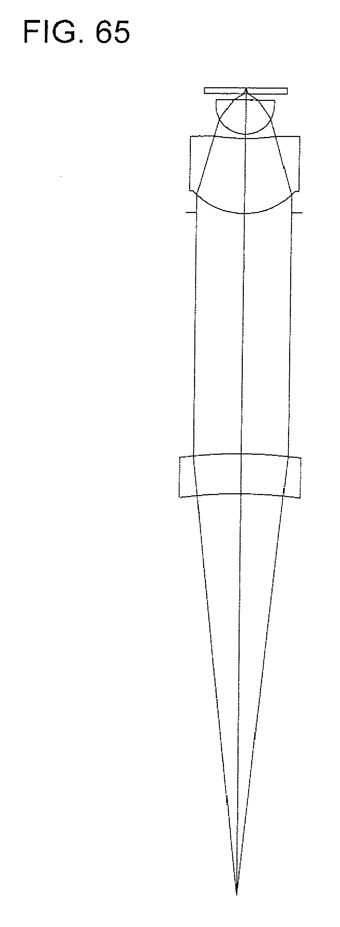

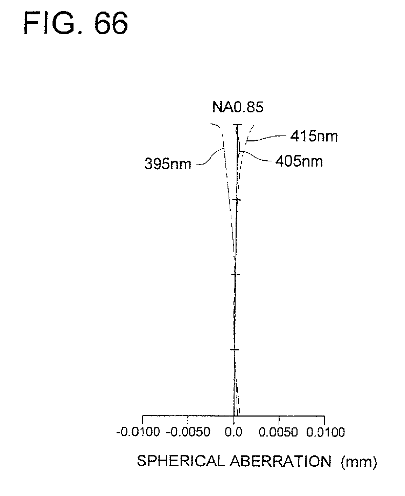

In the present example, a violet semiconductor laser with a generated wavelength of 405 nm is used as a light source, and a lens which has the structure of 1 element in 1 group and has a numerical aperture of 0.85 is used as an objective lens. By making both surfaces of a coupling lens to be a diffractive surface, axial chromatic aberration generated on the objective lens is corrected. Further, an interval of diffractive ring-shaped zones for each surface is secured to be as large as 13 μm by allocating diffractive power to two surfaces, which makes a coupling lens to be one having less decline of diffraction efficiency caused by manufacturing errors. Incidentally, the diffractive surface coefficients in the lens data are determined such that the first ordered diffracted ray has a maximum light amount among diffracted rays generated at the diffractive surface. Further, the coupling lens of the present example is made of an olefin resin. Table 36 shows lens data of Example 24, Fig. 65 shows an optical path diagram of Example 24, and Fig. 66 shows a spherical aberration diagram.

Table 36

Example 24

| Surface No. | Remarks | r (mm) | d (mm) | Nλ | νd |
|---|---|---|---|---|---|
| 0 | Light source | | 18.270 | | |
| 1 | Coupling lens | ∞ | 1.200 | 1.52491 | 56.5 |
| 2 | | -35.070 | 9.000 | | |
| 3 | Diaphragm | ∞ | 0.000 | | |
| 4 | Objective lens | 2.074 | 2.400 | 1.52491 | 56.5 |
| 5 | | 8.053 | 0.100 | | |
| 6 | | 0.863 | 1.100 | 1.52491 | 56.5 |
| 7 | | ∞ | 0.240 | | |
| 8 | Transparent base board | ∞ | 0.100 | 1.61949 | 30.0 |
| 9 | | ∞ | | | |

Aspherical coefficient

| Surface No. | 4 | 5 | 6 |
|---|---|---|---|
| κ | -1.2955E-01 | 4.7554E+01 | -7.1425E-01 |
| A4 | -3.7832E-03 | 1.3641E-02 | 1.3647E-01 |
| A6 | 5.1667E-04 | -2.9201E-02 | -5.3414E-02 |
| A8 | -1.1780E-03 | -9.3339E-03 | 3.0269E-01 |
| A10 | -2.0628E-04 | 3.3011E-02 | -1.6898E-01 |
| A12 | 2.5941E-05 | -2.2626E-02 | |
| A14 | 1.4917E-04 | | |
| A16 | -5.1578E-05 | | |

Diffractive surface coefficient

| Surface No. | 1 | 2 |
|---|---|---|
| b2 | -1.0612E-02 | -8.8437E-03 |
| b4 | 2.1532E-04 | -1.7758E-04 |

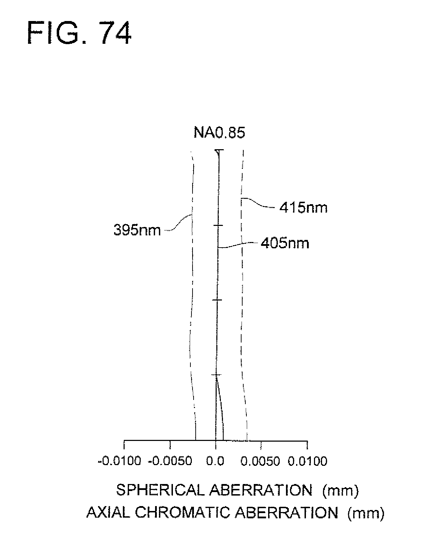

There will be explained an example of an objective lens in which an axial chromatic aberration is corrected by a coupling lens of Example 23, Example 24 and Example 27 mentioned later. Fig. 74 is a graph showing a spherical aberration and an axial chromatic aberration of the concerned objective lens (focal length: 1.76 mm, image side numerical aperture: 0.85) at the wavelength of 405±10 nm. As can be seen from the graph, when the wavelength is changed toward the long wavelength side by 10 nm, the paraxial focal point is changed toward the over side by about 2.5 μm. The objective lens has a lens configuration comprising two lenses in two lens groups and is made of an olefin resin whose Abbe constant is 56.5 for d-line. The lens data of the objective lens are listed in Table 35.

(Example 25)

In the present example, a violet semiconductor laser with a generated wavelength of 405 nm is used as a light source, and a lens which has the structure of 1 element in 1 group and has a numerical aperture of 0.85 is used as an objective lens. By making a surface of a coupling lens closer to a light source to be a diffractive surface on which a diffractive structure in a shape of a ring-shaped zone is formed, axial chromatic aberration generated on the objective lens is corrected.

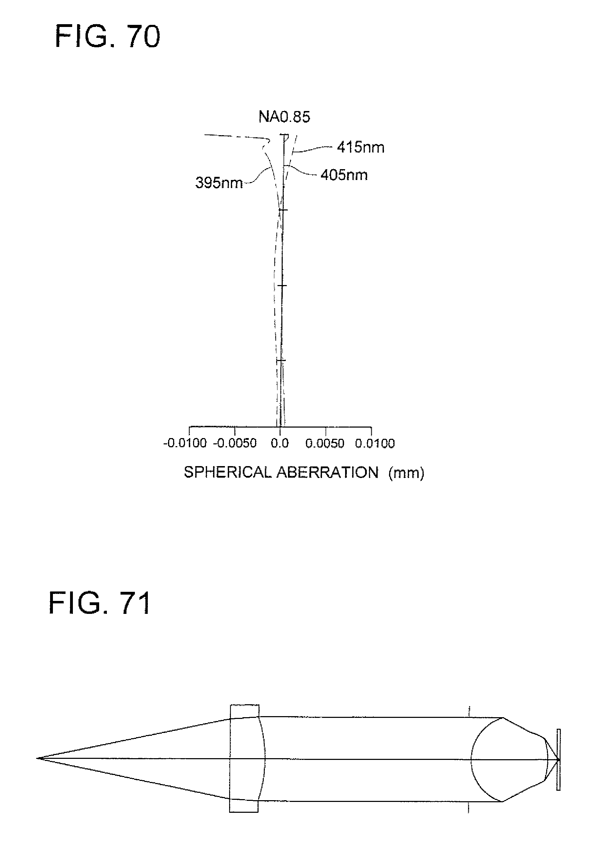

Since the minimum interval of the ring-shaped zones of this diffractive structure is 3.1 $\mu$m (P/$\lambda$ = 7.7) within an effective diameter, undesired light is generated greatly in the coupling lens molded with the mold processed by SPDT (Single Point Diamond Tool), and sufficient diffraction efficiency is not obtained. Therefore, highly accurate process of mold by means of an electron beam drafting method was made possible by making the basic surface which is to be provided with a diffractive structure to be a flat surface. In addition, aberration of a coupling lens was finely corrected by making the surface of the coupling lens on the optical information recording medium side to be an aspherical refracting interface. Incidentally, the diffractive surface coefficients in the lens data are determined such that the first ordered diffracted ray has a maximum light amount among diffracted rays generated at the diffractive surface. Further, the coupling lens of the present example is made of an olefin resin. Table 37 shows the lens data in Example 25. Fig. 69 shows an optical path diagram of Example 25, and Fig. 70 shows a spherical aberration diagram.

Table 37

Example 25

| Surface No. | Remarks | r (mm) | d (mm) | N$\lambda$ | $\nu$d |
|---|---|---|---|---|---|
| 0 | Light source | | 8.783 | | |
| 1 | Coupling lens | ∞ | 1.500 | 1.52491 | 56.5 |
| 2 | | -8.519 | 9.000 | | |
| 3 | Diaphragm | ∞ | 0.000 | | |
| 4 | Objective lens | 1.495 | 3.420 | 1.52491 | 56.5 |
| 5 | | -1.079 | 0.405 | | |
| 6 | Transparent base board | ∞ | 0.100 | 1.61949 | 30.0 |
| 7 | | ∞ | | | |

Aspherical coefficient

| Surface No. | 2 | 4 | 5 |
|---|---|---|---|
| $\kappa$ | 3.6689E+00 | -6.8372E-01 | -2.0952E+01 |
| A4 | 2.9240E-03 | 8.2060E-03 | 2.1572E-01 |
| A6 | 6.8648E-05 | 8.9539E-04 | -3.4704E-01 |
| A8 | 1.6249E-06 | 2.0706E-04 | 2.5518E-01 |
| A10 | | 1.5169E-04 | -7.5892E-02 |
| A12 | | -5.5781E-05 | 5.5326E-05 |
| A14 | | -6.4051E-07 | |
| A16 | | 6.3232E-06 | |
| A18 | | -5.5076E-07 | |
| A20 | | -1.8235E-07 | |

Diffractive surface coefficient

| Surface No. | 1 |
|---|---|
| b2 | -2.4130E-02 |
| b4 | -1.2410E-03 |

(Example 26)

In the present example, a violet semiconductor laser with a generated wavelength of 405 nm is used as a light source, and a lens which has the structure of 1 element in 1 group and has a numerical aperture of 0.85 is used as an objective lens. By making a surface of a coupling lens closer to a light source to be a diffractive surface on which a diffractive structure in a shape of ring-shaped zones is formed, axial chromatic aberration generated on the objective lens and spherical aberration caused by a change of wavelength generated by the light source were corrected.

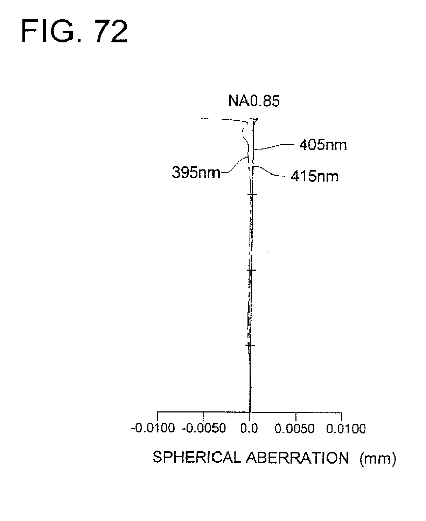

Since the minimum interval of the ring-shaped zones of this diffractive structure is 3.0 $\mu$m ($P_1/\lambda$ = 7.4) within an effective diameter, highly accurate process of mold by means of an electron beam drafting method was made possible by making the basic surface which is to be provided with a diffractive structure to be a flat surface. In addition, aberration of a coupling lens and aberration of the total optical system were finely corrected by making the surface of the coupling lens on the optical information recording medium side to be a diffractive surface where a diffractive structure in a shape of a ring-shaped zones is formed on an aspheric surface. Since the minimum interval of the ring-shaped zones of the ring-shaped zonal diffractive structure formed on the surface on the optical information recording medium side is 14.7 $\mu$m ($P_2/\lambda$ = 36.3) within an effective diameter, sufficient diffraction efficiency can be obtained through process of mold by means of SPDT. Incidentally, the diffractive surface coefficients in the lens data are determined such that the first ordered diffracted ray has a maximum light amount among diffracted rays generated at the diffractive surface. Further, the coupling lens of the present example is made of an olefin resin. Table 38 shows lens data in Example 62. Fig. 71 shows an optical path diagram of Example 26, and Fig. 72 shows a spherical aberration diagram.

Table 38

Example 26

| Surface No. | Remarks | r (mm) | d (mm) | Nλ | νd |
|---|---|---|---|---|---|
| 0 | Light source | | 8.747 | | |
| 1 | Coupling lens | ∞ | 1.500 | 1.52491 | 56.5 |
| 2 | | -8.023 | 9.000 | | |
| 3 | Diaphragm | ∞ | 0.000 | | |
| 4 | Objective lens | 1.495 | 3.420 | 1.52491 | 56.5 |
| 5 | | -1.079 | 0.405 | | |
| 6 | Transparent base board | ∞ | 0.100 | 1.61949 | 30.0 |
| 7 | | ∞ | | | |

Aspherical coefficient

| Surface No. | 2 | 4 | 5 |
|---|---|---|---|
| κ | 0.0000E+00 | -6.8372E-01 | -2.0952E+01 |
| A4 | 2.2042E-04 | 8.2060E-03 | 2.1572E-01 |
| A6 | 8.8017E-04 | 8.9539E-04 | -3.4704E-01 |
| A8 | | 2.0706E-04 | 2.5518E-01 |
| A10 | | 1.5169E-04 | -7.5892E-02 |
| A12 | | -5.5781E-05 | 5.5326E-05 |
| A14 | | -6.4051E-07 | |
| A16 | | 6.3232E-06 | |
| A18 | | -5.5076E-07 | |
| A20 | | -1.8235E-07 | |

Diffractive surface coefficient

| Surface No. | 1 | 2 |
|---|---|---|
| b2 | -2.2191E-02 | 0.0000E+00 |
| b4 | -3.8575E-03 | 3.0446E-03 |
| b6 | 9.2001E-04 | -1.0088E-03 |
| b8 | -1.4435E-04 | 6.2191E-05 |
| b10 | 6.5823E-06 | |

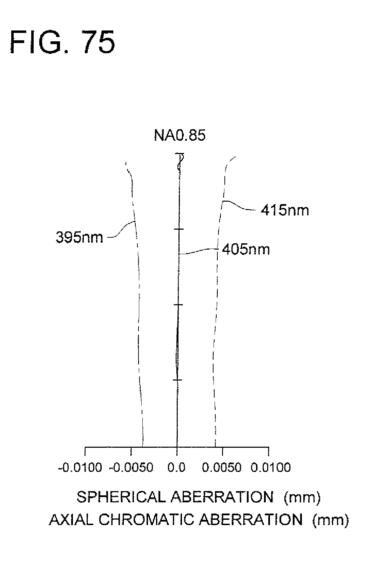

There will be explained an example of the objective lens wherein axial chromatic aberration is corrected by the coupling lenses in Examples 25 and 26. Fig. 75 is a graph showing spherical aberration and axial chromatic aberration of the aforesaid objective lens (focal length 2.20 mm, image-side numerical aperture 0.85) at wavelength 405 ± 10 nm, and it shows that a paraxial focal point is changed to the "over" side by about 4 μm when a wavelength is changed to the longer side by 10 nm. This objective lens is a single lens that has the structure of 1 element in 1 group, and it is made of olefin type resin whose Abbe number for d line is 56.5. Lens data of this objective lens are described in Table 37.

Incidentally, the coefficient of diffractive surface in the lens data was determined so that the 1st ordered diffracted ray among diffracted rays generated by the diffractive surface may have the largest amount. Further, the coupling lens in the present example was formed by olefin type resin.

(Example 27)

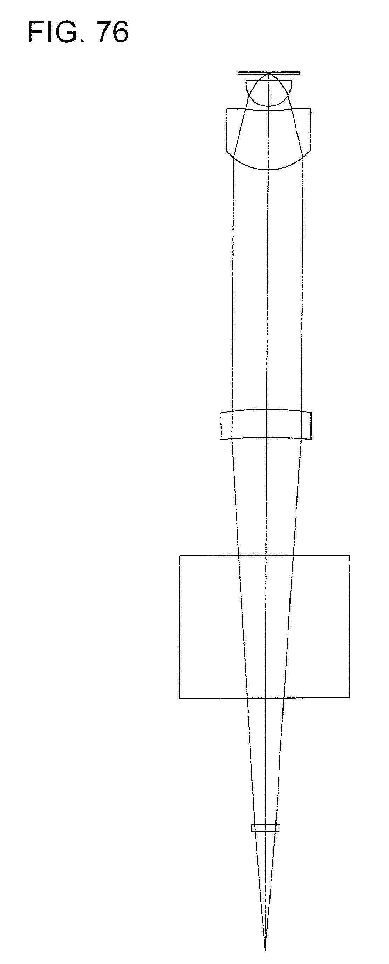

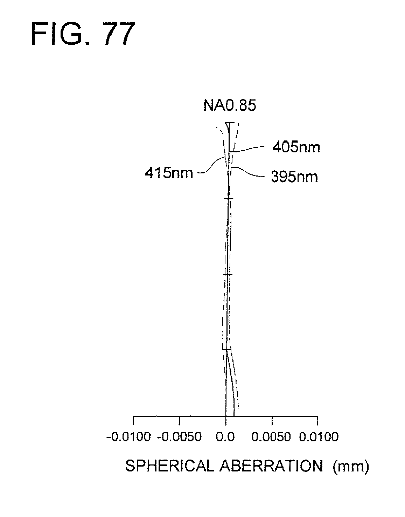

In the present example, a light source with a short wavelength of 405 nm is used, and an objective lens that has the structure of 2 elements in 2 groups and has numerical aperture of 0.85 is used. Axial chromatic aberration generated on the objective lens was corrected by making both surfaces of a coupling lens to be a diffractive surface. Since the diffractive power necessary for correcting chromatic aberration was allocated to two surfaces, and the coefficient of the diffractive surface was determined so that the 2nd ordered diffracted ray may have the largest amount of diffracted rays, there was attained a coupling lens wherein an interval of diffractive ring-shaped zones on each surface is secured to be as great as about 20 $\mu$m, and a decline of diffraction efficiency caused by manufacturing errors is less. In addition, since the surface on the light source side was a diffractive surface, it was possible to select an angle of incidence of marginal ray in incident light freely in the course of lens design, resulting in achievement of a highly efficient coupling lens wherein spherical aberration and coma aberration are corrected finely in detail. Incidentally, the coupling lens in the present example was made of olefin type resin. Lens data in Example 27 are shown in Table 39. Fig. 76 shows an optical path diagram in Example 27, and Fig 77 shows a spherical aberration diagram. The spherical aberration diagram shows that a focal point hardly moves independently of a wavelength.

Table 39

Example 27

| Surface No. | Remarks | r (mm) | d (mm) | Nλ | νd |
|---|---|---|---|---|---|
| 0 | Light source | | 5.178 | | |
| 1 | Transparent base board | ∞ | 0.250 | 1.53020 | 64.1 |
| 2 | | ∞ | 5.000 | | |
| 3 | Polarized beam splitter | ∞ | 6.000 | 1.53020 | 64.1 |
| 4 | | ∞ | 5.000 | | |
| 5 | Coupling lens | -27.220 | 1.200 | 1.52491 | 56.5 |
| 6 | | -20.660 | 10.000 | | |
| 7 | Diaphragm | ∞ | 0.000 | | |
| 8 | Objective lens | 2.074 | 2.400 | 1.52491 | 56.5 |
| 9 | | 8.053 | 0.100 | | |
| 10 | | 0.863 | 1.100 | 1.52491 | 56.5 |
| 11 | | ∞ | 0.240 | | |
| 12 | Transparent base board | ∞ | 0.100 | 1.61949 | 30.0 |
| 13 | | ∞ | | | |

Aspherical coefficient

| Surface No. | 8 | 9 | 10 |
|---|---|---|---|
| κ | -1.2955E-01 | 4.7554E+01 | -7.1425E-01 |
| A4 | -3.7832E-03 | 1.3641E-02 | 1.3647E-01 |
| A6 | 5.1667E-04 | -2.9201E-02 | -5.3414E-02 |
| A8 | -1.1780E-03 | -9.3339E-03 | 3.0269E-01 |
| A10 | -2.0628E-04 | 3.3011E-02 | -1.6898E-01 |
| A12 | 2.5941E-05 | -2.2626E-02 | |
| A14 | 1.4917E-04 | | |
| A16 | -5.1578E-05 | | |

Diffractive surface coefficient

| Surface No. | 5 | 6 |
|---|---|---|
| b2 | -5.6394E-03 | -5.3607E-03 |
| b4 | -4.2871E-06 | -5.2774E-07 |

Since all of the optical elements of the light-converging optical systems in Examples 21 - 27 are made of plastic materials, they are light in weight and can be produced at low cost and on a mass production basis. In Tables 33 - 39, E (or e) is used for expression of the exponent for 10, and an example thereof is E - 02 (= $10^{-2}$).

The invention makes it possible to provide a coupling lens, a light-converging optical system, an optical pickup device, a recording apparatus and a reproducing apparatus which can correct effectively axial chromatic aberration caused on an objective lens by a mode hop phenomenon of a laser light source. Further, a diffractive optical element which is an optical element that has a diffractive structure and is used for an optical pickup device, and has a form on which a diffractive structure can be formed by an electron beam drafting method can be provided, and an optical pickup device equipped with the diffractive optical element can be provided.

**Claims**

1. An objective lens for use in an optical pickup device which includes light sources each having a different wavelength and the objective lens that converges the light flux emitted from the light source on an image recording plane through a transparent base board of an optical information recording medium, wherein the optical pickup device conducts recording and/or reproducing information for plural types of optical information recording media, comprising:

   a ring-shaped diffractive surface on at least one surface thereof,

   wherein the objective lens is a single lens and at least one surface of the objective lens is an aspheric surface, wherein when a thickness of transparent base boards of optional two optical information recording media among the plural types of the optical information recording media are represented respectively by t1 and t2 (t1 $\leqq$ t2), when a wavelength for conducting recording or reproducing of information for the optical information recording medium having the transparent base board with thickness t1 is represented by $\lambda$1, and a wavelength for conducting recording or reproducing information for the optical information recording medium having the transparent base board with thickness t2 is represented by $\lambda$2 ($\lambda$1 < $\lambda$2), and

   when an image side numerical aperture necessary for recording on or reproducing from the optical information recording medium having the transparent base board with thickness t1 with a light flux with wavelength $\lambda$1 is represented by NA1, and a numerical aperture on the image side necessary for recording on or reproducing from the optical information recording medium having the transparent base board with thickness t2 with a light flux with wavelength $\lambda$2 is represented by NA2 (NA1 $\geqq$ NA2),

   the objective lens converges a light flux for a combination of the wavelength $\lambda$1, the transparent base board thickness t1 and the numerical aperture on the image side NA1 so that a wave front aberration of the light flux is 0.07 $\lambda$1rms or less and converges a light flux for a combination of the wavelength $\lambda$2, the transparent base board thickness t2 and the numerical aperture on the image side NA2 so that a wave front aberration of the light flux is 0.07 $\lambda$2rms or less, and

   wherein the following conditional formula is satisfied:

$$NA1 \geqq 0.7$$

2. The objective lens of claim 1 wherein each of both surfaces of the objective lens is an aspheric surface.

3. The objective lens of claim 1 wherein the following conditional formula is satisfied:

$$0.5 \leqq (f/vd) \cdot fD \leqq 10.0$$

   where fD represents a focal length (mm) of only a diffractive structure defined by $fD = 1/\Sigma (-2 \cdot ni \cdot b_{2i})$, when an optical path difference added to a transmitted wavefront by a ring-shaped diffractive zone formed on an $i^{th}$ surface is expressed by an optical path difference function defined by $\Phi_{bi} = ni - (b_{2i} \cdot hi^2 + b_{4i} \cdot hi^4 + b_{6i} \cdot hi^6 + ...)$ (here, ni represents the diffraction order of a diffracted ray having the maximum light amount among diffracted rays generated at the ring-shaped diffractive zone formed on the $i^{th}$ surface, hi represents a height (mm) from an optical axis, and $b_{2i}$, $b_{4i}$, $b_{6i}$, ... represent respectively $2^{nd}$ order, $4^{th}$ order, $6^{th}$ order,... optical path difference function coefficients (called also diffractive surface coefficient)), and

   f represents a focal length (mm) at $\lambda$1 of the total objective lens system wherein refractive power and diffractive power of the diffractive structure are combined, and

   vd represents Abbe constant of d line for a material of the objective lens.

4. The objective lens of claim 3, wherein the following conditional formula is satisfied.

$$vd \geqq 55.0$$

5. The objective lens of claim 3, wherein chromatic aberration of the objective lens satisfies the following conditional

formula;

$$\left| \Delta fBi \cdot (NAi)^2 \right| \leqq 0.25 \ \mu m \ (i = 1 \ and \ 2)$$

where $\Delta fBi$ represents a change ($\mu$m) of a paraxial focal point of the objective lens when a wavelength of the light source having the wavelength $\lambda i$ varies by +1 nm.

**6.** The objective lens of claim 1, wherein the following conditional formula is satisfied.

$$-25.0 \leqq b_{2i}/\lambda 1 \leqq 0.0$$

where $\lambda 1$ represents a wavelength (mm) at the short wavelength side among the wavelengths, and $b_{2i}$ represents the 2nd order optical path difference function coefficient when an optical path difference added to a transmitted wavefront by a ring-shaped diffractive zone formed on an i$^{th}$ surface is expressed by an optical path difference function defined by $\Phi_{bi} = ni \cdot (b_{2i} \cdot hi^2 + b_{4i} \cdot hi^4 + b_{6i} \cdot hi^6 + ...)$ (here, ni represents the diffraction order of a diffracted ray having the maximum light amount among diffracted rays generated at the ring-shaped diffractive zone formed on the i$^{th}$ surface, hi represents a height (mm) from an optical axis, and $b_{2i}$, $b_{4i}$, $b_{6i}$, ... represent respectively 2nd order, 4th order, 6th order,... optical path difference function (called also diffractive surface coefficient) .

**7.** The objective lens of claim .1, wherein the following conditional formula is satisfied;

$$\lambda 1 \leqq 500 \ nm$$

**8.** The objective lens of claim 1, wherein the light flux with wavelength $\lambda 2$ is converged for the optical information recording medium having the transparent base board thickness t2 within the NA1 under the state that the wave front aberration is 0.07 $\lambda 2$ rms or more.

**9.** The objective lens of claim 1, wherein the following conditional formula is satisfied;

$$0.4 \leqq \left| (Ph/Pf) - 2 \right| \leqq 10.0 \qquad\qquad (36)$$

where Pf represents a pitch (mm) of ring-shaped diffractive zones at a necessary image side numerical aperture for recording on and/or reproducing from an optical information recording medium, and
Ph represents a pitch (mm) of ring-shaped diffractive zones at an image side numerical aperture being half of the necessary image side numerical aperture.

**10.** The objective lens of claim 1, wherein the objective lens is made of a plastic material.

**11.** The objective lens of claim 1, wherein the following conditional formulas are satisfied;

$$t1 \leqq 0.6 \ mm$$

$$t2 \geqq 0.6 \ mm$$

$$\lambda 1 \leqq 500 \text{ nm}$$

$$600 \text{ nm} \leqq \lambda 2 \leqq 800 \text{ nm}$$

$$NA1 \geqq 0.7$$

$$NA2 \leqq 0.65$$

**12.** The objective lens of claim 1, wherein the objective lens is made of a material whose saturation coefficient of water absorption is 0.5% or less.

**13.** The objective lens of claim 1, wherein the objective lens is made of a material whose internal transmittance at a thickness of 3 mm in the area of wavelength used is 85% or more.

**14.** The objective lens of claim 1, wherein when SA1 represents $3^{rd}$ order spherical aberration component and SA2 represents the sum of $5^{th}$ order, $7^{th}$ order and $9^{th}$ order spherical aberration components among spherical aberrations of the objective lens, the following conditional formula is satisfied:

$$|SA1/SA2| > 1.0$$

where SA1 represents $3^{rd}$ order spherical aberration component in the case of developing the aberration function into Zernike's polynomial formula, and
SA2 represents a square root of the square sum of $5^{th}$ order, $7^{th}$ order and $9^{th}$ order spherical aberration components in the case of developing the aberration function into Zernike's polynomial formula.

# FIG. 1

# FIG. 2

NA0.85

405nm

395nm

415nm

-0.0100   -0.0050    0.0    0.0050  0.0100

SPHERICAL ABERRATION (mm)

FIG. 3

# FIG. 4

NA0.85

405nm

395nm          415nm

-0.0100   -0.0050    0.0    0.0050   0.0100

SPHERICAL ABERRATION (mm)

FIG. 5

FIG. 6

# FIG. 7

SPHERICAL ABERRATION (mm)

# FIG. 8

NA0.86

NA0.65

665nm

655nm

645nm

-0.0100  -0.0050   0.0   0.0050  0.0100

SPHERICAL ABERRATION (mm)

# FIG. 9

# FIG. 10

# FIG. 11

NA0.85

405nm

395nm

415nm

-0.0100   -0.0050    0.0    0.0050  0.0100

SPHERICAL ABERRATION (mm)

# FIG. 12

NA0.89

NA0.65

665nm

655nm

645nm

-0.010  -0.005   0.0    0.005   0.010

SPHERICAL ABERRATION (mm)

# FIG. 13

## FIG. 14

## FIG. 15

NA0.85

405nm

395nm

415nm

-0.0100 -0.0050 0.0 0.0050 0.0100

SPHERICAL ABERRATION (mm)

# FIG. 16

NA0.86

NA0.65

665nm

645nm

655nm

-0.0100  -0.0050  0.0  0.0050  0.0100

SPHERICAL ABERRATION (mm)

# FIG. 17

# FIG. 18

# FIG. 19

NA0.85

405nm

415nm

395nm

-0.0100   -0.0050   0.0   0.0050   0.0100

SPHERICAL ABERRATION  (mm)

# FIG. 20

NA0.86

NA0.65

645nm

665nm

655nm

-0.010  -0.005    0.0    0.005   0.010

SPHERICAL ABERRATION  (mm)

# FIG. 21

# FIG. 22

# FIG. 23

NA0.85

405nm

395nm

415nm

-0.0100  -0.0050   0.0   0.0050 0.0100

SPHERICAL ABERRATION (mm)

# FIG. 24

NA0.85

405nm

415nm

395nm

-0.0100  -0.0050    0.0    0.0050  0.0100

SPHERICAL ABERRATION  (mm)

# FIG. 25

# FIG. 26

NA0.85

405nm

395nm     415nm

-0.0100  -0.0050   0.0    0.0050  0.0100

SPHERICAL ABERRATION (mm)

# FIG. 27

# FIG. 28

# FIG. 29

NA0.85

395nm — 405nm

415nm

-0.0100  -0.0050   0.0   0.0050   0.0100

SPHERICAL ABERRATION  (mm)

# FIG. 30

NA0.83

NA0.65

665nm — 645nm

655nm

-0.010  -0.005   0.0   0.005   0.010

SPHERICAL ABERRATION  (mm)

# FIG. 31

# FIG. 32

# FIG. 33

FIG. 34

FIG. 35

# FIG. 36

SPHERICAL ABERRATION (mm)

ASTIGMATISM (mm)

FIG. 37

# FIG. 38

NA0.80

395nm — | 405nm

415nm

-5.0E-3 -2.5E-3 0.0 2.5E-3 5.0E-3
SPHERICAL ABERRATION (mm)

0.5°

-8.0E-4 -4.0E-4 0.0 4.0E-4 8.0E-4
ASTIGMATISM (mm)

FIG. 39

# FIG. 40

NA0.85

655nm

645nm

665nm

-0.0050 -0.0025 0.0 0.0025 0.0050

SPHERICAL ABERRATION (mm)

0.5°

-0.0050 -0.0025 0.0 0.0025 0.0500

ASTIGMATISM (mm)

FIG. 41

# FIG. 42

FIG. 43

EP 1 968 056 A2

# FIG. 44

NA0.85

415nm —
— 395nm
— 405nm

-0.0050  -0.0025  0.0  0.0025  0.0050

SPHERICAL ABERRATION (mm)

0.5°

-0.002  -0.001  0.0  0.001  0.002

ASTIGMATISM (mm)

124

FIG. 45

FIG. 46

NA0.85

405nm

415nm — — 395nm

-0.0050 -0.0025 0.0 0.0025 0.0050
SPHERICAL ABERRATION (mm)

0.5°

-0.002 -0.001 0.0 0.001 0.002
ASTIGMATISM (mm)

FIG. 47

# FIG. 48

NA0.85

405nm

395nm

415nm

SPHERICAL ABERRATION (mm)

-5.0E-3  -2.5E-3   0.0   2.5E-3  5.0E-3

0.5°

ASTIGMATISM (mm)

-8.0E-4  -4.0E-4   0.0   4.0E-4  8.0E-4

## FIG. 49

# FIG. 50

NA0.88

405nm

395nm

415nm

-0.0050 -0.0025 0.0 0.0025 0.0050

SPHERICAL ABERRATION (mm)

0.5°

-0.002 -0.001 0.0 0.001 0.002

ASTIGMATISM (mm)

FIG. 51

# FIG. 52

NA0.85

405nm

415nm

395nm

-0.0050  -0.0025   0.0   0.0025 0.0050

SPHERICAL ABERRATION (mm)

0.5°

-0.002  -0.001   0.0   0.001   0.002

ASTIGMATISM (mm)

FIG. 53

# FIG. 54

NA0.90

405nm

415nm

395nm

0.5°

-0.0050  -0.0025   0.0   0.0025 0.0050

SPHERICAL ABERRATION (mm)

-0.002  -0.001   0.0   0.001  0.002

ASTIGMATISM (mm)

FIG. 55

# FIG. 56

NA0.85

395nm

405nm

415nm

-0.0050  -0.0025    0.0    0.0025  0.0050
SPHERICAL ABERRATION  (mm)

0.5°

-0.0050  -0.0025    0.0    0.0025  0.0500
ASTIGMATISM  (mm)

# FIG. 57

# FIG. 58

FIG. 59

# FIG. 60

NA0.85

395nm — 405nm — 415nm

-0.0100  -0.0050  0.0  0.0050  0.0100

SPHERICAL ABERRATION (mm)

FIG. 61

# FIG. 62

NA0.85

405nm

415nm

395nm

-0.0100  -0.0050   0.0    0.0050  0.0100

SPHERICAL ABERRATION (mm)

FIG. 63

# FIG. 64

NA0.85

415nm

395nm

405nm

-0.0100 -0.0050 0.0 0.0050 0.0100

SPHERICAL ABERRATION (mm)

FIG. 65

# FIG. 66

NA0.85

415nm

395nm

405nm

-0.0100  -0.0050  0.0  0.0050  0.0100

SPHERICAL ABERRATION  (mm)

# FIG. 67 (b)　　FIG. 67 (a)

S2

A →

FIG. 67 (c)

S1

# FIG. 68

# FIG. 69

# FIG. 70

NA0.85

415nm
405nm
395nm

-0.0100  -0.0050  0.0  0.0050  0.0100

SPHERICAL ABERRATION (mm)

# FIG. 71

# FIG. 72

NA0.85

405nm

395nm 415nm

-0.0100 -0.0050 0.0 0.0050 0.0100

SPHERICAL ABERRATION (mm)

# FIG. 73

NA0.85

415nm

395nm

405nm

-0.0100  -0.0050   0.0   0.0050  0.0100

SPHERICAL ABERRATION  (mm)
AXIAL CHROMATIC ABERRATION  (mm)

# FIG. 74

NA0.85

415nm

395nm

405nm

-0.0100  -0.0050  0.0  0.0050  0.0100

SPHERICAL ABERRATION  (mm)
AXIAL CHROMATIC ABERRATION  (mm)

# FIG. 75

NA0.85

395nm

415nm

405nm

-0.0100  -0.0050   0.0   0.0050  0.0100

SPHERICAL ABERRATION  (mm)
AXIAL CHROMATIC ABERRATION  (mm)

FIG. 76

# FIG. 77

NA0.85

415nm — | — 405nm

— 395nm

-0.0100  -0.0050  0.0  0.0050  0.0100

SPHERICAL ABERRATION  (mm)